# EUROPEAN PATENT APPLICATION

(11) **EP 4 772 988 A1**
(43) Date of publication of application: **08.07.2026**
(21) Application number: 23962789.6
(22) Date of filing: 29.12.2023
(51) Int. Cl.: G06F 3/04883, G06F 3/0488, G10L 21/06

(54) **HANDWRITTEN CONTENT PROCESSING METHOD AND RELATED DEVICE**

(71) Applicant: Boe Technology Group Co., Ltd., Beijing 100015 (CN); Beijing BOE Technology Development Co., Ltd., Daxing District Beijing 100176 (CN)
(72) Inventor: ZHANG, Yangyang, Beijing 100176 (CN); ZHAO, Lifei, Beijing 100176 (CN); MA, Huiguang, Beijing 100176 (CN); LI, Yingjie, Beijing 100176 (CN); ZHANG, Honglei, Beijing 100176 (CN); QIAO, Yong, Beijing 100176 (CN)
(74) Representative: Cohausz & Florack
(86) International application number: PCT/CN2023/143283
(87) International publication number: WO 2025/138114

(57) **Abstract**

Embodiments of the present application provide a handwritten content processing method and a related device, capable of simplifying the processing of an unexpected, temporary, or additional handwriting request while recording under one handwriting requirement, thereby improving the convenience of recording. The handwritten content processing method may comprise: displaying a target handwriting interface; on the basis of a first handwriting input received by the target handwriting interface, displaying, in the target handwriting interface, first handwritten content corresponding to the first handwriting input; on the basis of a first target operation, determining second handwritten content displayed in the target handwriting interface; clearing the second handwritten content on the target handwriting interface, and retaining at least a part of the first handwritten content; and storing the second handwritten content to a target file.

## Description

### Technical Field

The present application relates to the field of electronic technology and discloses a handwriting content processing method and related apparatus.

### Background

With the development of handwriting the electronic apparatus, users' demand for handwriting the electronic apparatus is constantly increasing. In the scenario of using handwriting the electronic apparatus, when a user has a handwriting requirement that is not related to the current handwriting requirement, the current handwriting interface is terminated and a new handwriting interface is launched to record the new handwriting requirement.

For example, when a user needs to additionally record handwriting requirements such as a phone number or an address in the scenario of recording handwriting requirements such as meeting minutes, the user needs to close a handwriting interface for recording the meeting minutes and open a new handwriting interface to record the phone number or the address. After recording the phone number or the address, the user needs to close the handwriting interface and reopen the handwriting interface for recording the meeting minutes. This process is cumbersome and less convenient.

### Summary

Embodiments of the present application provide a handwriting content processing method and a related device, which can simplify a process of recording an unexpected, temporary, or additional another handwriting requirement in a process of recording a handwriting requirement, and improve the convenience of recording.

In a first aspect, embodiments of the present application provide a handwriting content processing method, which can be applied to an electronic apparatus. The electronic apparatus can be an electronic whiteboard, a business handwriting book, an electronic ink screen, a tablet computer, a personal computer, a laptop computer, a computer, a netbook, a vehicle-mounted computer, a smartphone, a smart wearable device, and the like. Of course, the electronic apparatus can also be a variety of portable devices, in-vehicle terminal devices, personal digital assistants, smart home devices (e.g., smart TVs, etc.), and other smart devices.

The handwriting content processing method can include: displaying a target handwriting interface; displaying a first handwriting content corresponding to a first handwriting input in the target handwriting interface according to the first handwriting input received by the target handwriting interface; determining a second handwriting content displayed in the target handwriting interface according to a first target operation; erasing the second handwriting content and retaining at least a part of the first handwriting content in the target handwriting interface; storing the second handwriting content to a target file.

In embodiments of the present application, the electronic apparatus displays a target handwriting interface primarily for recording or serving a first handwriting requirement. When an unexpected, temporary or additional second handwriting requirement occurs, the target handwriting interface can temporarily record or service the second handwriting requirement. The target handwriting interface can display a handwriting content corresponding to a handwriting input received by the target handwriting interface. Here, the electronic apparatus can determine a second handwriting content from the handwriting content displayed in the target handwriting interface according to a first target operation, the second handwriting content can be understood to be a handwriting content corresponding to the second handwriting requirement. After determining the second handwriting content, the electronic apparatus clears the second handwriting content from the target handwriting interface, maintains that the target handwriting interface can continue to serve the first handwriting requirement. Moreover, the electronic apparatus stores the second handwriting content to facilitate management of the second handwriting content. Such a design can reuse the target handwriting interface that serves the first handwriting requirement and temporarily serve the second handwriting requirement, which does not require switching the handwriting interface, and has a more concise processing to enhance the convenience of recording.

In embodiments of the present application, the electronic apparatus executes processes or operations of determining the second handwriting content displayed in the target handwriting interface according to the first target operation, erasing the second handwriting content in the target handwriting interface, and storing the second handwriting content to the target file, to achieve an effect or a function, where the effect or function can be called an "inspiration pen" function, a "temporary pen" function, an "inspiration note" function, or a "temporary recording" function.

In one possible design, the first target operation includes any one of the following:
a first preset operation for a physical structure of the electronic apparatus;
a second preset operation for at least one virtual key displayed on the electronic apparatus;
a third preset operation for a touch display device of the electronic apparatus;
a preset voice control operation;
a preset gesture control operation;
an operation of sending an indication signal to the electronic apparatus.

In one possible design, before determining the second handwriting content displayed in the target handwriting interface according to the first target operation, the method further includes:
after detecting the first target operation, displaying a handwriting content corresponding to any handwriting input in the target handwriting interface according to the any handwriting input received by the target handwriting interface.

Through this design, a handwriting input operation corresponding to the second handwriting content can occur after the first target operation. Or, users can trigger the first target operation when making the first handwriting requirement, and then input a handwriting operation of the second handwriting content in the target handwriting interface corresponding to the first handwriting requirement. This design does not require users to switch to a new handwriting interface, but instead allows for temporary recording of the second handwriting requirement in the target handwriting interface of the first handwriting requirement.

In one possible design, the determining the second handwriting content displayed in the target handwriting interface according to the first target operation, includes:
determining a handwriting content corresponding to a second handwriting input received by the target handwriting interface during a first target period as the second handwriting content, where a starting time of the first target period is a time when the first target operation is detected. Optionally, a duration of the first target period is a preset first duration. For example, the electronic apparatus can determine a handwriting input during the first target period corresponding to an input time of a handwriting content as the second handwriting content. Or, the target handwriting interface can receive a portion of the second handwriting content during the first target period. The electronic apparatus can determine the second handwriting content according to a handwriting input received during the first target period in the target handwriting interface and a handwriting input that is continuous with the handwriting input.

In one possible design, the determining the second handwriting content displayed in the target handwriting interface according to the first target operation, includes:
based on a detected second target operation, determining a handwriting content corresponding to a second handwriting input received by the target handwriting interface during a second target period as the second handwriting content. A starting time of the second target period is a time when the first target operation is detected, and an ending time of the second target period is a time when the second target operation is detected.

In one possible design, the determining the second handwriting content displayed in the target handwriting interface according to the first target operation can adopt at least one of the following methods.

Method 1: based on a detected third target operation, determining a selection range corresponding to the third target operation, and determining a content in the selection range as the second handwriting content.

Method 2: based on an input time corresponding to each handwriting content displayed in the target handwriting interface, determining the second handwriting content, where the second handwriting content is a handwriting content with the latest input time among all handwriting contents.

Method 3: based on an input time and a location corresponding to each handwriting content displayed in the target handwriting interface, determining the second handwriting content displayed in the target handwriting interface.

In some scenarios, after the user starts the target handwriting interface, the target handwriting interface displays a handwriting content, where the handwriting content can be the handwriting content corresponding to the user's previous handwriting input when starting the target handwriting interface. After starting the target handwriting interface, the user can perform the first handwriting input through the target handwriting interface, and the target handwriting interface can display the first handwriting content corresponding to the first handwriting input. It can be seen that the target handwriting interface can display the first handwriting content, as well as the handwriting content corresponding to the handwriting input made when starting the target handwriting interface before this time.

Optionally, in Method 2 and Method 3, each handwriting content displayed in the target handwriting interface can be the handwriting content corresponding to the handwriting input made after starting the target handwriting interface this time, that is, the first handwriting content. Alternatively, the handwriting content displayed in the target handwriting interface can include the handwriting content corresponding to the handwriting input made through the target handwriting interface before this time and the first handwriting content.

Optionally, in Method 1, the content within the selection range can be any handwriting content displayed in the target handwriting interface. Alternatively, the content within the selection range can be from the first handwriting content.

In one possible design, the determining the second handwriting content displayed in the target handwriting interface based on the input time and location corresponding to each handwriting content displayed in the target handwriting interface, includes:
based on the input time corresponding to each handwriting content displayed in the target handwriting interface, performing a line break processing on the handwriting content in the target handwriting interface, and determining a handwriting content in a target line as the second handwriting content, where the target line includes a handwriting content with the latest input time among all handwriting contents; or,
determining blocks where each handwriting content displayed in the target handwriting interface is located, and determining the handwriting content in a target block as the second handwriting content, where the target block includes a handwriting content with the latest input time among all handwriting contents.

In one possible design, after determining the second handwriting content displayed in the target handwriting interface, the method further includes:
generating reminder information for reminding a user whether the second handwriting content needs to be adjusted; or,
generating content confirmation information for informing a user to confirm whether the second handwriting content is correct.

Through this design, after determining the second handwriting content, the electronic apparatus can generate reminder information to remind the user to check or view whether the second handwriting content is correct. The reminder information can be displayed and/or written in text format. The reminder information can include reminder text information. The reminder text information is used to remind the user to confirm whether the second handwriting content is accurate, or to remind the user whether to modify the second handwriting content. For example, the reminder text information can be "whether to modify temporary content", "whether to modify inspiration content", "whether to modify".

The reminder information can include display information. The display information is used to indicate the second handwriting content. For example, the display information can include indicator graphics, and the content in the indicator graphics is the second handwriting content, or the content at one side of the indicator graphics is the second handwriting content. For example, the display information can include highlighted areas, where the content in the highlighted areas is the second handwriting content. Optionally, users can adjust the indicator graphics or highlighted areas through an adjustment operation to modify the second handwriting content. The electronic apparatus can respond to the detected adjustment operation and reconfirm the second handwriting content. When reconfirming the second handwriting content, the electronic apparatus can reconfirm the second handwriting content based on the adjusted indicator graphics and highlighted areas. Alternatively, the handwriting content corresponding to the adjustment operation can be a closed or semi-closed shape, and the closed or semi-closed shape can be used as a new selection range, and the electronic apparatus can reconfirm the content corresponding to the new selection range as the second handwriting content.

The content confirmation information can be used to indicate the second handwriting content. The content confirmation information can also include controls provided to users for performing one or more of a confirmation operation, modification operation, and save operation. In some scenarios, the content confirmation information can include the aforementioned reminder text information and display information.

In one possible design, the target handwriting interface displays the second handwriting content using the following method:
adding a target layer and displaying the target layer, where the target layer is used for displaying the second handwriting content or a recognition result of the second handwriting content.

In one possible design, before adding the target layer, the method further includes:
creating a first layer, where the first layer is used for displaying the first handwriting content, and the first layer is a layer different from the target layer.

In some scenarios, the handwriting input corresponding to the second handwriting content can occur after the first target operation. When the electronic apparatus displays the target handwriting interface, the first layer can be created to display the first handwriting content. The electronic apparatus can add, create, or add target layers in response to detecting the first target operation, to display the second handwriting content. It can be seen that the first layer and the target layer are not the same layer, in other words, the first handwriting content and the second handwriting content are displayed on different layers.

In one possible design, the adding the target layer, includes:
in response to the first target operation, adding the target layer.

In one possible design, the erasing the second handwriting content in the target handwriting interface, includes:
removing the target layer.

In one possible design, the erasing the second handwriting content in the target handwriting interface, includes:
clearing data of the second handwriting content from a screen reporting points data file, where the screen reporting points data file is used for displaying a handwriting content in the target handwriting interface.

In one possible design, the storing the second handwriting content to the target file, includes:
storing content data corresponding to the second handwriting content to the target file.

Optionally, the content data includes images of the second handwriting content, or the content data includes reporting points data corresponding to the second handwriting content, or the content data includes recognition results corresponding to the second handwriting content.

In one possible design, the method further includes: storing at least a part of the first handwriting content in a first file, where the first file is a file different from the target file.

Through this design, the target file is used to store the second handwriting content, instead of using a file that stores the handwriting content of the first handwriting requirement to store the second handwriting content, which facilitates the management of the second handwriting content and can play an independent role in managing the handwriting content of the second handwriting requirement, reducing the management operational cost of the handwriting content for users.

In some scenarios, the electronic apparatus can display a target handwriting interface in response to an operation for opening a first application. The electronic apparatus can display a save prompt window in response to an operation for closing the first application, where the save prompt window is used to prompt the user whether to save the handwriting content of the target handwriting interface.

In some application scenarios, the electronic apparatus can display the target handwriting interface in response to an operation for opening a first file. The electronic apparatus can display a save prompt window in response to an operation for closing the first file , where the save prompt window is used to prompt the user whether to save the handwriting content of the target handwriting interface.

In one possible design, the storing the content data corresponding to the second handwriting content to the target file, includes:
determining a target content classification of the second handwriting content;
determining a target file corresponding to the target content classification based on a correspondence between content classifications and files;
storing the content data corresponding to the second handwriting content to the target file.

Through this design, the handwriting content of the second handwriting requirement can be classified and managed, which can reduce the management cost of users for the second handwriting requirement and improve user experience.

In some scenarios, the target file can be implemented as a folder. One folder can save multiple files. For example, a phone number in an address book folder can be implemented as a file. For another example, a to-do list in a to-do list folder can be implemented as a file.

In some scenarios, the target file can be implemented as a file. The file includes contents stored in a predetermined order. When displaying multiple contents in a file, there are no content overlap. Or, multiple contents do not overlap in their displayed locations.

In one possible design, the determining the target content classification of the second handwriting content, includes:
obtaining a recognition result of the second handwriting content, and determining the target content classification based on the recognition result of the second handwriting content; and/or,
based on the first target operation being an operation for a target virtual key among a plurality of virtual keys displayed in the electronic apparatus, determining a content classification corresponding to the target virtual key as the target content classification according to a preset correspondence between multiple content classifications and virtual keys.

In one possible design, the determining the target content classification based on the recognition result, includes:
based on a correspondence between content classification information and content classification, determining a content classification corresponding to target content classification information in the recognition result of the second handwriting content as the target content classification;
where the content classification information includes at least one of the following information: a classification field or a graphic.

In one possible design, in the correspondence between content classification information and content classification, any content classification information is user-customized or system-default configured.

Through this design, users can customize and configure content classification information, which can reduce the management cost of the handwriting content for the second handwriting requirement and improve the user experience of using electronic apparatuses.

In one possible design, the determining the target content classification of the second handwriting content, includes:
based on a detected fourth target operation, determining a third handwriting content corresponding to the fourth target operation, where the fourth target operation is associated with the first target operation; based on the recognition result of the third handwriting content, determining the target content classification corresponding to the second handwriting content.

Optionally, the electronic apparatus can determine the second handwriting content based on a recognition result of the third handwriting content.

In some scenarios, the fourth target operation can be a handwriting input operation, and the handwriting content corresponding to the handwriting input operation is referred to as the third handwriting content. The fourth target operation is associated with the first target operation, for example, the fourth target operation is associated in the time dimension with the first target operation. Optionally, the time for the fourth target operation can be earlier than the time for the first target operation. Alternatively, the time for the first target operation can be earlier than the time for the fourth target operation. Alternatively, the time for the fourth target operation can be within a third target period, where a starting time of the third target period is the time for the first target operation, and a duration of the third target period can be preset.

The electronic apparatus can recognize the third handwriting content through methods such as text recognition, graphic recognition, line type recognition, line length recognition, etc. The electronic apparatus can determine the second handwriting content and the target content classification of the second handwriting content based on the recognition result of the third handwriting content.

In one possible design, any content classification is configured by the user.

In one possible design, the storing the second handwriting content to the target file, includes:
while erasing the second handwriting content in the target handwriting interface, storing the second handwriting content to the target file.

In a second aspect, the present application further provides a handwriting content processing method, which is applied to an electronic apparatus and includes:
displaying a lock screen interface of the electronic apparatus;
based on a third handwriting input received by the lock screen interface, displaying a fourth handwriting content corresponding to the third handwriting input in the lock screen interface;
when a preset processing condition is met, clearing the fourth handwriting content from the lock screen interface and storing the fourth handwriting content to a target file.

In embodiments of the present application, users can perform temporary handwriting requirements through a lock screen interface of the electronic apparatus, without the need for users to unlock or open handwriting applications. For sudden or temporary handwriting requirements, this method can reduce user operating costs and provide a good user experience.

In one possible design, the based on the third handwriting input received by the lock screen interface, displaying the fourth handwriting content corresponding to the third handwriting input in the lock screen interface, includes:
in response to a fifth target operation, displaying the fourth handwriting content corresponding to the third handwriting input in the lock screen interface according to the third handwriting input received by the lock screen interface;
where the fifth target operation includes any one of the following:
   a preset operation for a physical structure of the electronic apparatus;
   a preset operation for at least one virtual key displayed on the electronic apparatus;
   a preset operation for a touch display device of the electronic apparatus;
   a preset voice control operation;
   a preset gesture control operation;
   an operation of sending an indication signal to the electronic apparatus.

In one possible design, the second handwriting content is displayed in the lock screen interface by:
adding a target layer and displaying the target layer, where the target layer is used for displaying the fourth handwriting content or display a recognition result of the fourth handwriting content.

In one possible design, before adding the target layer, the method further includes:
creating a second layer, where the second layer is used for displaying a preset content of the lock screen interface, and the first layer is a layer different from the target layer.

In one possible design, the adding the target layer, includes:
adding the target layer in response to the fifth target operation.

In one possible design, the clearing the fourth handwriting content from the lock screen interface, includes:
removing the target layer.

In one possible design, the clearing the fourth handwriting content from the lock screen interface, includes:
clearing data of the fourth handwriting content from a screen reporting points data file, where the screen reporting points data file is used for displaying a handwriting content in the target handwriting interface.

In one possible design, the storing the fourth handwriting content to the target file, includes:
when a preset storage condition is met, storing the fourth handwriting content to the target file.

In one possible design, the storing the fourth handwriting content to the target file, includes:
storing content data corresponding to the fourth handwriting content to the target file.

Optionally, the content data includes images of the fourth handwriting content, or the content data includes reporting points data corresponding to the fourth handwriting content, or the content data includes recognition results corresponding to the fourth handwriting content.

In one possible design, the storing the content data corresponding to the fourth handwriting content to the target file, includes:
determining a target content classification of the fourth handwriting content;
determining a target file corresponding to the target content classification based on a correspondence between content classifications and files;
storing the fourth handwriting content to the target file.

In one possible design, the determining the target content classification of the fourth handwriting content, includes:
obtaining a recognition result of the fourth handwriting content, and determining the target content classification based on the recognition result of the fourth handwriting content; or
based on the fifth target operation being an operation for a target virtual key among a plurality of virtual keys displayed on the electronic apparatus, determining a content classification corresponding to the target virtual key as the target content classification according to a preset correspondence between multiple content classifications and virtual keys.

In one possible design, the determining the target content classification based on the recognition result, includes:
based on a correspondence between content classification information and content classifications, determining a content classification corresponding to target content classification information in the recognition result of the fourth handwriting content as the target content classification;
where the content classification information includes at least one of the following information: a classification field or a graphic.

In one possible design, in the correspondence between the content classification information and the content classifications, any content classification information is user-customized or system-default configured.

In one possible design, the determining the target content classification of the fourth handwriting content, includes:
based on a detected sixth target operation, determining a fifth handwriting content corresponding to the sixth target operation, where the sixth target operation is associated with the fifth target operation;
based on a recognition result of the fifth handwriting content, determining the target content classification corresponding to the fourth handwriting content.

In some scenarios, the electronic apparatus can determine the fourth handwriting content based on a recognition result of the fifth handwriting content.

In one possible design, any content classification is customized by a user.

In one possible design, the storing the fourth handwriting content to the target file, includes:
while clearing the fourth handwriting content from the lock screen interface, storing the fourth handwriting content to the target file.

In a third aspect, embodiments of the present application further provide a handwriting content processing method applied to an electronic apparatus, and the method includes:
displaying a target handwriting interface;
displaying a first handwriting content corresponding to a first handwriting input in the target handwriting interface according to the first handwriting input received by the target handwriting interface;
based on a preset target operation, collecting audio and storing the collected audio.

In a fourth aspect, embodiments of the present application further provides a handwriting content processing method applied to an electronic apparatus, and the method includes:
displaying a target handwriting interface;
displaying a first handwriting content corresponding to a first handwriting input in the target handwriting interface according to the first handwriting input received by the target handwriting interface;
determining a second handwriting content displayed in the target handwriting interface;
erasing the second handwriting content in the target handwriting interface and retaining at least a part of the first handwriting content;
storing the second handwriting content to a target file.

In a fifth aspect, embodiments of the present application further provides a handwriting content processing method applied to an electronic apparatus, and the method includes:
displaying a target handwriting interface, where the target handwriting interface is configured for receiving a handwriting input and displaying a handwriting content corresponding to the handwriting input in the target handwriting interface;
based on a first target operation, determining a second handwriting content displayed in the target handwriting interface, and storing the second handwriting content to a target file.

In a sixth aspect, embodiments of the present application further provides a handwriting content processing method applied to an electronic apparatus, and the method includes:
displaying a target handwriting interface, where the target handwriting interface is configured for receiving a handwriting input and displaying a handwriting content corresponding to the handwriting input in the target handwriting interface;
based on a first target operation, determining a content classification of a second handwriting content displayed in the target handwriting interface;
storing the second handwriting content to a target file according to the content classification of the second handwriting content.

In a seventh aspect, embodiments of the present application provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   determining a second handwriting content displayed in the target handwriting interface according to a first target operation;
   erasing the second handwriting content and retaining at least a part of the first handwriting content in the target handwriting interface;
   storing the second handwriting content to a target file.

In one possible design, the first target operation includes any one of the following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation;
an operation of sending an indication signal to the electronic apparatus.

In one possible design, the controller is specifically configured to execute:
determining a handwriting content corresponding to a second handwriting input received by the target handwriting interface during a first target period as the second handwriting content, where a starting time of the first target period is a time when the first target operation is detected. Optionally, a duration of the first target period is a preset first duration. For example, the electronic apparatus can determine a handwriting input during the first target period corresponding to an input time of a handwriting content as the second handwriting content. Or, the target handwriting interface can receive a portion of the second handwriting content during the first target period. The electronic apparatus can determine the second handwriting content according to a handwriting input received during the first target period in the target handwriting interface and a handwriting input that is continuous with the handwriting input.

In one possible design, the controller is specifically configured to execute:
based on a detected second target operation, determining a handwriting content corresponding to a second handwriting input received by the target handwriting interface during a second target period as the second handwriting content. A starting time of the second target period is a time when the first target operation is detected, and an ending time of the second target period is a time when the second target operation is detected.

In one possible design, the controller is specifically configured to execute:
based on a detected third target operation, determining a selection range corresponding to the third target operation, and determining a content in the selection range as the second handwriting content; or,
based on an input time corresponding to each handwriting content displayed in the target handwriting interface, determining the second handwriting content, where the second handwriting content is a handwriting content with the latest input time among all handwriting contents; or,
based on an input time and a location corresponding to each handwriting content displayed in the target handwriting interface, determining the second handwriting content displayed in the target handwriting interface.

In one possible design, the controller is specifically configured to execute:
based on the input time corresponding to each handwriting content displayed in the target handwriting interface, performing a line break processing on the handwriting content in the target handwriting interface, and determining a handwriting content in a target line as the second handwriting content, where the target line includes the handwriting content with the latest input time among all handwriting contents; or,
determining blocks where each handwriting content displayed in the target handwriting interface is located, and determining the handwriting content in a target block as the second handwriting content, where the target block includes the handwriting content with the latest input time among all handwriting contents.

In one possible design, the controller is further configured to execute:
after determining the second handwriting content displayed in the target handwriting interface, generating reminder information for reminding a user whether the second handwriting content needs to be adjusted; or,
generating content confirmation information for informing a user to confirm whether the second handwriting content is correct.

In one possible design, the controller is specifically configured to execute:
displaying the second handwriting content in the target handwriting interface using the following method:
adding a target layer and displaying the target layer, where the target layer is used for displaying the second handwriting content or a recognition result of the second handwriting content.

In one possible design, the controller is further configured to execute:
before adding the target layer, creating a first layer, where the first layer is used for displaying the first handwriting content, and the first layer is a layer different from the target layer.

In one possible design, the controller is specifically configured to execute:
in response to the first target operation, adding the target layer.

In one possible design, the controller is specifically configured to execute:
removing the target layer.

In one possible design, the erasing the second handwriting content in the target handwriting interface, includes:
clearing data of the second handwriting content from a screen reporting points data file, where the screen reporting points data file is used for displaying a handwriting content in the target handwriting interface.

In one possible design, the storing the second handwriting content to the target file includes:
storing content data corresponding to the second handwriting content to the target file.

Optionally, the content data includes images of the second handwriting content, or the content data includes reporting points data corresponding to the second handwriting content, or the content data includes recognition results corresponding to the second handwriting content.

In one possible design, the controller is further configured to execute:
storing at least a part of the first handwriting content in a first file, where the first file is a file different from the target file.

In one possible design, the controller is specifically configured to execute:
determining a target content classification of the second handwriting content;
determining a target file corresponding to the target content classification based on a correspondence between content classifications and files;
storing the content data corresponding to the second handwriting content to the target file.

In one possible design, the controller is specifically configured to execute:
obtaining a recognition result of the second handwriting content, and determining the target content classification based on the recognition result of the second handwriting content; and/or,
based on the first target operation being an operation for a target virtual key among a plurality of virtual keys displayed in the electronic apparatus, determining a content classification corresponding to the target virtual key as the target content classification according to a preset correspondence between multiple content classifications and virtual keys.

In one possible design, the controller is specifically configured to execute:
based on a correspondence between content classification information and content classification, determining a content classification corresponding to target content classification information in the recognition result of the second handwriting content as the target content classification;
where the content classification information includes at least one of the following information: a classification field or a graphic.

In one possible design, in the correspondence between content classification information and content classification, any content classification information is user-customized or system-default configured.

In one possible design, the controller is specifically configured to execute:
based on a detected fourth target operation, determining a third handwriting content corresponding to the fourth target operation, where the fourth target operation is associated with the first target operation;
based on the recognition result of the third handwriting content, determining the target content classification corresponding to the second handwriting content.

Optionally, the electronic apparatus can determine the second handwriting content based on a recognition result of the third handwriting content.

In one possible design, any content classification is configured by the user.

In one possible design, the controller is specifically configured to execute:
while erasing the second handwriting content in the target handwriting interface, storing the second handwriting content to the target file.

In an eighth aspect, embodiments of the present application provides an electronic apparatus, including:
a memory, configured for storing program instructions;
a controller, configured to call the program instructions stored in the memory to execute:
   displaying a lock screen interface of the electronic apparatus;
   based on a third handwriting input received by the lock screen interface, displaying a fourth handwriting content corresponding to the third handwriting input in the lock screen interface;
   when a preset processing condition is met, clearing the fourth handwriting content from the lock screen interface and storing the fourth handwriting content to a target file.

In one possible design, the controller is specifically configured to execute:
in response to a fifth target operation, displaying the fourth handwriting content corresponding to the third handwriting input in the lock screen interface according to the third handwriting input received by the lock screen interface;
where the fifth target operation includes any one of the following:
   a preset operation for a physical structure of the electronic apparatus;
   a preset operation for at least one virtual key displayed on the electronic apparatus;
   a preset operation for a touch display device of the electronic apparatus;
   a preset voice control operation;
   a preset gesture control operation;
   an operation of sending an indication signal to the electronic apparatus.

In one possible design, the controller is specifically configured to execute:
displaying the second handwriting content in the lock screen interface by:
adding a target layer and displaying the target layer, where the target layer is used for displaying the fourth handwriting content or display a recognition result of the fourth handwriting content.

In one possible design, the controller is specifically configured to execute:
before adding the target layer, creating a second layer, where the second layer is used for displaying a preset content of the lock screen interface, and the first layer is a layer different from the target layer.

In one possible design, the controller is specifically configured to execute:
adding the target layer in response to the fifth target operation.

In one possible design, the controller is specifically configured to execute:
removing the target layer.

In one possible design, the controller is specifically configured to execute:
clearing data of the fourth handwriting content from a screen reporting points data file, where the screen reporting points data file is used for displaying a handwriting content in the target handwriting interface.

In one possible design, the controller is specifically configured to execute:
when a preset storage condition is met, storing the fourth handwriting content to the target file.

In one possible design, the controller is specifically configured to execute:
storing content data corresponding to the fourth handwriting content to the target file.

Optionally, the content data includes images of the fourth handwriting content, or the content data includes reporting points data corresponding to the fourth handwriting content, or the content data includes recognition results corresponding to the fourth handwriting content.

In one possible design, the controller is specifically configured to execute:
determining a target content classification of the fourth handwriting content;
determining a target file corresponding to the target content classification based on a correspondence between content classifications and files;
storing the fourth handwriting content to the target file.

In one possible design, the controller is specifically configured to execute:
obtaining a recognition result of the fourth handwriting content, and determining the target content classification based on the recognition result of the fourth handwriting content; or,
based on the first target operation being an operation for a target virtual key among a plurality of virtual keys displayed on the electronic apparatus, determining a content classification corresponding to the target virtual key as the target content classification according to a preset correspondence between multiple content classifications and virtual keys.

In one possible design, the controller is specifically configured to execute:
based on a correspondence between content classification information and content classifications, determining a content classification corresponding to target content classification information in the recognition result of the fourth handwriting content as the target content classification;
where the content classification information includes at least one of the following information: a classification field or a graphic.

In one possible design, in the correspondence between the content classification information and the content classifications, any content classification information is user-customized or system-default configured.

In one possible design, the controller is specifically configured to execute:
based on a detected sixth target operation, determining a fifth handwriting content corresponding to the sixth target operation, where the sixth target operation is associated with the fifth target operation;
based on a recognition result of the fifth handwriting content, determining the target content classification corresponding to the fourth handwriting content.

In some scenarios, the electronic apparatus can determine the fourth handwriting content based on a recognition result of the fifth handwriting content.

In one possible design, any content classification is customized by a user.

In one possible design, the storing the fourth handwriting content to the target file, includes:
while clearing the fourth handwriting content from the lock screen interface, storing the fourth handwriting content to the target file.

In a ninth aspect, embodiments of the present application further provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   based on a preset target operation, collecting audio and storing the collected audio.

In a tenth aspect, embodiments of the present application further provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   determining a second handwriting content displayed in the target handwriting interface;
   erasing the second handwriting content in the target handwriting interface and retaining at least a part of the first handwriting content;
   storing the second handwriting content to a target file.

In an eleventh aspect, embodiments of the present application further provides an electronic apparatus, including:
a memory, configured for storing program instructions;
a controller, configured to call the program instructions stored in the memory to execute:
   displaying a target handwriting interface, where the target handwriting interface is configured for receiving a handwriting input and displaying a handwriting content corresponding to the handwriting input in the target handwriting interface;
   based on a first target operation, determining a second handwriting content displayed in the target handwriting interface, and storing the second handwriting content to a target file.

In a twelfth aspect, embodiments of the present application further provides an electronic apparatus, including:
a memory, configured for storing program instructions;
a controller, configured to call the program instructions stored in the memory to execute:
   displaying a target handwriting interface, where the target handwriting interface is configured for receiving a handwriting input and displaying a handwriting content corresponding to the handwriting input in the target handwriting interface;
   based on a first target operation, determining a content classification of a second handwriting content displayed in the target handwriting interface;
   storing the second handwriting content to a target file according to the content classification of the second handwriting content.

In a thirteenth aspect, embodiments of the present application provide an electronic apparatus, including one or more units for performing each step of the method provided in the first aspect. For example, the electronic apparatus can include a display unit and a processing unit. The display unit is used for displaying a user interface, and the processing unit is used to implement the method provided in the first aspect, the second aspect, the third aspect, the fourth aspect, or the fifth aspect.

In a fourteenth aspect, embodiments of the present application provide an electronic apparatus, including a display screen, at least one processor, and a memory. The at least one processor is coupled to the memory, and the at least one processor is used to read computer programs stored in the memory to execute the method provided in the first aspect, the second aspect, the third aspect, the fourth aspect, or the fifth aspect.

In a fifteenth aspect, embodiments of the present application further provide a handwriting system, which can include any electronic apparatus provided in the present application, as well as an input device of a touch pen type.

In a sixteenth aspect, embodiments of the present application provide a chip for reading computer programs stored in a memory, executing the methods provided in the first aspect, the second aspect, the third aspect, the fourth aspect, or the fifth aspect. Optionally, the chip can include a processor coupled to a memory to read computer programs stored in the memory to implement the methods provided in the above embodiments. Optionally, the chip can further include components such as a memory, communication interface, power supply module, etc. The memory is used to store computer programs, and the communication interface is used to receive and send data. The power supply module is used to supply power to the processor.

In a seventeenth aspect, embodiments of the present application provide a chip system, including a processor for supporting a computer device to implement any of the methods provided in the above aspects. In one possible design, the chip system also includes a memory for storing necessary programs and data of the computer device. The chip system can be composed of chips or include chips and other discrete components.

In an eighth aspect, embodiments of the present application provide a computer storage medium storing computer programs. When the computer programs are run on an electronic apparatus, the computer programs cause a computer to execute the method provided in the first aspect, the second aspect, the third aspect, the fourth aspect, or the fifth aspect.

In a nineteenth aspect, embodiments of the present application provide a computer program product including computer programs. The computer programs are run on a computer to cause a computer to execute the method provided in the first aspect, the second aspect, the third aspect, the fourth aspect, or the fifth aspect.

### Brief Description of Figures

In order to provide a clearer explanation of the technical solution in the embodiments of the present application, a brief introduction will be given to the drawings required for the description of the embodiments. It is obvious that the drawings described below are only some embodiments of the present application. For those skilled in the art, other drawings can be obtained based on these drawings without creative labor.
FIG. 1 is a schematic diagram of an application scenario.
FIG. 2 is a schematic diagram of a structure of an electronic apparatus provided in embodiments of the present application.
FIG. 3 is a schematic diagram of an architecture of a software system provided in embodiments of the present application.
FIG. 4 is a schematic flowchart of a handwriting content processing method provided in embodiments of the present application.
FIGS. 5A and 5B are schematic diagrams of a working process of an electronic apparatus provided in embodiments of the present application, respectively.
FIGS. 6A to 6D are schematic diagrams of a working process of an electronic apparatus provided in embodiments of the present application, respectively.
FIGS. 7A and 7B are schematic diagrams of a working process of an electronic apparatus provided in embodiments of the present application, respectively.
FIGS. 8A to 8C are schematic diagrams of a working process of an electronic apparatus provided in embodiments of the present application, respectively.
FIGS. 9A and 9B are schematic diagrams of a working process of an electronic apparatus provided in embodiments of the present application, respectively.
FIG. 9C is a schematic diagram of determining a second handwriting content provided in embodiments of the present application.
FIG. 9D is a schematic diagram of a line break processing of a handwriting interface provided in embodiments of the present application.
FIG. 9E is a schematic diagram of a block break processing of a handwriting interface provided in embodiments of the present application.
FIG. 9F is a schematic diagram of a third handwriting content provided in embodiments of the present application.
FIG. 10A is a schematic diagram of a working process of an electronic apparatus provided in embodiments of the present application.
FIGS. 10B to 10D are schematic diagrams of clearing a second handwriting content provided in embodiments of the present application, respectively.
FIG. 11A is a schematic diagram of a working process of an electronic apparatus provided in embodiments of the present application.
FIG. 11B is a schematic diagram of a handwriting content containing content classification fields provided in embodiments of the present application.
FIG. 11C is an exemplary schematic diagram showing graphics corresponding to a content classification.
FIGS. 11D to 11G are schematic diagrams of a working process of an electronic apparatus provided in embodiments of the present application, respectively.
FIG. 12A is a schematic diagram of a content classification and folder correspondence provided in embodiments of the present application.
FIG. 12B is a schematic diagram of a way to open a file provided in embodiments of the present application.
FIG. 12C is a schematic diagram of a way to open a file provided in embodiments of the present application.
FIG. 13A is a schematic flowchart of a handwriting content processing method provided in embodiments of the present application.
FIG. 13B is a schematic flowchart of a handwriting content processing method provided in embodiments of the present application.
FIG. 13C is a schematic flowchart of a handwriting content processing method provided in embodiments of the present application.
FIGS. 13D and 13E are schematic diagrams of a working process of an electronic apparatus provided in embodiments of the present application, respectively.
FIG. 14A is a schematic flowchart of a handwriting content processing method provided in embodiments of the present application.
FIG. 14B is a schematic flowchart of a handwriting content processing method provided in embodiments of the present application.
FIG. 14C is a schematic flowchart of a handwriting content processing method provided in embodiments of the present application.
FIG. 14D is a schematic flowchart of a handwriting content processing method provided in embodiments of the present application.
FIG. 15 is a schematic diagram of a structure of an electronic apparatus provided in embodiments of the present application.

### Detailed Description

In the embodiments of the present application, "at least one" refers to one or more, and "a plurality of" or "multiple" refers to two or more. "And/or" describes an association relationship between related objects, indicating that there can be three types of relationships, for example, A and/or B, which can represent the situation where A exists alone, A and B exist simultaneously, and B exists alone, where A and B can be singular or plural. The character "/" generally indicates that an associated object before and after is an "or" relationship. "At least one of the following" or similar expressions refers to any combination of these items, including any combination of single or multiple items. For example, at least one of a, b, or c can represent: a, b, c, a and b, a and c, b and c, or a, b and c, where a, b, and c can be single or multiple.

As used in the embodiments of the present application, depending on the context, the terms "when" or "after" can be interpreted as meaning "if..." or "after..."or "in response to determining..."or "in response to detecting...". Similarly, depending on the context, phrases such as "when...being determined" or "if...being detected (the stated conditions or events)" can be interpreted as meaning "if determining..." or "in response to determining..." or "when...being detected (the stated conditions or events)" or "in response to detecting...(the stated conditions or events)".

In addition, in the embodiments of the present application, the use of relational terms such as "first" and "second" to distinguish one entity from another is only for the purpose of distinguishing description and cannot be understood as indicating or implying relative importance, nor can it be understood as indicating or implying order.

The reference to "one embodiment" or "some embodiments" described in this specification means that specific features, structures, or characteristics described in conjunction with that embodiments are included in one or more embodiments of the present application. Therefore, the statements such as "in one embodiment", "in some embodiments", "in other embodiments", "in some other embodiments", etc., that appear differently in this specification do not necessarily refer to the same embodiments, but rather imply "one or more but not all embodiments", unless otherwise specifically emphasized. The terms "include", "contain", "comprise", and their variations all mean "include but not limited to", unless otherwise specifically emphasized.

The present application provides a handwriting content method and related device for processing additional or newly added handwriting requirements of users when processing their handwriting requirements, reducing the complexity of operations and improving convenience. Here, the method and device are based on the same technical concept. Due to the similar principles of problem-solving between the method and device, the implementation of the device and method can be referred to each other, and the repetition will not be repeated.

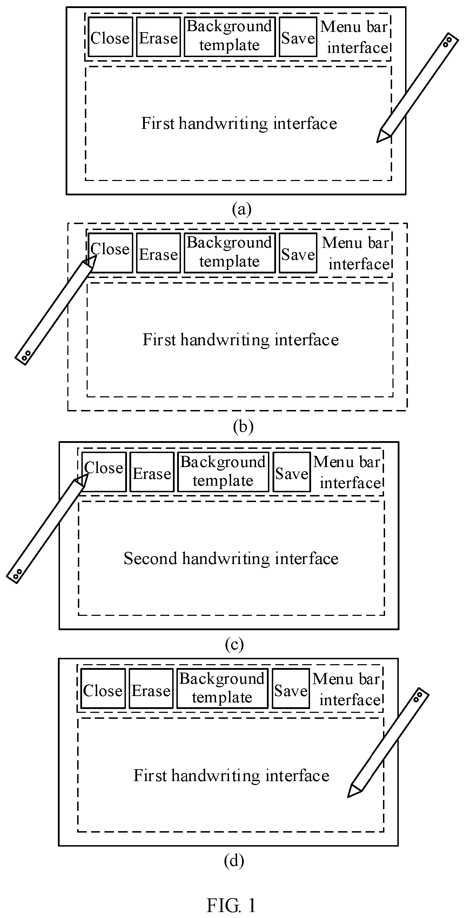

At present, users are using handwriting devices for the first handwriting requirement process, as shown in (a) of FIG. 1. For example, when users are performing a handwriting requirement of recording meeting minutes or performing a handwriting requirement of reading literature and taking notes, the users may have a second handwriting requirement. The second handwriting requirement may be a sudden handwriting requirement, or an additional handwriting requirement, such as recording phone numbers or recording matters informed from work partners. In this case, while directly recording the second handwriting requirement in the handwriting content of the first handwriting requirement, it needs the users to distinguish the handwriting content of the first handwriting requirement from the handwriting content of the second handwriting requirement, which incurs high management costs.

To facilitate the distinguishment of the content of the first handwriting requirement and the content of the second handwriting requirement, as shown in (b) of FIG. 1, the user needs to close the first handwriting interface for the first handwriting requirement, and activate a new handwriting interface as a second handwriting interface for the second handwriting requirement, as shown in (c) of FIG. 1. After completing the second handwriting requirement in the second handwriting interface, the user also needs to close the second handwriting interface, as shown in (d) of FIG. 1. To continue the first handwriting requirement, as shown in (e) of FIG. 1, the user also needs to search for the first handwriting interface of the first handwriting requirement, open the first handwriting interface, display the content of the first handwriting requirement, and continue handwriting in the first handwriting interface.

It can be seen that when the user is using handwriting devices for the first handwriting requirement, if there is a very urgent second handwriting requirement, recording the content of the second handwriting requirement in the corresponding content of the first handwriting requirement will make the content recording of the first handwriting requirement very messy, increasing the management cost of the content of the first handwriting requirement. If the user pauses the first handwriting requirement and then opens a new handwriting function page for the second handwriting requirement, and returns to the page of the first handwriting requirement after the second handwriting requirement stops, this will result in cumbersome operation and lack of convenience.

In view of this, the embodiments of the present application provide an electronic apparatus that can execute the handwriting content processing method provided by the embodiments of the present application. It can reduce user operations, improve operational convenience, and reduce management costs for the content corresponding to the second handwriting requirement and the content corresponding to the first handwriting requirement when a very urgent second handwriting requirement occurs during the user's first handwriting requirement process using the handwriting device.

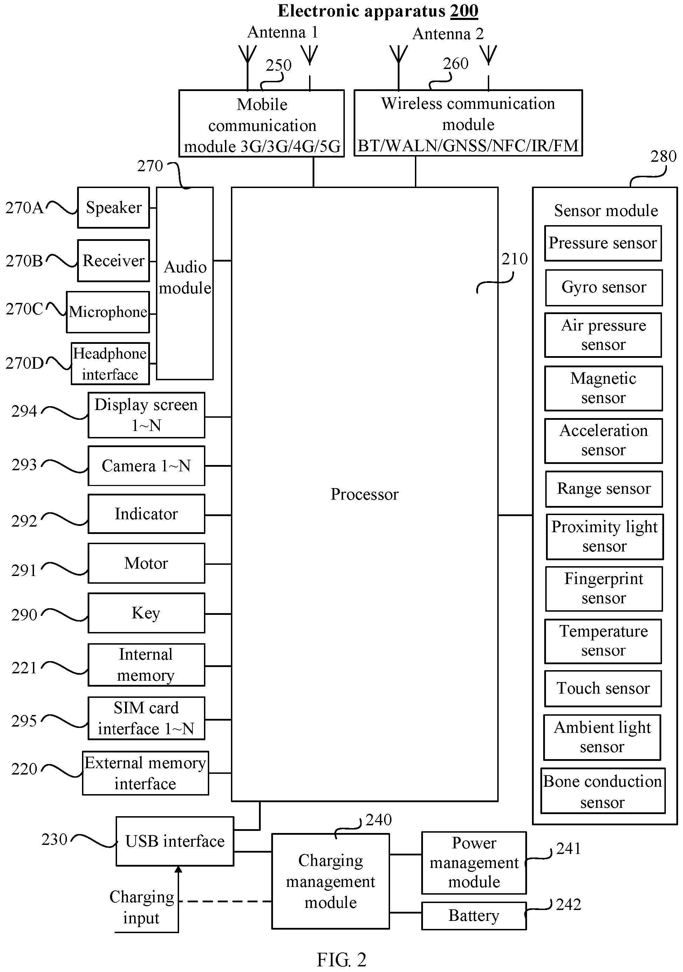

Embodiments of the present application provide an electronic apparatus. Referring to FIG. 2, the structure of the electronic apparatus provided in the embodiments of the present application will be introduced.

As shown in FIG. 2, the electronic apparatus 200 can include a processor(s) 210, an external memory interface 220, an internal memory 221, a USB interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headphone interface 270D, a sensor module 280, keys 290, a motor 291, an indicator 292, a camera 293, a display screen 294, and an SIM card interface 295, etc.

The processor 210 can include one or more processing units, for example, the processor 210 can include a central processing unit (CPU), an application processor (AP), a modem processor (modulation and demodulation processor), a graphics processing unit (GPU), an image signal processor (ISP), a controller, a memory, a video codec, a digital signal processor (DSP), a baseband processor, and/or a neural-network processing unit (NPU), etc. Here, different processing units can be independent devices or integrated into one or more processors. Here, the controller can be a nerve center and command center of the electronic apparatus 200. The controller can generate operation control signals based on instruction operation codes and timing signals to complete the control of instruction retrieval and execution.

The processor 210 can also be equipped with a memory for storing instructions and data. In some embodiments, the memory in the processor 210 is a cache memory. This memory can store instructions or data that have just been used or cycled by the processor 210. If the processor 210 needs to use the instructions or data again, it can be directly called from the memory. By setting the memory, the number of times the processor 210 accesses the internal memory 221 can be reduced, reducing the waiting time of the processor 210 and thus improving the efficiency of the system.

The handwriting content processing method provided in the embodiments of the present application can be controlled by the processor 210 or can be completed by calling other components, such as controlling the display screen 294 to display a user interface and handwriting interface, and obtaining reporting points data collected by the sensor module 280. The processor 210 can include different devices, such as an integrated CPU and GPU, which can cooperate to execute the handwriting content processing method provided in the embodiments of the present application. For example, some algorithms in the handwriting content processing method are executed by the CPU, while others related to handwriting interface display are executed by the GPU to achieve faster processing efficiency.

The display screen 294 is used for displaying images, videos, etc. The display screen 294 includes a display panel. The display panel can adopt an electronic paper display (EPD), a liquid crystal display (LCD), an organic light-emitting diode (OLED), an active-matrix organic light emitting diode or active matrix organic light emitting diode (AMOLED), a flex light-emitting diode (FLED), a MiniLED, a MicroLED, a Micro-oLeD, quantum dot light emitting diodes (QLED), etc. In some embodiments, the electronic apparatus 200 can include one or N display screens 294, where N is a positive integer greater than 1. The display screen 294 can be used for displaying information input from the user or information provided to the user, as well as various graphical user interfaces (GUI). For example, the display screen 294 can show display windows, photos, videos, web pages, user input content, handwriting content, or files, etc. In some embodiments, when the processor 210 detects a touch operation from a user's finger (or touch pens, handwriting pens, etc.), corresponding processing is executed in response to the touch operation, such as displaying dynamically changing content in the user interface displayed on the display screen 294. In some embodiments, when the processor 210 detects a click operation of an external input device (such as a mouse, keyboard, etc.) of the electronic apparatus 200 on a certain application icon, it responds to the click operation and performs corresponding control operations on the application.

In the embodiments of the present application, the display screen 294 can be an integrated flexible display screen, or a spliced display screen composed of two or more rigid screens and flexible screens located between adjacent rigid screens. After the processor 210 runs the method provided in the embodiments of the present application, the processor 210 can control the display screen 294 to display the user interface.

In some implementations, some or all of the display areas of the display screen 294 can be used for displaying a handwriting interface. For example, the electronic apparatus 200 can have multiple display modes, each display mode with a corresponding display area. The shape or size of the display area corresponding to different display modes may vary. It should be noted that the display areas corresponding to different display modes may overlap. Of course, the electronic apparatus 200 can also have only one display mode. In this case, the electronic apparatus 200 can display the user interface through the entire area of the display screen 294, or through some blocks in the display screen 294.

The camera 293 is used to capture static images or videos. Optionally, the electronic apparatus 200 can include 1 to N cameras 293. For example, the camera 293 can include a front camera or a rear camera, or a camera 293 can serve as both a front camera and a rear camera. Typically, the camera 293 can include photosensitive components such as a lens group and an image sensor. Here, the lens group includes multiple lenses (convex or concave), which are used to collect light signals reflected by a to-be-photographed object and transmit the collected light signals to the image sensor. The image sensor generates an original image of the to-be-photographed object based on the light signals.

The internal memory 221 can be used to store computer executable program codes, which include instructions. The processor 210 executes various functional applications and data processing of the electronic apparatus 200 by running the instructions stored in the internal memory 221. The internal memory 221 can include a storage program area and a storage data area. Here, the storage program area can store an operating system, program codes of at least one application, and so on. The operating system can include but is not limited to IOS ^{®}, Android ^{®}, Windows ^{®}, Hongmeng ^{®}, etc. The storage data area can store data created during the use of the electronic apparatus 200.

The internal memory 221 can also store one or more computer programs for executing the methods provided in the embodiments of the present application. The one or more computer programs are stored in the internal memory 221 and configured to be executed by one or more processors 210. The one or more computer programs include instructions that can be used to perform various steps in the following embodiments.

In addition, the internal memory 221 can include a high-speed random access memory, as well as a non-volatile memory such as at least one disk storage device, flash memory device, universal flash storage (UFS), etc.

The sensor module 280 can include fingerprint sensors, touch sensors, pressure sensors, magnetic sensors, ambient light sensors, air pressure sensors, bone conduction sensors, etc.

The touch sensors can be implemented as touch panels or touch components. The touch components are used to detect touch operations acting on or near them. The touch sensors can transmit detected touch operations to an application processor to determine a type of a touch event. Visual output related to touch operations can be provided through the display screen 294. In some embodiments, the touch components can be set on the display screen 294. Or the display screen 294 is a touch display screen. In other embodiments, the touch components can also be placed on the surface of the electronic apparatus 200, at a different location from the display screen 294.

Optionally, the touch components can adopt one or more touch technologies, including but not limited to capacitance based touch technology, infrared based touch technology, and electromagnetic based touch technology. In some implementations, the touch components can adopt capacitance based touch technology. In other implementations, the touch components can use infrared based touch technology. In some implementations, the touch components can adopt electromagnetic based touch technology. In some implementations, the touch components can adopt capacitance based touch technology and infrared based touch technology. In some implementations, the touch components can adopt capacitance based touch technology and electromagnetic based touch technology.

The wireless communication function of the electronic apparatus 200 can be achieved through the antenna 1, antenna 2, mobile communication module 250, wireless communication module 260, modulation and demodulation processor, and baseband processor. The antenna 1 and antenna 2 are used for transmitting and receiving electromagnetic wave signals. Each antenna in the electronic apparatus 200 can be used to cover a single or multiple communication frequency bands. Different antennas can also be reused to improve antenna utilization. For example, the antenna 1 can be reused as a diversity antenna for wireless local area networks. In other embodiments, the antenna can be used in conjunction with a tuning switch.

The mobile communication module 250 can provide wireless communication solutions including 2G/3G/4G/5G, etc., applied to the electronic apparatus 200. The mobile communication module 250 may include at least one filter, switch, power amplifier, low noise amplifier (LNA), etc. The mobile communication module 250 can receive electromagnetic waves from the antenna 1, filter, amplify and process the received electromagnetic waves, and transmit them to the modulation and demodulation processor for demodulation. The mobile communication module 250 can also amplify the signal modulated by the modulation and demodulation processor, and convert it into electromagnetic waves for radiation through the antenna 1. In some embodiments, at least some functional modules of the mobile communication module 250 may be provided in the processor 210. In some embodiments, at least some functional modules of the mobile communication module 250 may be integrated into the same device as at least some modules of the processor 210.

The modulation and demodulation processor may include a modulator and a demodulator. Wherein, the modulator is used to modulate a to-be-transmitted low-frequency baseband signal into a middle and high frequency signal. The demodulator is used to demodulate a received electromagnetic wave signal into a low-frequency baseband signal. Subsequently, the demodulator transmits the demodulated low-frequency baseband signal to the baseband processor for processing. The low-frequency baseband signal is processed by the baseband processor and transmitted to the application processor. The application processor outputs sound signals through audio devices (not limited to speaker 270A, receiver 270B, etc.), or displays images or videos through the display screen 294. In some embodiments, the modulation and demodulation processor may be an independent device. In other embodiments, the modulation and demodulation processor can be set in the same device with the mobile communication module 250 or other functional modules, independent of the processor 210.

The wireless communication module 260 can provide solutions of wireless communications such as wireless local area networks (WLAN) (such as wireless fidelity (Wi-Fi) networks), Bluetooth (BT), global navigation satellite system (GNSS), frequency modulation (FM), near field communication (NFC), infrared technology (IR), etc., included in and applied to the electronic apparatus 200. The wireless communication module 260 may be one or more devices that integrate at least one communication processing module. The wireless communication module 260 receives electromagnetic waves through the antenna 2, modulates and filters electromagnetic wave signals, and sends the processed signals to the processor 210. The wireless communication module 260 can also receive to-be-transmitted signals from the processor 210, frequency tune and amplify them, and convert them into electromagnetic waves through the antenna 2 for radiation.

In addition, the electronic apparatus 200 can achieve audio functions through the audio module 270, speaker 270A, receiver 270B, microphone 270C, headphone interface 270D, and application processor, etc., such as, music playback, recording, etc. The electronic apparatus 200 can receive the input from the keys 290 and generate key signal inputs related to user settings and function control of the electronic apparatus 200. The electronic apparatus 200 can generate vibration prompts using the motor 291. The indicator 292 in the electronic apparatus 200 can be an indicator light, which can be used to indicate the charging status, battery level changes, messages, missed calls, notifications, etc. The SIM card interface 295 in the electronic apparatus 200 is used to connect SIM cards. The SIM card can be inserted into or removed from the SIM card interface 295 to achieve contact and separation with the electronic apparatus 200.

It should be understood that in practical applications, the electronic apparatus 200 shown in FIG. 2 is only an implementation and does not constitute a limitation on the electronic apparatus. And the electronic apparatus 200 may have more or fewer components than shown in the figures, may combine two or more components, or may have different component configurations. The various components shown in the figures can be implemented in hardware, software, or a combination of hardware and software, including one or more signal processing and/or application specific integrated circuits.

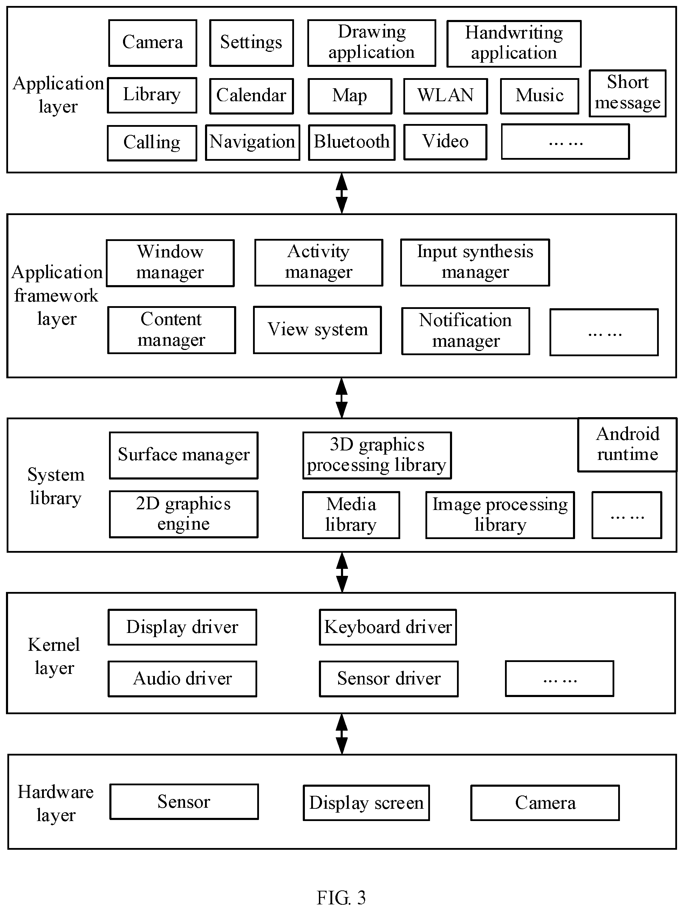

The software system of the electronic apparatus 200 provided in the embodiments of the present application can adopt a layered architecture, event driven architecture, microkernel architecture, microservice architecture, or cloud architecture. The embodiments of the present application take the layered architecture as an implementation to illustrate the software structure of the electronic apparatus, as shown in FIG. 3.

The layered architecture divides the software into several layers, and each layer has clear roles and division of labor. Layers communicate with each other through software interfaces. As shown in FIG. 3, the software architecture can be divided into four layers, from top to bottom: an application layer, application framework layer (FWK), Android runtime and system library, and a kernel layer. In addition, the electronic apparatus can also include a hardware layer.

The application layer is the topmost layer of the operating system, including native applications of the operating system, as well as third-party applications such as cameras, libraries, calendars, Bluetooth, music, videos, information, and so on.

The application framework layer provides application programming interfaces (APIs) and programming frameworks for applications at the application layer. The application framework layer can include some pre-defined functions. The application framework layer can include a window manager, an activity manager, an input synthesis manager, a content provider, a view system, a phone manager, a resource manager, a notification manager, etc.

The window manager is used to provide window manager services (WMS). The window manager can obtain the size of the display screen, determine whether there is a status bar, lock the screen, take screenshots, etc. The window manager can provide multiple management functions to control parameters such as transparency, position, and size of windows or interfaces in the display screen.

The activity manager is used to provide activity management services (AMS), responsible for the startup, switching, scheduling of various components in the system, as well as the management and scheduling of applications.

The input synthesis manager is used to provide input synthesis services (InputFlinger) for collecting, processing, and input time distributing of user operation information. For example, the input synthesis manager can receive operational information reported by sensors through sensor drivers, convert it into input events, and distribute the input events to other modules for processing based on event types of the input events. For example, during the process of a user performing a drawing operation, the input synthesis manager generates an input event upon receiving the operation information of the drawing operation and distributes the input event to the window manager. The window manager distributes the input event to the activity manager. The activity manager can respond to the input event and display drawn trajectory in a corresponding window.

Embodiments of the present application, the application framework layer may also include a content manager. This content manager can be located within modules that provide certain services in the framework layer. Optionally, when the user performs a touch operation on the handwriting interface of the electronic apparatus, the content manager can obtain real-time reporting points data corresponding to the touch operation by the input synthesis manager, or obtain reporting points data corresponding to the touch operation from the sensor driver; and based on the reporting points data and set rules, determine the handwriting content. Afterwards, the content manager can store, transcribe, recognize, or send the determined handwriting content to external devices such as servers.

The content manager is used to store and retrieve data, and make the data accessible to applications. The data may include files (such as documents, videos, images, audio), text, and other information.

The view system includes visual controls, such as controls that display text, images, documents, and other content. The view system can be used to build applications. The interface in the display window can be composed of one or more controls. For example, a display interface with file icons can include controls for displaying text and controls for displaying images.

The notification manager enables applications to display notification information in the status bar, which can be used to convey notification type messages, and can automatically disappear after a brief pause without user interaction.

Optionally, in the Android system, the software structure of the electronic apparatus also includes the Android runtime. The Android runtime includes core libraries and virtual machines. The Android runtime is responsible for scheduling and managing the Android system. The core libraries of the Android system include two parts: one is functional functions that Java language needs to call, and the other is a core library of the Android system. The application layer and application framework layer run in virtual machines. Taking Java as an example, a virtual machine executes Java files from the application layer and application framework layer as binary files. The virtual machines are used for managing object lifecycles, stack management, thread management, security and exception management, as well as garbage collection and other functions.

The system library can include multiple functional modules, such as a surface manager, media libraries, 3D graphics processing libraries (such as: OpenGL ES), 2D graphics engines (such as SGL), etc. The surface manager is used to manage the display subsystem and provides a fusion of 2D and 3D layers for multiple applications. The media library supports playback and recording of various commonly used audio and video formats, as well as static image files, etc. The media library can support multiple audio and video encoding formats, such as MPEG4, H.264, MP3, AAC, AMR, JPG, PNG, etc. The 3D graphics processing library is used to implement 3D graphics drawing, image rendering, compositing, and layer processing. The 2D graphics engine is a drawing engine for 2D graphics.

The kernel layer provides core system services for the operating system, such as security, memory management, process management, network protocol stack, and driver models, all of which are implemented based on the kernel layer. The kernel layer also serves as an abstraction layer between the hardware and software stacks. There are many driver applications related to electronic apparatuses in this layer, mainly including: display drivers, a keyboard driver as an input device; a flash driver based on a memory technology device; a sensor driver; a camera driver; an audio driver; a Bluetooth driver; a WiFi driver, etc.

In the embodiments of the present application, when the sensor driver can perform touch operations on the user interface or handwriting interface, after obtaining operation information of the user based on the touch operations of the user detected by sensors (such as touch sensors and/or pressure sensors) set on the display screen, the sensor driver provides the operation information to the input synthesis manager and content manager.

For example, in some embodiments of the present application, the touch operations received by the electronic apparatus may include but are not limited to the user's clicking (such as single click, double click, etc.) operation/long press operation/slide operation/drag operation/floating gesture operation on the display screen through fingers or touch assistance tools such as stylus, touch pen, etc. The embodiments of the present application are not specifically limited.

In some implementations, the stylus is an active device and includes one or more electronic circuits. For example, a stylus includes one or more sensors and one or more communication circuits (such as communication modules and/or RF circuits). In some implementations, the stylus includes one or more processors and a power system (e.g. battery system). In some implementations, the stylus includes an accelerometer (such as an accelerometer), magnetometer, and/or gyroscope, which can determine the positioning, angle, position, and/or other physical features of the stylus (such as whether the stylus is down, tilted towards or away from the device, and/or approaching or moving away from the device). In some implementations, the stylus communicates with electronic apparatuses (e.g. via communication circuits, through wireless communication protocols such as Bluetooth) and transmits sensor data to the electronic apparatuses. In some implementations, the stylus can determine (e.g., via an accelerometer or other sensor) whether the user is holding the device. In some implementations, the stylus may accept tapping input from the user on the stylus (e.g., single or double clicking, or received by an accelerometer or other sensor), and interpret the input as a command or request to perform a function or switch to a different input mode.

The hardware layer can include various sensors, display screens, cameras, etc.

It should be noted that FIG. 3 is only an example of a software architecture diagram of an electronic apparatus, in which only the layers and software modules related to schemes of the present application are briefly listed. In practical applications, the operating system of electronic apparatuses may also include other layers, and each layer may also include other software modules for implementing one or more functions or services. The embodiments of the present application are not specifically limited to this. In addition, the embodiments of the present application do not limit the specific hierarchy of each software module, for example, the content manager can also be located in the system library or other layer.

The technical solutions provided in the embodiments of the present application are applicable to handwriting scenarios. For example, handwriting input scenarios include but are not limited to the following applications: memo Apps, note taking Apps, and other note taking Apps; E-mail APPs; instant messaging Apps; drawing Apps; text processing Apps; spreadsheet Apps; game Apps; video conferencing Apps; sports and health Apps; photo management Apps; web based Apps; etc. When executing the above-mentioned apps on electronic apparatuses, the app interface can be displayed on the screen 294, and handwriting input operations can also be received through the touch sensor 280K. It should be noted that the present application does not limit handwriting input scenarios to apps, but can also be mini programs, processes, threads, etc., such as desktop processes. The handwriting content processing method provided in the present application can be executed by electronic apparatuses. The following are explanations of some of the terms used in the present application to facilitate understanding by those skilled in the art.
1) The electronic apparatus refers to a device or equipment that has data connectivity, data calculation, and processing functions. Generally, the electronic apparatus has a display screen.

In an implementation, the electronic apparatus referred to in the present application may include electronic whiteboards, business notebooks, electronic ink screens, tablets, personal computers (PCs), laptops, computers, netbooks, in car computers, smartphones, smart wearable devices (such as smartwatches, smart bracelets, smart glasses, etc.), etc. Of course, the electronic apparatus can also be various portable devices, such as in car terminal devices, personal digital assistants (PDAs), smart home devices (such as smart TVs, etc.), and other smart devices. This application does not limit the specific form of electronic apparatuses.

The electronic apparatus can achieve their functions and provide services to users through the operating system they are equipped with. For example, the electronic apparatus may be equipped with, but is not limited to, iOS ^{®}, Android ^{®}, Microsoft ^{®}, Hongmeng ^{®}, or other operating systems.

2) The screen reporting points are touch points used by users to perform touch operations on a display screen of an electronic apparatus.

The sensors of the electronic apparatus can report touch points data or information at a certain frequency, such as to a reporting processing system, such as a system on chip (SOC). Each screen reporting points can have corresponding data. The sensors of the electronic apparatus can continuously collect data from touch points during touch operations, and obtain it through relevant processing of the electronic apparatus, such as sparse sampling processing, denoising processing, etc. Generally, the data of screen reporting points is abbreviated as reporting points data, which can include a timestamp (or collection time) of the screen reporting points and a location of the screen reporting points. Here, the timestamp of the reporting points data represents the time when the sensor of the electronic apparatus collects the screen reporting points during the touch operation process. Optionally, as the size of the handwriting interface and the display screen may be the same or different, the location of the screen reporting points can be the locations (coordinates) of the screen reporting points on the display screen, or the locations of the screen reporting points in the handwriting interface currently displayed on the display screen (or relative to the applications). The present application does not limit this.

Optionally, the reporting points data can also include pressure sensing data of the screen reporting points, temperature of the screen reporting points, reporting points types of the screen reporting points, etc. The reporting points types can include writing points, running points, stopping points, and other types. In some scenarios, the pressure sensing data can be provided by touch input devices that can interact with electronic apparatuses, such as touch pens, handwriting pens, etc.

The electronic apparatuses can display corresponding handwriting or input content on the display screen based on each reporting points data. The reporting points data used for displaying handwriting content can be referred to as the reporting points data corresponding to the handwriting content.

Each reporting points data can be stored in a screen reporting points data file, which can be stored in the memory of the electronic apparatus, such as cache, etc. Each reporting points data in the screen reporting points data file. In some implementations, the electronic apparatus can manage the reporting points data in the screen reporting points data file, such as deleting or removing some reporting points data, to achieve the operation of clearing or revoking some or all handwriting in the handwriting content.

The sensors of electronic apparatuses can detect and receive the handwriting input by continuously collecting reporting points data during touch operations.

3) The handwriting content refers to content information obtained in response to an handwriting input.

For any handwriting input, sensors of electronic apparatuses (such as touch components) can reporting points data or information of each touch point, so that the electronic apparatuses can obtain reporting points data of any handwriting input. The reporting points data inputted by handwriting can reflect trajectory formed by the handwriting input, which is generally referred to as handwriting. The content information generated (or displayed) by electronic apparatuses that reflects the trajectory of the handwriting input can be referred to as the handwriting content corresponding to the handwriting input.

It can be understood that the content information corresponding to the handwriting input can be the actual handwriting of the handwriting input, the handwriting scaled based on the actual handwriting of the handwriting input, or the handwriting generated based on the reporting points data of the handwriting input. In the embodiments of the present application, a handwriting content corresponding to a handwriting input can be understood as reflecting the content of the handwriting formed by the handwriting input. Electronic apparatuses can directly display the handwriting content corresponding to the handwriting input based on the reporting points data.

Optionally, if the handwriting corresponding to the handwriting input is displayed directly based on reporting points information, there may be unsightly effects such as jagged edges and unnatural transitions. Electronic apparatuses can determine corresponding processing information based on the handwriting input of reporting points data, where the processing information includes but is not limited to line width parameters, handwriting style parameters, etc. For example, electronic apparatuses determine processing information for the handwriting input based on speed and/or pressure data of corresponding reporting points of the handwriting input, as well as a corresponding processing model.

Optionally, electronic apparatuses can perform smooth correction or interpolation processing on reporting points data of the handwriting input to obtain optimized reporting points data. In the present application, reporting points data can refer to unoptimized reporting points data or optimized reporting points data, and the present application does not make specific limitations on this. Electronic apparatuses can display the handwriting content corresponding to the handwriting input based on reporting points data and processing information of the handwriting input.

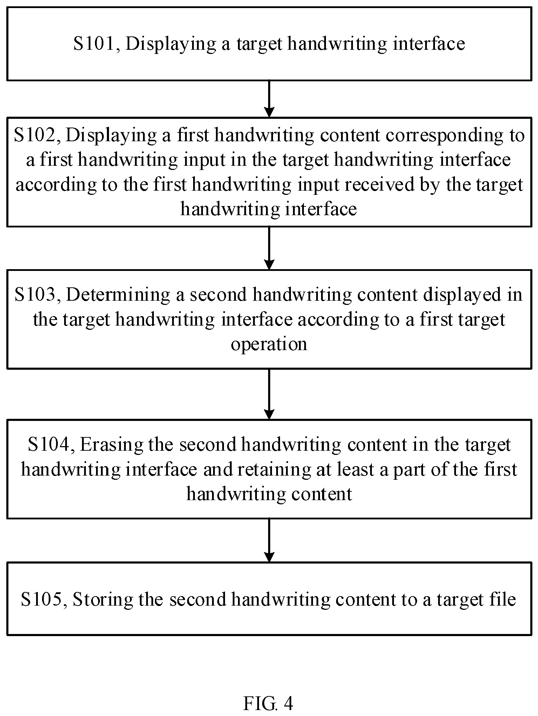

First, embodiments of the present application provide a handwriting content processing method, which can be executed by an electronic apparatus. Referring to FIG. 4, the method includes the following steps.

S101, Displaying a target handwriting interface.

S102, Displaying a first handwriting content corresponding to a first handwriting input in the target handwriting interface according to the first handwriting input received by the target handwriting interface.

S103, Determining a second handwriting content displayed in the target handwriting interface according to a first target operation.

S104, Erasing the second handwriting content and retaining at least a part of the first handwriting content in the target handwriting interface.

S105, Storing the second handwriting content to a target file.

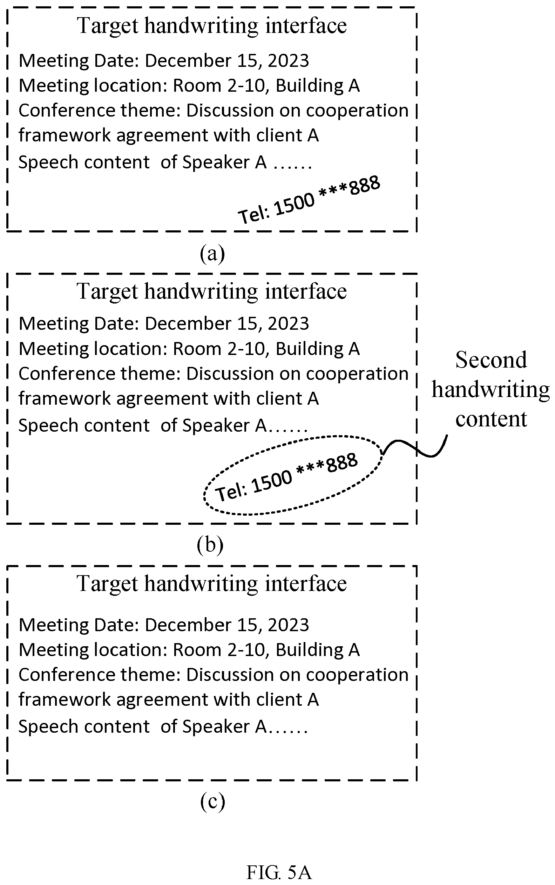

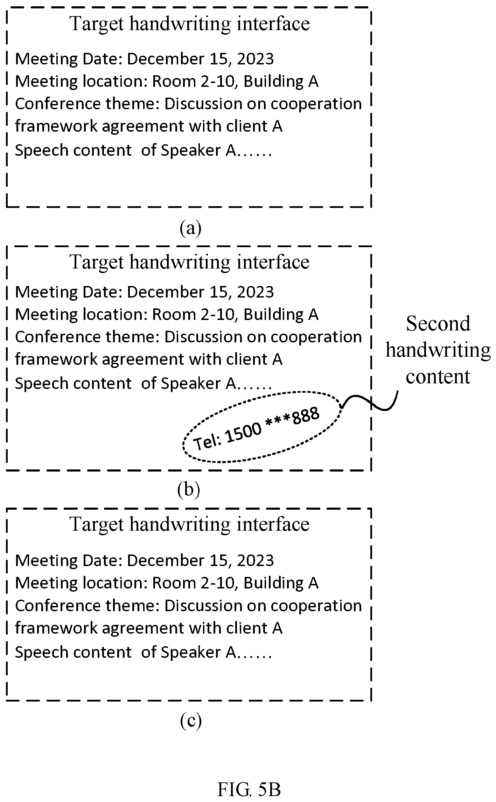

Referring to FIG. 5A, in the handwriting content processing method provided in the present application, as shown in (a) ofFIG. 5A, the target handwriting interface can be a handwriting interface where a user is conducting their first handwriting requirement. The target handwriting interface can be a user interface or a part of the user interface. The handwriting interface not only has display function, but also can have a function of receiving a handwriting input. The target handwriting interface can receive any handwriting input and display a handwriting content corresponding to the any handwriting input in the target handwriting interface.

The user can trigger the first target operation, causing the electronic apparatus to perform the operations in steps 103, 104, and S105. In step 103, the electronic apparatus can determine the second handwriting content from the handwriting content displayed in the target handwriting interface based on the first target operation, as shown in (b) of FIG. 5A. For ease of distinction, in the embodiments of the present application, the second handwriting content can be understood as a handwriting content corresponding to a second handwriting requirement of the user, or a handwriting content corresponding to a temporary handwriting requirement.

In some embodiments, users can open the target handwriting interface by an operation of opening an application. The electronic apparatus can respond to the operation of opening an application and display the target handwriting interface. Alternatively, users can open the target handwriting interface by an operation of opening a file. The electronic apparatus can respond to the operation of opening a file and display the target handwriting interface. In some scenarios, after the users open the target handwriting interface, the target handwriting interface displays the handwriting content, where the handwriting content can be the handwriting content corresponding to the user's previous handwriting input when opening the target handwriting interface. After opening the target handwriting interface this time, the user can perform the first handwriting input through the target handwriting interface, and the target handwriting interface can display the first handwriting content corresponding to the first handwriting input. It can be seen that the target handwriting interface can display the first handwriting content, as well as the handwriting content corresponding to the handwriting input made when opening the target handwriting interface before this time.

Optionally, in some scenarios, the handwriting content displayed in the target handwriting interface can refer to the handwriting content corresponding to each handwriting input received by the target handwriting interface after opening the target handwriting interface this time. In other scenarios, the handwriting content displayed in the target handwriting interface can refer to the handwriting content corresponding to each handwriting input received by the target handwriting interface after opening the target handwriting interface this time, as well as the handwriting content corresponding to each handwriting input made before opening the target handwriting interface this time.

In one possible design, the user triggers the first target operation after performing handwriting input for the second handwriting requirement. Or, the second handwriting input corresponding to the second handwriting content may occur before the electronic apparatus detects the first target operation. In this scenario, the first handwriting input received by the target handwriting interface may include the handwriting input of the second handwriting requirement. The electronic apparatus determines the second handwriting content from the handwriting content displayed in the target handwriting interface based on the first target operation, and the second handwriting content can be determined from the first handwriting content. As shown in (a) of FIG. 5A, the handwriting content in the target handwriting interface is the first handwriting content corresponding to the first handwriting input received by the target handwriting interface.

Continuing to combine (b) and (c) in FIG. 5A. After determining the second handwriting content, the electronic apparatus can clear the second handwriting content from the target handwriting interface and retain at least a part of the first handwriting content, for example, retaining handwriting content from the first handwriting content except for the second handwriting content. Users can, through the target handwriting interface, continue to observe (view) the handwriting content in the first handwriting interface, except for the second handwriting content, that is, the handwriting content corresponding to the first handwriting requirement, such as the handwriting content in the target handwriting interface as shown in (c) of FIG. 5A. Users can continue to make their first handwriting requirement through the target handwriting interface.

In another possible design, after the user triggers the first target operation, a second handwriting requirement is made on the target handwriting interface. Or, the second handwriting input corresponding to the second handwriting content may occur after the electronic apparatus detects the first target operation. In this case, the first handwriting input received by the target handwriting interface does not include the handwriting input of the second handwriting requirement. As shown in (a) of FIG. 5B, before the electronic apparatus detects the first target operation, the handwriting content in the target handwriting interface corresponds to the first handwriting input received by the target handwriting interface. After the electronic apparatus detects the first target operation, the target handwriting interface receives the handwriting input of the second handwriting requirement and displays the handwriting content corresponding to the handwriting input. At this time, the handwriting content displayed on the target handwriting interface can include the first handwriting content and the second handwriting content, as shown in (b) of FIG. 5B.

Continuing to refer to (c) in FIG. 5B, after determining the second handwriting content, the electronic apparatus can clear the second handwriting content from the second handwriting interface and retain the first handwriting content. Users can continue to observe (view) the entire content of the first handwriting content through the target handwriting interface, that is, the handwriting content corresponding to the first handwriting requirement. Users can continue to make their first handwriting requirement through the target handwriting interface.

Based on any of the possible designs mentioned above, the electronic apparatus can clear the second handwriting content from the target handwriting interface and store the second handwriting content to the target file. It can be clarified from the above introduction that the handwriting content corresponding to the user's second handwriting requirement and the handwriting content corresponding to the user's first handwriting requirement can be displayed in the handwriting interface of the first handwriting requirement, that is, displayed in the target handwriting interface. After determining the second handwriting content from the target handwriting interface, the electronic apparatus can clear the second handwriting content, that is, not continue to display the second handwriting content in the target handwriting interface, and retain at least a part of the first handwriting content in the target handwriting interface. The electronic apparatus stores the second handwriting content. During this process, users do not need to repeatedly switch handwriting interfaces to meet different handwriting requirements. And for the handwriting content corresponding to the first handwriting requirement, there is no need for users to perform additional management operations such as distinguishing between the handwriting content of the first handwriting requirement and the handwriting content of the second handwriting requirement. It can be seen that the handwriting content processing method provided in the embodiments of the present application can reduce user operations, store users' sudden handwriting requirements, and improve convenience.

In the present application, the process of processing handwriting content corresponding to temporary handwriting requirements can be abbreviated as an inspiration pen function. For example, the process of performing at least one of the operations of determining the second handwriting content, clearing the second handwriting content, and storing the second handwriting content on electronic apparatuses, in part or in whole, can be abbreviated as the inspiration pen function. In some scenarios, the electronic apparatus can respond to detecting the first target operation and perform the operations in steps 103, 104, and S105.

In one possible implementation, the first target operation in the present application can include, but is not limited to, any one of the following operations:
a first preset operation for a physical structure of the electronic apparatus;
a second preset operation for at least one virtual key displayed on the electronic apparatus;
a third preset operation for a touch display device of the electronic apparatus;
a preset voice control operation;
a preset gesture control operation;
an operation of sending a first indication signal to the electronic apparatus.

In the embodiments of the present application, the target handwriting interface can receive any handwriting input and display the handwriting content corresponding to the any handwriting input in the target handwriting interface. The operation of the function on the target handwriting interface is not affected by whether the electronic apparatus detects the first target operation. Before the electronic apparatus detects the first target operation, the receiving and display functions of the target handwriting interface are running normally. After the electronic apparatus detects the first target operation, the receiving and display functions of the target handwriting interface are running normally.

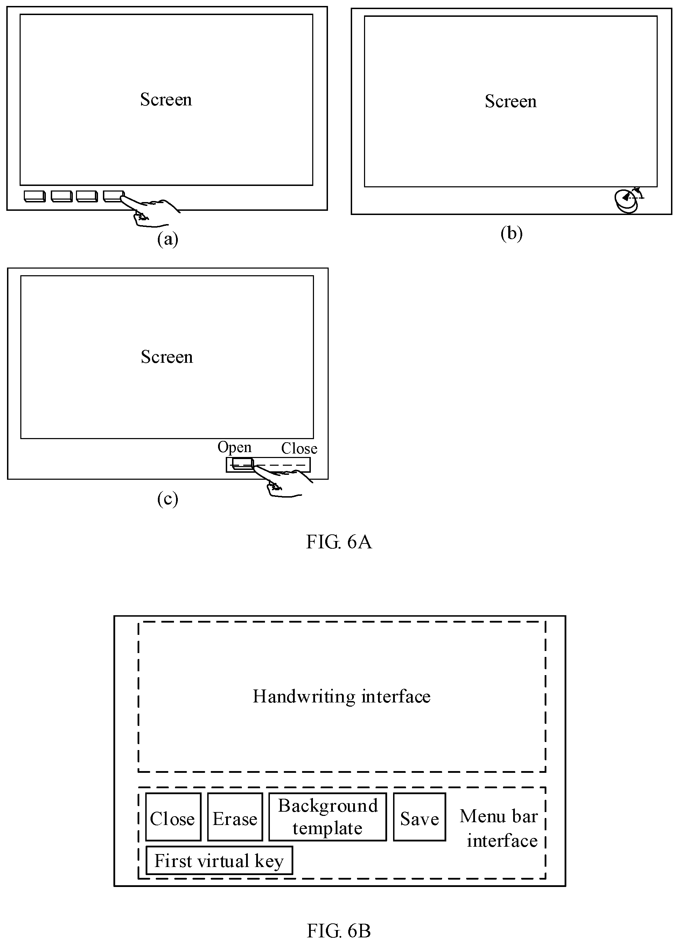

In some possible scenarios, the first target operation may include a first preset operation on a physical structure of the electronic apparatus. Optionally, the physical structure of the electronic apparatus may be hardware buttons, as shown in (a) of FIG. 6A. The first preset operation may include but is not limited to: pressing a hardware button, continuously pressing a hardware button multiple times, and holding a hardware button for a preset duration. Alternatively, the physical structure of the electronic apparatus may be a knob, as shown in (b) of FIG. 6A, and the first preset operation may include but is not limited to: rotating the knob to a first preset position. Alternatively, the physical structure of the electronic apparatus may be a switch, as shown in (c) of FIG. 6A, and the first preset operation may include but is not limited to: placing a switch in an open or closed state. Alternatively, the physical structure of the electronic apparatus may be a touch bar, and the first preset operation may include but is not limited to touch operations on the touch bar such as single clicking, double clicking, long pressing, or sliding on the touch bar, etc. Optionally, the touch bar can be replaced with a touchpad.

In other possible scenarios, the first target operation may include a second preset operation on at least one virtual key displayed on the electronic apparatus. The first target operation may be a second preset operation for at least one virtual key of the inspiration pen function displayed by the user on the electronic apparatus. Optionally, users can perform a second preset operation on the virtual key through an instruction input device. The instruction input device may include but is not limited to touch screens, active or passive touch pens, handwriting pens, and other input devices. The second preset operation can include but is not limited to: single clicking on the virtual key, continuous clicking on the virtual key, dragging the virtual key according to a preset manner, or long pressing the virtual key for a preset duration.

For example, as shown in FIG. 6B, the first target operation is a second preset operation on a first virtual key. The first virtual key can be displayed in a menu bar of a user interface. The user interface can include a menu bar interface and a handwriting interface. The handwriting interface can be used for displaying handwriting content and receive handwriting input. The present application does not impose specific limitations on the layout of the menu bar interface and handwriting interface in the user interface, nor does it impose specific limitations on the layout of each key in the menu bar interface.

Optionally, when the electronic apparatus displays a user interface including a handwriting interface, the menu bar interface can also be continuously displayed in that user interface. Or, when an electronic apparatus displays a user interface including a handwriting interface, the menu bar interface can be displayed in the handwriting interface upon detecting a preset trigger operation. If no operation on the keys in the menu bar interface is detected for a continuous period of time, part or all of the menu bar interface will be hidden.

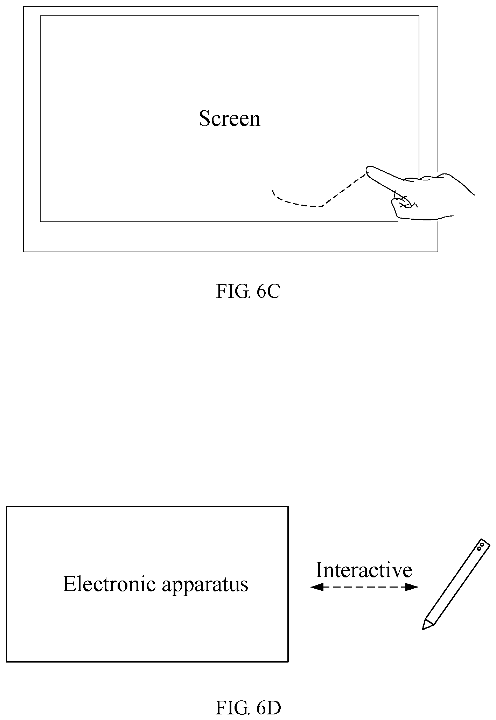

In some possible scenarios, as shown in FIG. 6C, the first target operation may include a third preset operation on a touch display device of the electronic apparatus. Optionally, the touch display device can be implemented as a touch screen. The third preset operation may include but is not limited to: sliding on the touch screen to form a trajectory, sliding on the touch screen to form a graphic.

In some possible scenarios, the first target operation may include a preset first voice control operation. The electronic apparatus can have audio capture capabilities. The electronic apparatus can detect the user's preset first voice control operation on the electronic apparatus. For example, the electronic apparatus can capture audio and recognize that the audio includes a first preset voice command. The first preset voice command may include, but is not limited to, voice content with the same or similar meanings such as "enable inspiration pen mode", "enter inspiration pen mode", "switch inspiration pen mode", etc.

In some possible scenarios, the first target operation can include a preset first gesture control operation. The electronic apparatus can have image capture capabilities and gesture recognition capabilities. Users can make preset first gesture control operations by performing air gestures within an image capture range of the electronic devics. The electronic apparatus can detect whether a user has made a preset first gesture control operation by detecting whether a preset gesture is included in the captured image. Optionally, in this implementation, the air gesture can be a static gesture or a dynamic gesture.

In some possible scenarios, the first target operation may include an operation of sending a first indication signal to an electronic apparatus. The electronic apparatus can have signal reception capabilities. The electronic apparatus can detect received signals. If the electronic apparatus detects the first indication signal, it can determine that the first target operation has been detected. Optionally, as shown in FIG. 6D, the electronic apparatus can interact with an input device of a touch pen type. The first indication signal can be a signal sent by an input device of a touch pen type. Users can trigger the input device of the touch pen type to send a first indication signal to the electronic apparatus through a preset operation on the input device of the touch pen type, causing the electronic apparatus to switch to the inspiration pen mode. Optionally, users can perform a preset operation on the input device of the touch pen type, which can be at least one press operation on a button on the input device of the touch pen type, or at least one touch operation on a designated position of the input device of the touch pen type, or swinging, shaking, or rotating the input device of the touch pen type in a predetermined manner. The embodiments of the present application do not make specific limitations on this.

The electronic apparatus and the input device of the touch pen type can exchange information based on a preset protocol. The embodiments of the present application do not specifically limit data transmission protocols or communication protocols for the interactive information. In some application scenarios, the input device of the touch pen type can be an active touch pen.

In one possible design, the electronic apparatus can display the handwriting content corresponding to any handwriting input received by the target handwriting interface according to the any handwriting input received by the target handwriting interface. Or, in the handwriting interface where the user is performing their first handwriting input, the target handwriting interface can display the handwriting content corresponding to any handwriting input received by the target handwriting interface.

For example, before detecting the first target operation, the electronic apparatus can display the handwriting content corresponding to any handwriting input received by the target handwriting interface according to any handwriting input received by the target handwriting interface. For example, after detecting the first target operation, the electronic apparatus can display the handwriting content corresponding to any handwriting input received by the target handwriting interface according to any handwriting input received by the target handwriting interface.

The following is an introduction to the process of determining the second handwriting content for the electronic apparatus. The electronic apparatus can use, but is not limited to, any one or more of the following design operations to determine the second handwriting content.

Design A1: When the electronic apparatus determines the second handwriting content displayed on the target handwriting interface, the second handwriting content can be determined based on the first target operation. The electronic apparatus can determine the handwriting content corresponding to the second handwriting input received by the target handwriting interface during the first target period as the second handwriting content, where the starting time of the first target period is the time when the first target operation is detected. For example, the electronic apparatus can identify the handwriting content input during the first target period as the second handwriting content. Alternatively, the electronic apparatus can identify the handwriting content corresponding to the handwriting input that occurs during the first target period as the second handwriting content. Alternatively, the electronic apparatus can identify the handwriting input that occurs during the first target period and the handwriting content corresponding to other consecutive handwriting inputs of that handwriting input as the second handwriting content.

It can be seen that the target handwriting interface can receive some of the second handwriting content during the first target period. Another part of the second handwriting content may be received after the first target period. The electronic apparatus can determine the second handwriting content based on the handwriting input received during the first target period on the target handwriting interface and the handwriting input that is continuous with the handwriting input.

Optionally, the duration of the first target period can be a preset first duration. Optionally, the first duration can be 1 minute or 30 seconds.

After detecting the first target operation, the electronic apparatus can distinguish between the content of the first handwriting requirement and the content of the second handwriting requirement based on the time of detecting the first target operation. The electronic apparatus can determine the handwriting content corresponding to the second handwriting input received by the target handwriting interface during the first target period as the second handwriting content, and achieve the determination of the handwriting content corresponding to the second handwriting requirement.

Design A2: When the electronic apparatus determines the second handwriting content displayed on the target handwriting interface, the electronic apparatus can determine the second handwriting content based on the first target operation and the second target operation. The electronic apparatus can determine the handwriting content corresponding to the second handwriting input received by the target handwriting interface during the second target period based on the detected second target operation as the second handwriting content. The starting time of the second target period is the time when the first target operation is detected, and the ending time of the second target period is the time when the second target operation is detected.

In this design, the first target operation can also be understood as the operation of activating the inspiration pen function, or as the operation of starting the second handwriting requirement. The second target operation can be understood as the operation of ending the second handwriting requirement. The electronic apparatus can determine the handwriting content corresponding to the handwriting input that occurs between the first target operation and the second target operation as the second handwriting content.

Optionally, the second target operation in the present application can include but is not limited to any of the following operations:
a fourth preset operation on a physical structure of an electronic apparatus;
a fifth preset operation for at least one virtual key displayed on an electronic apparatus;
a sixth preset operation for a touch display device of an electronic apparatus;
a preset second voice control operation;
a preset second gesture control operation;
an operation of sending a second indication signal to an electronic apparatus.

Optionally, the physical structure of the electronic apparatus can be hardware buttons. The fourth preset operation can include but is not limited to: pressing hardware keys, continuously pressing hardware keys multiple times, and long pressing hardware keys for a preset duration. Alternatively, the physical structure of the electronic apparatus may be a knob, and the fourth preset operation may include but is not limited to: rotating the knob to a second preset location, where the second preset location may be different from the aforementioned first preset location. Alternatively, the physical structure of the electronic apparatus may be a switch, and the second preset operation may include but is not limited to: placing the switch in an open or closed state, where the fourth preset operation may place the switch in a different state from the first preset operation described above. For example, the first preset operation mentioned above can turn on the switch, and the fourth preset operation can turn off the switch. For example, the first preset operation can turn the switch off, and the fourth preset operation can turn the switch on. Alternatively, the physical structure of the electronic apparatus may be a touch bar, and the fourth preset operation may include but is not limited to touch operations on the touch bar such as single clicking, double clicking, long pressing, or sliding on the touch bar. Optionally, the touch bar can be replaced with a touchpad.

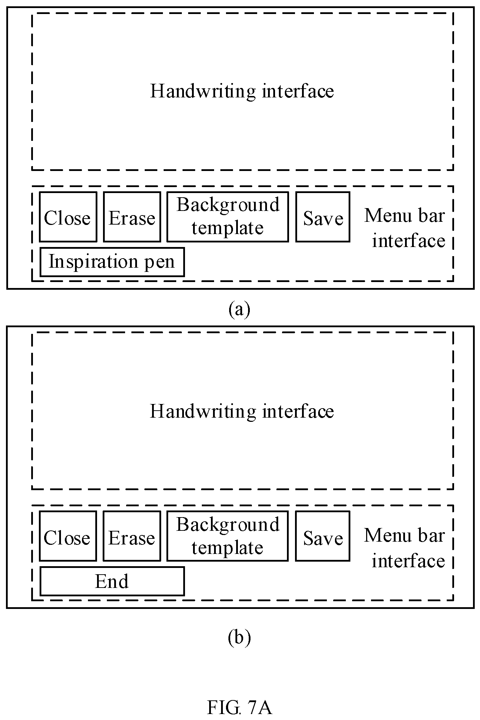

In other possible scenarios, the second target operation may include a fifth preset operation on at least one virtual key displayed on the electronic apparatus. The second target operation may be the fifth preset operation for at least one virtual key of the inspiration pen function displayed by the user on the electronic apparatus. Optionally, users can perform a fifth preset operation on the virtual key through an instruction input device. The instruction input device may include but is not limited to touch screens, active or passive touch pens, handwriting pens, and other input devices. The fifth preset operation can include but is not limited to: single clicking on the virtual key, continuous clicking on the virtual key, dragging the virtual key according to a preset manner, or long pressing the virtual key for a preset duration. Optionally, the second preset operation in the first target operation is an operation on the first virtual key, and the fifth preset operation in the second target operation is an operation on the second virtual key. In some implementations, the first virtual key and the second virtual key are different virtual keys. For example, the first virtual key is a key in a menu bar of the user interface, as shown in (a) of FIG. 7A as the key of "Inspiration Pen". When the electronic apparatus executes the inspiration pen function, the display state of the menu bar changes. Here, the menu bar can display a second virtual key, as shown in (b) of FIG. 7A, which is the key of "End Input".

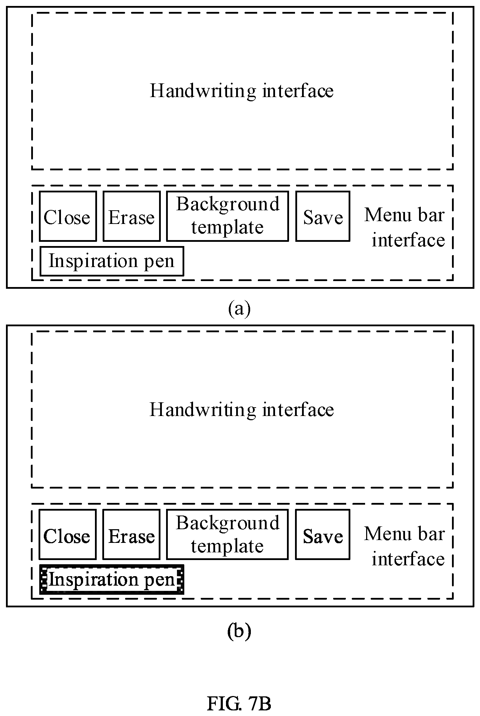

In some implementations, the first virtual key and the second virtual key are the same virtual key, only displaying different states. As shown in FIG. 7B, for example, the first virtual key is a key in the menu bar of the user interface. The key of [Inspiration Pen] shown in (a) of FIG. 7B represents the display effect of the key in a first display state, and the key of [Inspiration Pen] shown in (b) of FIG. 7B represents the display effect of the key in a second display state. After the first virtual key is clicked, the display state of the first virtual key switches. Optionally, after performing the second preset operation on the first virtual key, the display state of the first virtual key can be switched from the first display state to the second display state. After performing the fifth preset operation on the first virtual key, the display state of the first virtual key can be switched from the second display state to the first display state.

In some possible scenarios, the second target operation may include a sixth preset operation on the touch display device of the electronic apparatus. Optionally, the touch display device can be implemented as a touch screen. The sixth preset operation may include but is not limited to: sliding on the touch screen to form a trajectory, sliding on the touch screen to form a graphic.

In some possible scenarios, the second target operation may include a preset second voice control operation. The electronic apparatus can have audio capture capabilities. The electronic apparatus can detect the user's preset second voice control operation on the electronic apparatus. For example, the electronic apparatus can capture audio and recognize that the audio includes a second preset voice command. The second preset voice command may include, but is not limited to, voice content with the same or similar meanings such as "end input" and "complete input".

In some possible scenarios, the second target operation may include a preset second gesture control operation. The electronic apparatus can have image capture capabilities and gesture recognition capabilities. Users can make preset second gesture control operations by performing air gestures within an image capture range of the electronic apparatus. The electronic apparatus can detect whether a user has made a preset second gesture control operation by detecting whether a preset gesture is included in the captured image. Optionally, in this imlementation, the air gesture can be a static gesture or a dynamic gesture. Optionally, the gesture used for the second gesture control operation and the gesture used for the first gesture control operation can be the same gesture or different gestures.

In some possible scenarios, the second target operation may include an operation of sending a second indication signal to the electronic apparatus. The electronic apparatus can have signal reception capabilities. The electronic apparatus can detect received signals. If the electronic apparatus detects the second indication signal, it can determine that the second target operation has been detected. Optionally, the electronic apparatus can interact with an input device of a touch pen type. The second indication signal can be a signal sent by an input device of a touch pen type. Users can trigger the input device of the touch pen type to send a second indication signal to the electronic apparatus through preset operations on the input device of the touch pen type, causing the electronic apparatus to switch to the inspiration pen mode. In some implementations, the data format of the second indication signal may be the same as that of the first indication signal. Or, when the electronic apparatus receives the first indication signal again, it can determine that the second target operation has been detected. In other implementations, the data format of the second indication signal may be different from that of the first indication signal.

Design A3: When the electronic apparatus determines the second handwriting content displayed on the target handwriting interface, the electronic apparatus can determine a selection range corresponding to a third target operation based on the detected third target operation, and determine the content in the selection range as the second handwriting content. In some scenarios, the content within the selection range may be a portion of the handwriting content displayed on the target display interface. In other scenarios, the content within the selection range can be from the first handwriting content.

In one possible implementation, the third target operation is to use a setting selection range tool provided by the electronic apparatus to set a selection range contour or location in the target handwriting interface. Optionally, a default selection range contour for the selection range tool is rectangular or circular. The electronic apparatus can determine a selection range based on the contour and location of the selection range tool set by the third target operation, and then identify the handwriting content within the selection range as the second handwriting content.

In another possible implementation, the third target operation is an operation of performing handwriting input on the target handwriting interface. The third target operation can form lines or graphics in the target handwriting interface, and the formed lines or graphics can indicate the selection range. The electronic apparatus can determine the selection range based on the formed lines or graphics. Then handwriting content within the selection range is identified as the second handwriting content. Optionally,the indication selection range of the lines or graphics formed by the third target operation in the target handwriting interface can include a direct selection range or an indirect selection range.

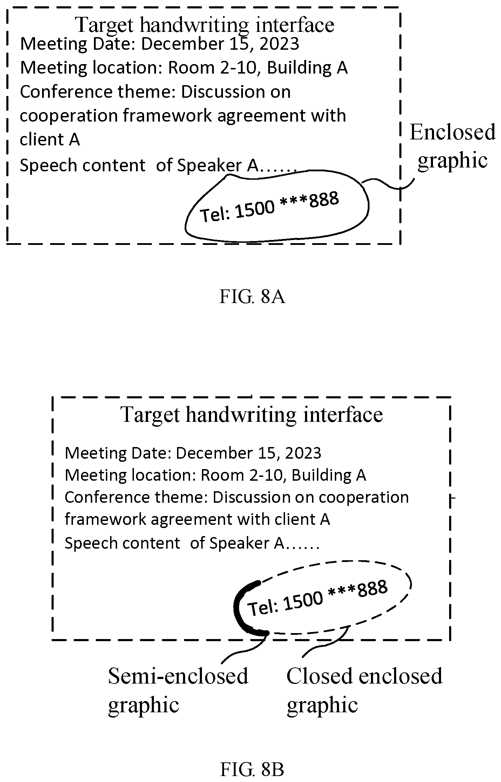

In some implementations, the third target operation is a handwriting input operation that forms an enclosed graphic in the target handwriting interface. The specific form of the enclosed graphic is not limited in the embodiments of the present application. The enclosed graphic can be any shape that can form a closed space, such as a circle, rectangle, triangle, or irregular enclosed graphic. As shown in FIG. 8A, the electronic apparatus can determine whether the target handwriting interface contains enclosed graphics through graphic recognition or detection. The electronic apparatus can include any enclosed graphic in the target handwriting interface, use this enclosed graphic as the selection range corresponding to the third target operation, and determine the handwriting content within the selection range as the second handwriting content. The contour of the enclosed graphic in the implementations can form a selection range, and it can be seen that the enclosed graphic can directly indicate the selection range.

In some implementations, the third target operation can form a handwriting input operation of a semi-enclosed graphic in the target handwriting interface. The specific form of the semi-enclosed graphic is not limited in the embodiments of the present application. As shown in FIG. 8B, the electronic apparatus can determine whether the target handwriting interface contains a semi-enclosed graphic through graphic recognition or detection.

Optionally, continuing to refer to FIG. 8B, the electronic apparatus can infer that the semi-enclosed graphic (as shown by the thick black line) is close to or similar to an enclosed graphic (as shown by the thin dashed line), use this closed enclosed graphic as the selection range corresponding to the third target operation, and determine the handwriting content within the selection range as the second handwriting content. It can be seen that the semi-enclosed graphic in this implementation can indirectly indicate the selection range.

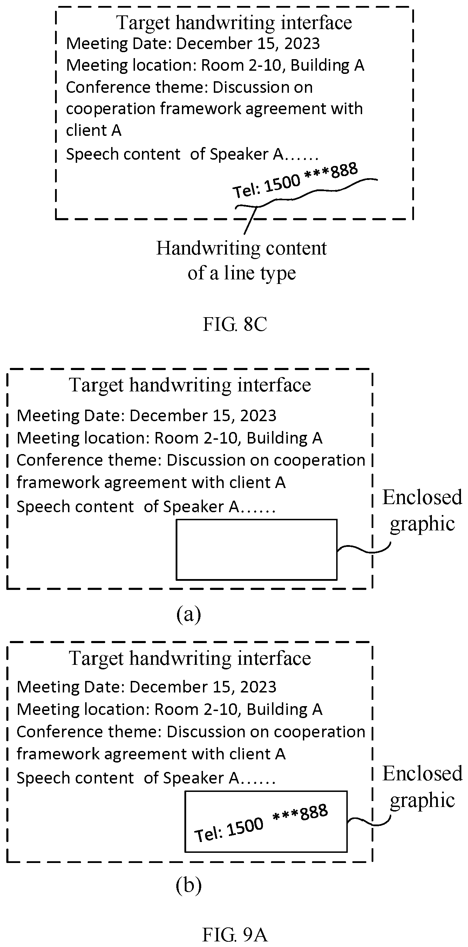

In some implementations, the third target operation may be a handwriting input operation that forms any type of line in the target handwriting interface. The embodiments of the present application do not impose specific limitations on the type of line. As shown in FIG. 8C, the electronic apparatus can determine whether the target handwriting interface includes handwriting content of any type of line through graphic recognition or detection. The electronic apparatus can determine the second handwriting content based on the information of any type of line formed by the third target operation. The information of the line can include but is not limited to a location of the line, ends of the line, and a length of the line. For example, the electronic apparatus can determine the second handwriting content based on the length of the recognized line, the content on one side of the line, or the content near the line that matches the length of the line. As can be seen, the lines in the implementations can indirectly indicate the selection range.

In some scenarios, the third target operation may occur before the first target operation, or the third target operation may occur after the first target operation. The third target operation can be an operation of forming an enclosed graphic, a semi-enclosed graphic, or any type of line in the target handwriting interface. The third target operation can be to form an enclosed graphic in the target handwriting interface as an example for introduction.

In one possible scenario, the third target operation may occur before the first target operation. The electronic apparatus can display the target handwriting interface. The first handwriting content corresponding to the first handwriting input is displayed in the target handwriting interface according to the first handwriting input received by the target handwriting interface. The electronic apparatus can detect the third target operation and determine the selection range corresponding to the third target operation. Then the electronic apparatus can respond to detecting the first target operation and determine the second handwriting content displayed in the target handwriting interface. The electronic apparatus can clear the second handwriting content in the target handwriting interface, and the electronic apparatus can store the second handwriting content to the target file. As shown in (a) of FIG. 9A, the user can perform an input operation of forming an enclosed or a semi-enclosed graphic in the target handwriting interface, and the enclosed or semi-enclosed graphic corresponding to the input operation is displayed on the target handwriting interface. As shown in (b) of FIG. 9A, the user can perform a second handwriting input in the enclosed or semi-enclosed graphic, and the electronic apparatus can display the handwriting content corresponding to the second handwriting input on the target handwriting interface. The electronic apparatus can use the enclosed or semi-enclosed graphic as a selection range, and then determine the handwriting content within the selection range as the second handwriting content.

Optionally, the electronic apparatus can traverse the handwriting content displayed in the target handwriting interface in reverse order according to the input time corresponding to each handwriting content, determine whether each handwriting content contains hand drawn graphics that meet a preset graphic condition, and detect whether the third target operation is received. The electronic apparatus can use hand drawn graphics that meet the preset graphic condition as the second handwriting content when the handwriting content displayed on the target handwriting interface includes hand drawn graphics.

In some application scenarios, the preset graphic condition can be that the hand drawn graphics are enclosed graphics. Alternatively, the preset graphic condition can be that the hand drawn graphics are enclosed graphics, and an area of the enclosed graphic exceeds a preset area threshold. Optionally, the electronic apparatus can obtain data on the touch points (trajectory points) of multiple lines in a hand drawn graphic. The electronic apparatus can iteratively determine the distance between the lines and their endpoints. When there are endpoints of other lines within a preset distance threshold range of all line endpoints, the hand drawn graphic can be determined to be closed.

The electronic apparatus can use any existing algorithm or technique for calculating the area of a graphic to determine its area. For example, electronic apparatuses can recognize the endpoints of hand drawn graphics and identify the categories of hand drawn graphics. Electronic apparatuses can calculate the area of hand drawn graphics based on the distance between endpoints, the distance between endpoints and handwriting.

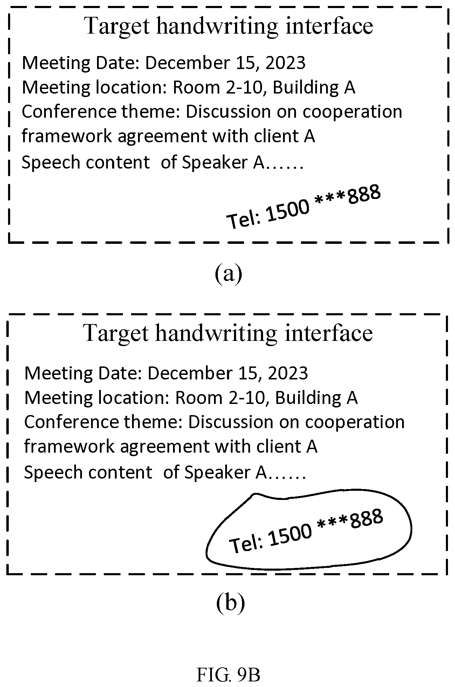

In another possible scenario, the third target operation may occur after the first target operation. The electronic apparatus can display the target handwriting interface. The first handwriting content corresponding to the first handwriting input is displayed on the target handwriting interface according to the first handwriting input received by the target handwriting interface. Then, the electronic apparatus can respond to detecting the first target operation and execute the determination of the second handwriting content displayed in the target handwriting interface, where the electronic apparatus detects whether a third target operation is received, and when the electronic apparatus detects the third target operation, it determines the selection range corresponding to the third target operation and identifies the content within the selection range as the second handwriting content. The electronic apparatus can clear the second handwriting content in the target handwriting interface, and the electronic apparatus can store the second handwriting content to the target file. As shown in (a) of FIG. 9B, the user has already completed inputting the second handwriting requirement in the target handwriting interface before the first target operation. As shown in (b) of FIG. 9B, the user can perform an input operation of forming an enclosed or a semi-enclosed graphic in the target handwriting interface, and the corresponding enclosed or semi-enclosed graphic of the input operation is displayed on the target handwriting interface. The electronic apparatus can use the enclosed or semi-enclosed graphic as a selection range, and then determine the handwriting content within the selection range as the second handwriting content.

Design A4: When the electronic apparatus can determine the second handwriting content displayed on the target handwriting interface, the electronic apparatus can determine the second handwriting content based on the input time corresponding to each handwriting content displayed on the target handwriting interface. The second handwriting content is the handwriting content with the latest input time among all handwriting contents. Generally, the handwriting content with the latest input time among all handwriting contents is also the handwriting content with the largest input time among all handwriting contents. Optionally, in some scenarios, the handwriting content displayed in the target handwriting interface can refer to the handwriting content corresponding to each handwriting input received by the target handwriting interface after opening the target handwriting interface this time. In other scenarios, the handwriting content displayed in the target handwriting interface can refer to the handwriting content corresponding to each handwriting input received by the target handwriting interface after opening the target handwriting interface this time, as well as the handwriting content corresponding to each handwriting input made before opening the target handwriting interface this time.

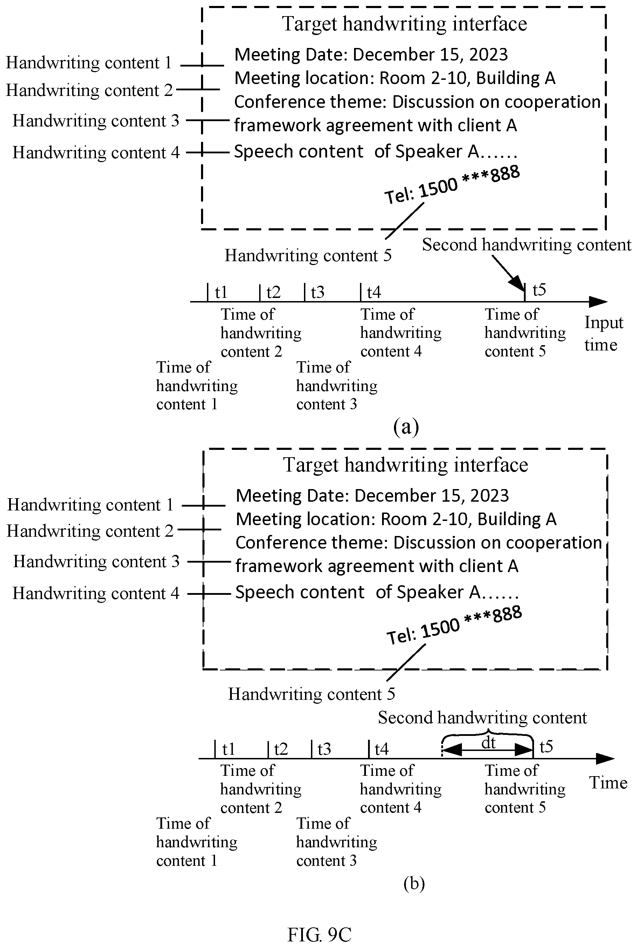

As shown in (a) of FIG. 9C, the handwriting content displayed in the target handwriting interface includes a handwriting content 1, handwriting content 2, handwriting content 3, handwriting content 4, and handwriting content 5. The input times for each handwriting content are t1, t2, t3, t4, t5. The input time of each handwriting content is sorted by time size as t1, t2, t3, t4, t5. The electronic apparatus can respond to the detection of the first target operation, and based on the input time corresponding to each handwriting content displayed in the target handwriting interface, determine the handwriting content with the latest input time corresponding to each handwriting content displayed in the target handwriting interface, that is, the handwriting content 5, as the second handwriting content.

Optionally, the time of the reporting points data corresponding to the handwriting content can represent the input time of the handwriting content. The time when the target handwriting interface receives the handwriting input can be used as the input time corresponding to the handwriting content of the handwriting input. Alternatively, the maximum or minimum time in the reporting points data used for displaying the handwriting content can be used as the input time corresponding to the handwriting content.

In some scenarios, the electronic apparatus can determine the handwriting content within a second period as the second handwriting content based on the time corresponding to each handwriting content displayed in the target handwriting interface, where the end time of the second period is the maximum time among the times corresponding to each handwriting content.

As shown in (b) of FIG. 9C, the handwriting content displayed in the target handwriting interface includes a handwriting content 1, handwriting content 2, handwriting content 3, handwriting content 4, and handwriting content 5. The input times for the handwriting contents are t1, t2, t3, t4, t5. The input times of the handwriting contents are sorted by time size as t1, t2, t3, t4, t5. The electronic apparatus can respond to the detection of the first target operation, and based on the input time corresponding to each handwriting content displayed in the target handwriting interface, determine the handwriting content with the latest input time among the respective handwriting contents displayed in the target handwriting interface, that is, the handwriting content 5, as the second handwriting content. The electronic apparatus can respond to the detection of the first target operation and determine the handwriting content corresponding to the the maximum input time among the input times corresponding to each handwriting content displayed on the target handwriting interface and the handwriting content within the second period (denoted as dt) before the maximum input time as the second handwriting content, based on the input time corresponding to each handwriting content displayed on the target handwriting interface.

Design A5: When the electronic apparatus determines the second handwriting content displayed on the target handwriting interface, the electronic apparatus can determine the second handwriting content displayed on the target handwriting interface based on the input time and location corresponding to each handwriting content displayed on the target handwriting interface. Optionally, in some scenarios, the handwriting content displayed in the target handwriting interface can refer to the handwriting content corresponding to each handwriting input received by the target handwriting interface after opening the target handwriting interface this time. In other scenarios, the handwriting content displayed in the target handwriting interface can refer to the handwriting content corresponding to each handwriting input received by the target handwriting interface after opening the target handwriting interface this time, as well as the handwriting content corresponding to each handwriting input made before opening the target handwriting interface this time.

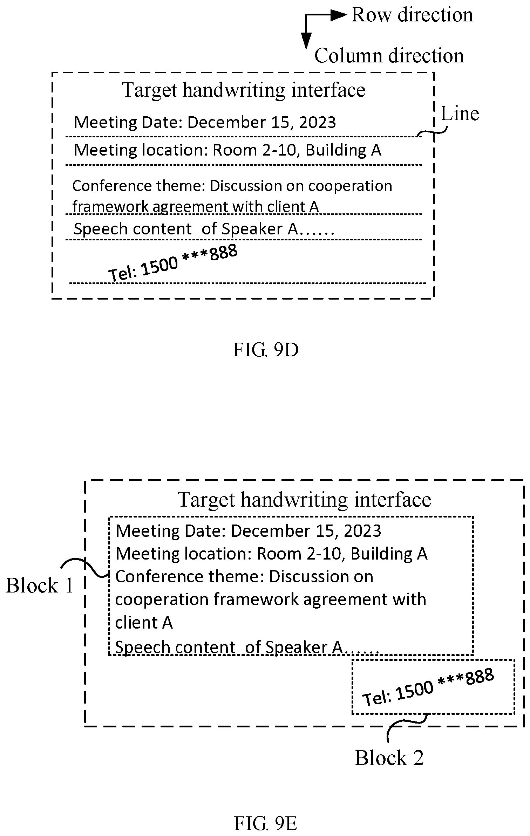

In some implementations, the electronic apparatus can perform a line break processing on the handwriting content displayed on the target handwriting interface during the process of determining the second handwriting content displayed on the target handwriting interface based on the input time and location corresponding to each handwriting content displayed on the target handwriting interface. Please refer to FIG. 9D, the electronic apparatus can perform a line break processing based on the position distribution of each handwriting content displayed in the target handwriting interface, as well as the input time corresponding to each handwriting content.

FIG. 9D shows the effect of the electronic apparatus performing a line break processing on the handwriting content displayed on the target handwriting interface, specifically illustrating the relationship between the lines and the handwriting content. Optionally, the target handwriting interface does not display the row lines after the line break processing, and the electronic apparatus can determine the row to which the handwriting content belongs by combining the position of the row lines in the column direction with the position of the handwriting content. The electronic apparatus can use any existing algorithm or technology to achieve the line break processing of the content displayed in the target handwriting interface.

For example, in the target handwriting interface, the position of each row in the column direction can be preset or configured based on the width or length of the handwriting content. The electronic apparatus can match the position of each handwriting content in the column direction and the position of each row in the column direction. If the difference between the position of a handwriting content in the column direction and the position of any row in the column direction is less than a preset first distance threshold, it can reflect that the handwriting content matches any row. If a handwriting content only has a matching relationship with one line, it can be determined that the handwriting content belongs to the line that has a matching relationship with the handwriting content.

If there is a matching relationship between a handwriting content and two lines, that is, if a handwriting content matches two lines, the electronic apparatus can, based on the input time corresponding to each handwriting content, determine a line to which a handwriting content belongs where an input time of the handwriting content is close to or adjacent to the input time corresponding to the each handwriting content, as the line to which the each handwriting content belongs.

From this, the electronic apparatus can obtain information about the lines to which each handwriting content belongs in the target handwriting interface. The electronic apparatus can determine the handwriting content in the target line as the second handwriting content, and the target line contains the handwriting content with the latest input time among all handwriting contents. Or, the line to which the handwriting content with the maximum input time belongs is taken as the target line. The electronic apparatus can identify the handwriting content belonging to the target line or the handwriting content within the target line, as the second handwriting content.

In other implementations, during the process of determining the second handwriting content displayed on the target handwriting interface based on the input time and location corresponding to each handwriting content displayed on the target handwriting interface, the electronic apparatus can determine the block where each handwriting content displayed on the target handwriting interface is located. As shown in FIG. 9E, the electronic apparatus can divide the handwriting content of the target handwriting interface into blocks, such as multiple blocks, with no overlapping positions between each block. Optionally, any two blocks can meet a preset block position condition. For example, the preset block position condition can be that there is a clear distinction between the positions of two blocks.

The electronic apparatus can determine the handwriting content in a target block as the second handwriting content. The target block includes the handwriting content with the latest input time among all handwriting contents.

The electronic apparatus can use any existing algorithm or technology to block the handwriting content of the target handwriting interface.

For example, the electronic apparatus can use projection methods to block handwriting content on the target handwriting interface. The electronic apparatus projects the lines of each handwriting content in the target handwriting interface onto a preset x-axis and y-axis, respectively. The electronic apparatus projects the lines of each handwriting content in the target handwriting interface onto a preset x, to obtain a first projection histogram corresponding to the x-axis. The x-axis in the first projection histogram is scaled down and mapped to a x'-axis, to reduce the impact of spaces between characters in the same row or column on determining the final segmentation position. The electronic apparatus can calculate the segmentation position on the x'-axis based on the peak and valley trends of the first histogram. The electronic apparatus can determine the segmentation position on the x'-axis and the position on the x-axis based on the aforementioned mapping relationship, thereby obtaining the position of the column segmentation line in the target handwriting interface. Similarly, the electronic apparatus projects the lines of each handwriting content in the target handwriting interface onto a preset x, to obtain a first projection histogram corresponding to the x-axis. The y-axis in the first projection histogram is scaled down and mapped to a y'-axis, to reduce the impact of spaces between characters in the same row or column on determining the final segmentation position. The electronic apparatus can calculate the segmentation position on the y'-axis based on the peak and valley trends of the second histogram. The electronic apparatus can determine the segmentation position on the y'-axis and the position on the y-axis based on the aforementioned mapping relationship, thereby obtaining the position of the row segmentation line in the target handwriting interface.

Thus, the electronic apparatus can divide the target handwriting interface into multiple blocks based on the obtained row and column segmentation lines. Based on the positions of each separation line and the maximum and minimum values of the trajectory points corresponding to all handwriting contents on the x-axis and y-axis, different block ranges can be obtained. Traversing strokes of all the handwriting contents, if the center of gravity of a stroke is within a certain block range, it is considered that the stroke belongs to that block.

For another example, the electronic apparatus can use the trajectory points of each handwriting content in the target handwriting interface as discrete points. The discrete handwriting trajectory points are clustered based on a clustering algorithm to obtain the category and n category centers of each trajectory point, and obtain n regions by taking the bounding rectangle of each category. The electronic apparatus can use the center of gravity of handwriting to determine which region the handwriting belongs to (to prevent noise caused by clustering), enabling the identification of multiple blocks and the handwriting content within each block. Optionally, the clustering algorithm can include but is not limited to density based spatial clustering of applications with noise (DBSCAN), spectral clustering algorithms, and other clustering algorithms.

DBSCAN can define clusters as the maximum set of density connected points, which can divide regions with sufficiently high density into clusters and discover clusters of any shape in spatial databases. Spectral clustering algorithm can define an affinity matrix that describes the similarity between paired data points based on a given sample dataset, calculate the eigenvalues and eigenvectors of the matrix, and then select appropriate eigenvectors to cluster different data points.

In one possible implementation, the handwriting content processing method may further include: after determining the second handwriting content, the electronic apparatus may generate or display a reminder information, to indicate whether the user needs to adjust the second handwriting content, or the electronic apparatus may generate content confirmation information, to indicate the user to confirm whether the second handwriting content is correct. The content confirmation information can also have the function or action of indicating the user that whether the adjustment of the second handwriting content is needed.

The following will use the content confirmation information as an example to introduce. In some scenarios, the content confirmation information may include reminder information.

After determining the second handwriting content, the electronic apparatus can generate content confirmation information to remind users to check or view whether the determined second handwriting content is accurate. Here, the content confirmation information can indicate the second handwriting content.

The content confirmation information can be indicated by a location indication and/or a text indication, to indicate the second handwriting content.

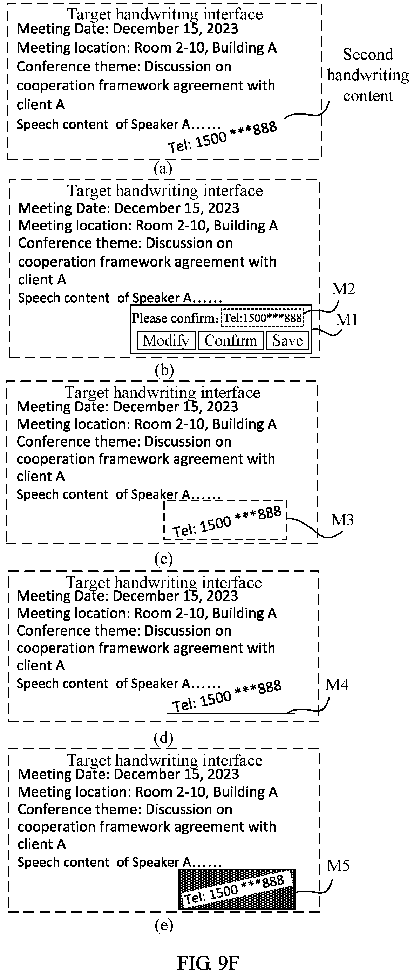

In some possible designs, the content confirmation information can include reminder text information. The reminder text information is used to remind users to confirm whether the second handwriting content is accurate, or to remind users whether to modify the second handwriting content. For example, the reminder text information can be "whether to modify temporary content", "whether to modify inspiration content", "whether to modify", "whether to save", "whether to modify: recognition result of second handwriting content", "please confirm: recognition result of second handwriting content". In some scenarios, as shown in (a) of FIG. 9F, after the electronic apparatus determines the second handwriting content, please refer to (b) of FIG. 9F, the electronic apparatus can generate content confirmation information M1 and display the content confirmation information M1. The content confirmation information M1 can be implemented in the form of a pop-up window. The pop-up window can be a preset transparency window or floating window. The reminder text information of the content confirmation information M1 can be "whether to modify: recognition result of the second handwriting content".

Optionally, users can operate the window. If the user modifies the recognition result of the second handwriting content in the window, the modified recognition result of the second handwriting content will be updated to the recognition result of the second handwriting content, so as to store the recognition result of second handwriting content.

Optionally, when the content confirmation information M1 is implemented as a pop-up window, the position of the pop-up window can overlap with the position of the second handwriting content determined by the electronic apparatus. The position of the pop-up window can also be any position in the user interface to which the target handwriting interface belongs.

For example, the content confirmation information M1 may also include one or more operation buttons, such as one or more of a "modify" button, "confirmation" button, or "save" button.

In some scenarios, after the user operates the "modify" button, the user can modify the recognition result of the second handwriting content through the window. Optionally, the recognition result of the second handwriting content can be displayed in an input box M2. The user can modify the recognition result of the second handwriting content in the input box M2. If the user modifies the recognition result of the second handwriting content in the window, the modified recognition result of the second handwriting content will be updated to the recognition result of the second handwriting content, so that the electronic apparatus can store the recognition result of the second handwriting content.

In some scenarios, the user's operation of the "confirmation" button confirms the recognition result of the second handwriting content, so that the electronic apparatus can store the recognition result or modified recognition result of the second handwriting content.

In some scenarios, the user's operation of the "save" button instructs the electronic apparatus to store the recognition result or modified recognition result of the second handwriting content.

In some possible designs, the content confirmation information may include display information. The display information is used to indicate the second handwriting content through a location indication. The display information may include indicator graphics.

In some implementations, the indicator graphic can be an enclosed graphic, referring to (c) in FIG. 9F, the content in the indicator graphic M3 is the second handwriting content determined by the electronic apparatus. Optionally, the enclosed graphic can be a rectangle.

In some implementations, the indicator graphic can be a line type graphic. Please refer to (d) in FIG. 9F, the content closest to the top position of the indicator graphic M4 is the second handwriting content.

Optionally, for example, users can enter a mode of adjusting indicator graphics by an operation on the indicator graphics. By dragging and dropping an edge or endpoint of the indicator graphic, the range of the indicator graphic can be adjusted. The electronic apparatus can re-determine the second handwriting content based on the adjusted indicator graphic.

In some implementations, display information may include highlighted areas, please refer to (e) in FIG. 9F, the content in the highlighted area is the second handwriting content.

Optionally, users can adjust the indicator graphics through adjustment operations to modify the second handwriting content. The electronic apparatus can respond to detecting adjustment operations and re-determine the second handwriting content. When re-determining the second handwriting content, the electronic apparatus can redetermine the second handwriting content based on the adjusted indicator graphics and highlighted areas.

For example, users can enter the mode of adjusting the highlighted area by an operation on the highlighted area. By dragging and dropping an edge or endpoint of the highlighted area, the range of the highlighted area can be adjusted. The electronic apparatus can re-determine the second handwriting content based on the adjusted highlighted area.

In one possible implementation, the electronic apparatus can simultaneously or synchronously clear the second handwriting content in the target handwriting interface and store the second handwriting content to the target file. Alternatively, the electronic apparatus can asynchronously perform two operations: erasing the second handwriting content in the target handwriting interface and storing the second handwriting content to the target file. Optionally, the operation of erasing the second handwriting content in the target handwriting interface can be performed before the operation of storing the second handwriting content to the target file, or the operation of storing the second handwriting content to the target file can be performed before the operation of erasing the second handwriting content in the target handwriting interface.

The following is an introduction to the process of erasing the second handwriting content in the target handwriting interface on the electronic apparatus. The electronic apparatus can use, but are not limited to, any one or more of the following design operations to clear the second handwriting content from the target handwriting interface.

Design B1: Before determining the second handwriting content displayed on the target handwriting interface based on the first target operation, and after detecting the first target operation, the electronic apparatus can determine the second handwriting content corresponding to the second handwriting input in the target handwriting interface according to the second handwriting input received by the target handwriting interface, and display the second handwriting content or the recognition result corresponding to the second handwriting content.

The electronic apparatus can utilize or create a first layer, and the first layer is used for displaying the first handwriting content. When the electronic apparatus displays a second handwriting content, a new layer can be added, and the newly added layer is referred to as a target layer, where the target layer is used for displaying the second handwriting content. The electronic apparatus displaying the target layer can achieve displaying the second handwriting content in the target handwriting interface. It can be seen that the target layer is a layer different from the above first layer.

Optionally, the electronic apparatus can add one or more target layers after determining the second handwriting content. Alternatively, the electronic apparatus can display the second handwriting content in the target handwriting interface in response to detecting the first target operation. When erasing the second handwriting content in the target handwriting interface, the electronic apparatus can clear the target layer. The electronic apparatus does not clear the first layer used for displaying the first handwriting content, so as to preserve the first handwriting content in the target handwriting interface.

In some application scenarios, the electronic apparatus distinguishes between the content of the first handwriting requirement and the content of the second handwriting requirement based on the time of detecting the first target operation after the first target operation is detected. The electronic apparatus can determine the handwriting content corresponding to the second handwriting input received by the target handwriting interface during a first target period as the handwriting content corresponding to the second handwriting requirement. Alternatively, the electronic apparatus can determine the handwriting content corresponding to the second handwriting input received by the target handwriting interface during a second target period based on the detected second target operation, as the second handwriting content. The electronic apparatus can add a target layer based on detecting the first target operation. The target layer is used for displaying the second handwriting content. For example, the electronic apparatus can create a new target view object, draw a second handwriting content on the target view object, and add a target layer. The electronic apparatus can draw a second handwriting content on a layer or canvas of the target view object. The electronic apparatus can clear the second handwriting content from the target handwriting interface by removing the target layer. For example, the electronic apparatus can close the target view object to clear the target layer.

In some application scenarios, the electronic apparatus can generate handwritten handwriting based on each reporting point data corresponding to a handwriting content. Alternatively, the electronic apparatus can generate handwritten handwriting based on each reporting point data corresponding to a handwriting content and a preset processing algorithm. The preset processing algorithm may include but is not limited to a smoothing correction algorithm, an interpolation algorithm, etc., such as using Bezier curves for smoothing and interpolation. The preset processing algorithm may also include a handwriting generation algorithm. For example, the handwriting generation algorithm can include but is not limited to an algorithm based on line width and/or pen strokes. In some implementations, line width information of a handwriting content can be determined by speed information or pressure information in the reporting points data of the handwriting content. The electronic apparatus can obtain pressure information for each reporting point through an active stylus. The greater the pressure is, the wider the line width is. The smaller the pressure is, the smaller the line width is. In other implementations, the line width information of the handwriting content can be determined by the speed information in the reporting points data of the handwriting content. The higher the speed is, the smaller the line width is. For another example, algorithms based on pen strokes can achieve non white, falling, and finishing brush strokes, and other pen stroke effects.

The screen reporting points data file can be used to record the data of each screen reporting point in the target handwriting interface. That is, the screen reporting points data file can be used to record the reporting points data of handwriting content in the handwriting interface when the user makes the first handwriting requirement. The second handwriting requirement can also be inputted through the target handwriting interface, and the screen reporting points data file can record the reporting points data corresponding to the second handwriting requirement. The electronic apparatus can display handwriting content in the target handwriting interface based on the screen reporting points data file, and also display handwriting content corresponding to the second handwriting requirement when displaying the handwriting content in the target handwriting interface, that is, the second handwriting content.

Design B2: The electronic apparatus can clear the second handwriting content from the target handwriting interface by clearing, removing, deleting, detaching, moving out, or transferring the reporting points data of the second handwriting content from the screen reporting points data file.

In some implementations, the electronic apparatus can obtain the handwriting content in the target handwriting interface based on the screen reporting points data file, and the screen reporting points data file can include reporting points data corresponding to each handwriting content in the target handwriting interface. The reporting points data of each handwriting content can be obtained through touch points corresponding to the handwriting input collected by sensors of the electronic apparatus. The screen reporting points data file can be, but is not limited to, a list data structure.

Optionally, the screen reporting points data file can also include processing information corresponding to each handwriting content. For example, the data used for displaying various handwriting contents in the screen reporting points data file includes {handwriting content identifier, reporting points data} or {handwriting content identifier, reporting points data, processing information}. Optionally, the screen reporting points data file can be at the granularity of a single stroke. For example, the data used for displaying each handwriting content in the screen reporting points data file includes: {stroke, handwriting content identifier to which the stroke belongs, and reporting points data corresponding to the stroke}, or {stroke, handwriting content identifier to which the stroke belongs, reporting points data corresponding to the stroke, and processing information corresponding to the stroke}.

The electronic apparatus can display the stroke of each handwriting content based on the data of each handwriting content in the screen reporting points data file. In one possible design, the operation of erasing the second handwriting content in the target handwriting interface of the electronic apparatus can be achieved by clearing, removing, deleting, detaching, moving out, or transferring the data of the second handwriting content from the screen reporting points data file, so as not to display the second handwriting content in the target handwriting interface, but to display the handwriting content retained in the screen reporting points data file in the target handwriting interface.

In some implementations, in the screen reporting points data file, each reporting points data is configured with a handwriting content identifier. Each processing information is configured with a handwriting content identifier. For example, an identifier of a handwriting content A is 1, an identifier of a handwriting content B is 2, and an identifier of a handwriting content 3 is 3. If the electronic apparatus clears the handwriting content A, it can delete reporting points data, processing information, and other data related to the handwriting content identifier 1 from the screen reporting points data file. The screen reporting points data file contains data related to the handwriting content identifier 2 and data related to the handwriting content identifier 3, the electronic apparatus can overlay and render the data onto a canvas layer based on the screen reporting points data file, to display the handwriting content 2 and handwriting content 3.

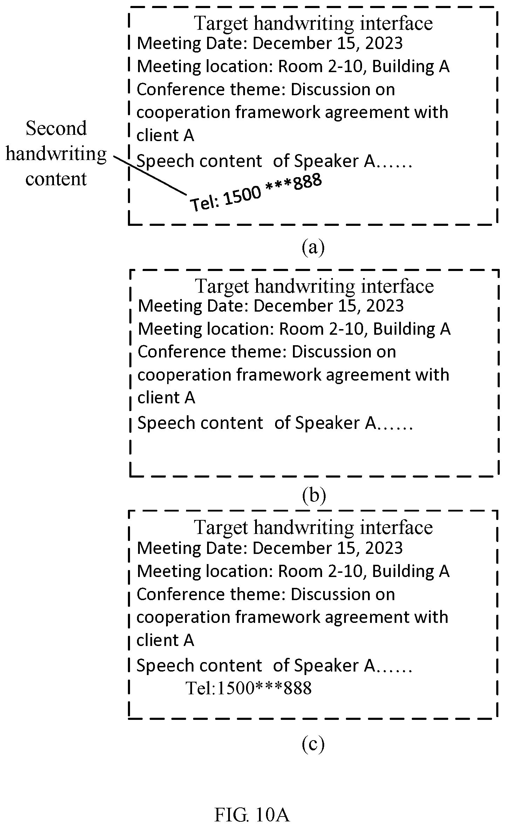

In some implementations, as shown in (a) of FIG. 10A, the second handwriting content is displayed in the target handwriting interface. The electronic apparatus can directly clear the second handwriting content from the target handwriting interface, as shown in (b) of FIG. 10A. In other implementations, as shown in FIG. 10A, after erasing the second handwriting content in the target handwriting interface, the electronic apparatus displays a corresponding printed content of the second handwriting content at a position corresponding to the second handwriting content, as shown in (c) of FIG. 10A. After a preset period, the electronic apparatus clears the corresponding printed content of the second handwriting content. The printed content corresponding to the second handwriting content can be understood as having the same content as the second handwriting content and displaying in a printed style.

The corresponding printed style of the handwriting content can be determined based on recognition results of the handwriting content. In some possible application scenarios, the electronic apparatus can obtain recognition results for any handwriting content.

Optionally, the recognition result corresponding to any handwriting content can be determined by the electronic apparatus through handwriting content recognition, or by an external device (such as a server) through handwriting content recognition. For example, the aforementioned methods for recognizing handwriting content can be based on any optical character recognition (OCR) technology, any text recognition technology, any graphic recognition technology, etc.

Optionally, the text recognition technology can use CNN text recognition algorithms for image data, or RNN recognition algorithms for trajectory point sequences (such as LSTM models), or a combination of other complex models (such as CRNN or Transformer, etc.). The embodiments of the present application do not specifically limit this.

Optionally, the graphic recognition technology can adopt LSTM models based on sequence points, or some models based on RNN for object recognition, or heuristic based algorithms (such as algorithms that comprehensively judge based on the number of inflection points and line segments), which are not specifically limited in the embodiments of the present application.

In some implementations, when the electronic apparatus clears the second handwriting content from the target handwriting interface, the electronic apparatus gradually clears the second handwriting content. The second handwriting content can be divided into multiple parts. According to a preset sorting, reporting points data of each part of the content is deleted from the screen reporting points data file.

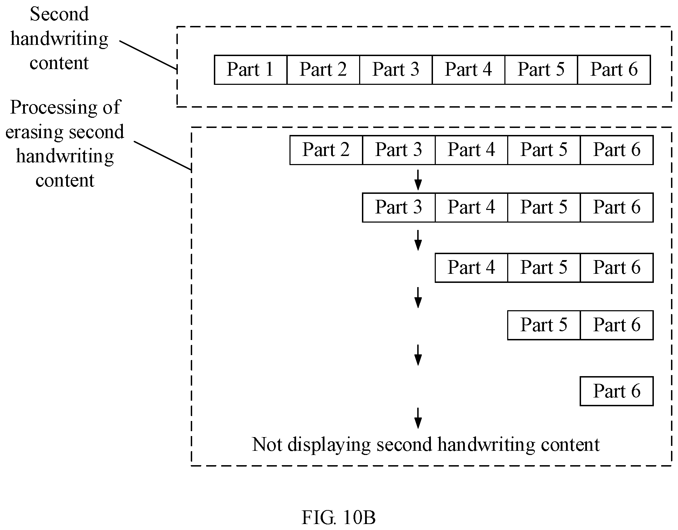

For example, as shown in FIG. 10B, for the second handwriting content, the electronic apparatus can sort reporting points data of each part of the content from small to large or from large to small according to the time in the reporting points data of each part of the content, and delete the reporting points data of each part of the content from the screen reporting points data file, achieving the clearing of the second handwriting content from the target handwriting interface.

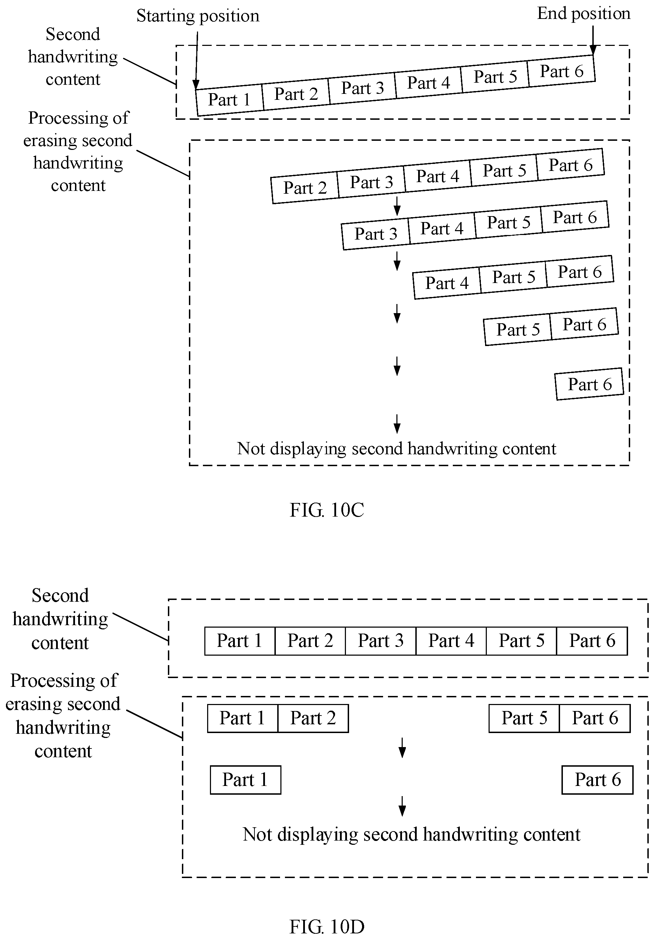

For example, as shown in FIG. 10C, for the second handwriting content, the electronic apparatus can sort reporting points data of each part of the content along a direction from a starting position to an ending position of the second handwriting content, or along a position of each part of the content along a direction from an ending position to a starting position of the second handwriting content, according to positions in the reporting points data of each part of the content, and delete the reporting points data of each part of the content from the screen reporting points data file, achieving the clearing of the second handwriting content from the target handwriting interface.

For example, as shown in FIG. 10D, for the second handwriting content, the electronic apparatus can delete reporting points data of one or two parts of the content located in a middle position based on positions in the reporting points data of each part of the content. Then, the electronic apparatus can delete the part of the content adjacent to the deleted one or two parts of the content, according to this rule, until reporting points data of the part located at the starting position and the ending position in the second handwriting content are deleted, achieving the clearing of the second handwriting content from the target handwriting interface.

In some implementations, the screen reporting points data file may include at least one list data structure. Each stroke (or handwriting) in the handwriting content is formed by preset processing of all screen reporting points data in a chronological order from writing down to writing up. This preset processing can be connected in the order of reporting points, or filled with graphics between reporting points. All the reporting points data for each stroke can be recorded in a list data structure, and based on these data, each stroke can be formed by rendering the data onto the canvas layer. All reporting points data that facilitates distinguishing each stroke is referred to as stroke data. Each stroke data also includes an attribution identifier, and the attribution identifier can be used to distinguish the handwriting content to which the stroke belongs. For example, when the attribution identifier is a first identifier, the first identifier indicates that the stroke belongs to the handwriting in the first handwriting content. When the attribution identifier is a second identifier, the second identifier indicates that the stroke belongs to the handwriting in the second handwriting content.

The electronic apparatus can clear the second handwriting content from the target handwriting interface. The electronic apparatus can traverse each stroke in the screen reporting points data file and distinguish the stroke of the first handwriting content and the stroke of the second handwriting content based on the attribution identifier of each stroke. The stroke belonging to the second handwriting content is deleted from the screen reporting points data file. Optionally, the electronic apparatus can clear all strokes belonging to the second handwriting content from the screen reporting points data file through one or more clearing operations. After each clearing operation, the electronic apparatus can use the remaining data in the screen reporting points data file to regenerate a new rendering content, and cover and render the new rendering content to the current canvas layer.

After the electronic apparatus determines the second handwriting content, the electronic apparatus can store content data corresponding to the second handwriting content to the target file. The content data corresponding to the handwriting content can be, but not limited to, in any data format or file format. The embodiments of the present application does not make specific limitations on this.

Optionally, the electronic apparatus may store at least a part of the first handwriting content retained in the target handwriting interface to a first file, and the first file is a file different from the target file. The location of the first file is different from the location of the target file.

In some scenarios, the electronic apparatus may display a target handwriting interface in response to an operation of opening a first application. The electronic apparatus can display a save prompt window in response to an operation of closing the first application, which is used to prompt the user whether to save the handwriting content in the target handwriting interface. Optionally, the handwriting content in the target handwriting interface can be the first handwriting content, or the handwriting content in the target handwriting interface can be the handwriting content that excludes the second handwriting content from the first handwriting content, and such handwriting content can be saved in the first file. The user can view the handwriting content in the first file by opening the first file.

In some application scenarios, the electronic apparatus can display a target handwriting interface in response to an operation of opening a first file. The electronic apparatus can display a save prompt window in response to an operation of closing the first file, which is used to prompt the user whether to save the handwriting content in the target handwriting interface. Optionally, the handwriting content in the target handwriting interface can be the first handwriting content, or the handwriting content in the target handwriting interface can be the handwriting content that excludes the second handwriting content from the first handwriting content, and such handwriting content can be saved in the first file. The user can view the handwriting content in the first file by opening the first file.

The following is an introduction to the working process of storing the second handwriting content to the target file on the electronic apparatus. The electronic apparatus can use, but are not limited to, any one or more of the following design operations to store the second handwriting content to the target file.

Design C1: The content data of the second handwriting content may include images (or image data) of the second handwriting content. Alternatively, the content data may include recognition results corresponding to the second handwriting content. Alternatively, the content data may include reporting points data corresponding to the second handwriting content. Alternatively, the content data may include reporting points data and processing information corresponding to the second handwriting content.

Optionally, in the case where the content data includes the reporting points data corresponding to the second handwriting content, the content data of the second handwriting content may include handwriting data of each stroke in the second handwriting content, and a layer to which each stroke belongs. The handwriting data in the same layer is saved in a layer data list in a chronological order of reporting points. The content data may include at least one layer data list. When the electronic apparatus stores content data, layer data can be converted into serialized data and saved to a target file, where the target file can be a database or data file. When the electronic apparatus opens the target file, it is deserialized into a layer data list, and then the handwriting data is rendered to a layer in a chronological order.

In some implementations, the electronic apparatus can obtain recognition results of the second handwriting content. The electronic apparatus can store the recognition results of the second handwriting content as content data of the second handwriting content.

Optionally, the electronic apparatus can recognize the second handwriting content, and the method of recognizing the handwriting content can be based on any OCR technology, any text recognition technology, any graphic recognition technology, etc. Alternatively, the electronic apparatus can send the second handwriting content to a server after in communication connection with the server, and the server can recognize the second handwriting content.

Optionally, in the case where the electronic apparatus is not in communication connection with the server, the electronic apparatus can temporarily store the content data of the second handwriting content in a second file.

After the electronic apparatus is in communication connection with the server, the electronic apparatus can send the second file to the server, so that the server can recognize the second handwriting content based on the second file and return the recognition result corresponding to the second handwriting content to the electronic apparatus. For example, the electronic apparatus can determine the communication connection between the electronic apparatus and the server based on receiving network change broadcasts, and the electronic apparatus can send the second file to the server. For example, the electronic apparatus can periodically send network requests to access the server. The electronic apparatus can determine that the server is online based on response information received from the server. The electronic apparatus can communicate with the server and also reflect the communication connection between the electronic apparatus and the server. The electronic apparatus can send the second file to the server. Optionally, the electronic apparatus can display the second handwriting content in a third handwriting interface based on the second file. Optionally, after the electronic apparatus opens the second file, the third handwriting interface can only display the second handwriting content and does not accept handwriting input. Alternatively, the third handwriting interface can display the second handwriting content and also accept handwriting input, such as editing the second handwriting content, such as adding, modifying, deleting, and other editing operations.

Design C2: When the electronic apparatus stores the content data corresponding to the second handwriting content to the target file, the content data corresponding to the second handwriting content can be stored in a designated folder, such as a folder corresponding to an inspiration pen function.

Design C3: When the electronic apparatus stores the content data corresponding to the second handwriting content to the target file, the electronic apparatus can perform classified storage operations on the second handwriting content. The electronic apparatus can classify target files based on a target content corresponding to the second handwriting content. Then the electronic apparatus can store the content data of the second handwriting content to the target file.

The electronic apparatus can be set with multiple content classifications. One content classification corresponds to one file, and different content classifications correspond to different files. The electronic apparatus can determine a target content classification corresponding to the second handwriting content. Then, based on a correspondence between a preset content classification and a file, a target file corresponding to the target content classification is determined. The electronic apparatus can store the content data of the second handwriting content to the target file.

In some scenarios, the target file can be implemented as a folder (also known as a file directory). Multiple files can be saved in one folder. For example, a phone number in an address book folder can be implemented as a file. For example, in a to-do list folder, a to-do item is implemented as a file.

The file directory generally refers to a hierarchical structure in a computer system used to organize and store files and folders, commonly known as folders. The file directory is a tree like structure consisting of multiple directories and files, used to assist users in organizing and accessing data stored on a computer. In the file directory, each directory or folder can contain other sub-directories and files.

In other scenarios, the target file can be implemented as a file. One file includes contents stored in a predetermined order. When displaying multiple contents in a file, there is no content overlap. Or, multiple contents do not overlap in their displayed positions.

In some scenarios, the number of multiple content classifications can be configured or set by the user. Or the number of content classifications is pre-configured by the electronic apparatus. In some scenarios, any content classification can be user-defined. Optionally, any content classification can be pre-configured by the electronic apparatus.

Optionally, content classification information of a content classification can represent that content classification. The content classification information includes at least one of the following: a classification field, a graphic. The content classification information can include a classification field. Alternatively, the content classification information can include a graphic. Alternatively, the content classification information can include a classification field and a graphic.

The classification field in the content classification information of a content classification can represent the content classification. The graphic in the content classification information of a content classification can also represent the content classification. A classification field can uniquely represent a content classification. A graphic can uniquely represent a content classification. Optionally, the content classification information of any one of multiple content classifications can be configured by the system by default or customized by the user. For example, the user can configure a classification field for any content classification. The user can configure a graphic for any content classification.

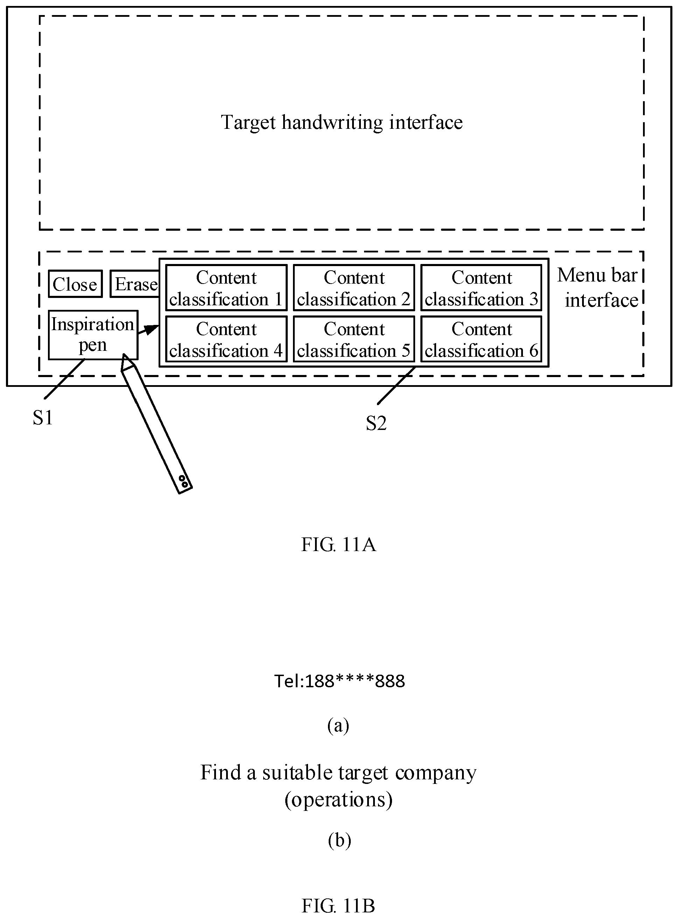

In some implementations, as shown in FIG. 11A, when the electronic apparatus displays A target handwriting interface, a menu toolbar can be displayed. The toolbar is provided with a virtual key (S1) of an inspiration pen mode. By the user clicking on the virtual key (S1) of the inspiration pen mode, the electronic apparatus displays a secondary menu (S2) of the inspiration pen mode, where the secondary menu can include virtual keys corresponding to each content classification in multiple content classifications. One content classification corresponds to one virtual key, and different content classifications correspond to different virtual keys. Optionally, the virtual key corresponding to the content classification can display the classification field of that content classification. The first target operation mentioned above can be an operation on a virtual key corresponding to any content classification, such as a click operation.

If the first target operation is an operation on the target virtual key among the virtual keys corresponding to multiple content classifications, the electronic apparatus can determine the content classification corresponding to the target virtual key as the target content classification based on a preset correspondence between the multiple content classifications and the virtual keys.

In other implementations, the electronic apparatus can determine the target content classification based on the recognition result of the second handwriting content. The electronic apparatus can determine the content classification corresponding to target content classification information in the recognition result of the second handwriting content as the target content classification.

In some scenarios, the electronic apparatus can obtain text recognition results of the second handwriting content. The electronic apparatus can detect whether the recognition result of the second handwriting content includes a classification field for any content classification. The electronic apparatus can determine the content classification corresponding to the target classification field as the target content classification based on the target classification field included in the recognition result.

For example, the classification field of the content classification can be configured as "Tel", "Address", "Operations", or "To-do items", etc. The classification field of the content classification can be configured by the user and/or by the system, and the form of the classification field of the content classification is not specifically limited in the embodiments of the present application.

Optionally, the electronic apparatus can detect whether the starting position of the recognition result of the second handwriting content includes a classification field of any content classification, as shown in (a) of FIG. 11B, the second handwriting content is "Tel: 188****888", where the starting position includes the classification field "Tel" of the content classification. The electronic apparatus can determine the content classification with the classification field "Tel" as the target content classification.

Alternatively, the electronic apparatus can detect whether the ending position of the recognition result of the second handwriting content includes a classification field of any content classification. As shown in (b) of FIG. 11B, the second handwriting content is "Find a suitable target company (operations)", where the ending position includes the classification field "Operations" of the content classification. The electronic apparatus can determine the content classification with the classification field "Operations" as the target content classification.

In other scenarios, the electronic apparatus can obtain graphic recognition results of the second handwriting content. The electronic apparatus can detect whether the recognition results of the second handwriting content include a graphic of any content classification. The electronic apparatus can determine the content classification corresponding to the target graphic as the target content classification based on the target graphic included in the recognition results.

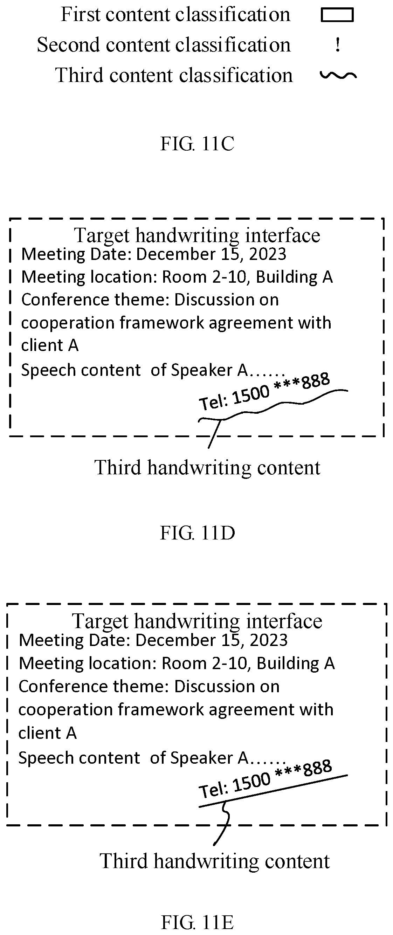

The graphics corresponding to each content classification can be configured by the user and/or by the system. The embodiments of the present application do not specifically limit the form of the graphics corresponding to the content classification. The electronic apparatus can detect whether the recognition results of the second handwriting content include a graphic corresponding to any content classification. As shown in FIG. 11C, the graphic corresponding to the first content classification can be a rectangle, the graphic corresponding to the second content classification can be an exclamation mark, and the graphic corresponding to the third content classification can be a wavy line.

In other implementations, when the electronic apparatus determines the target content classification of the second handwriting content, the electronic apparatus can determine the third handwriting content corresponding to a fourth target operation based on the detected fourth target operation, where the fourth target operation and the first target operation are associated operations.

Then, the electronic apparatus can determine the second handwriting content and the target content classification corresponding to the second handwriting content based on the recognition result of the third handwriting content. Alternatively, the electronic apparatus can determine the target content classification corresponding to the second handwriting content based on the recognition result of the third handwriting content.

The fourth target operation can be a handwriting input operation, and the handwriting content corresponding to the handwriting input operation is referred to as the third handwriting content. In some scenarios, there is a correlation between the fourth target operation and the first target operation, for example, there is a correlation between the fourth target operation and the first target operation in the time dimension. Optionally, the time of the fourth target operation can be earlier than the time of the first target operation. Alternatively, the time of the first target operation can be earlier than the time of the fourth target operation. Alternatively, the time of the fourth target operation can be within a third target period, where the starting time of the third target period is the time of the first target operation, and the duration of the third target period can be preset.

The electronic apparatus can recognize the third handwriting content through methods such as text recognition, graphic recognition, line type recognition, graphic length, and line length recognition.

The electronic apparatus can detect whether the recognition result of the third handwriting content includes a classification field of any content classification. The electronic apparatus can determine the content classification corresponding to the target classification field as the target content classification based on the target classification field included in the recognition result of the third handwriting content. Alternatively, the electronic apparatus can detect whether the recognition result of the third handwriting content includes a graphic of any content classification. The electronic apparatus can determine the content classification corresponding to the target graphic as the target content classification based on the target graphic included in the recognition result of the third handwriting content.

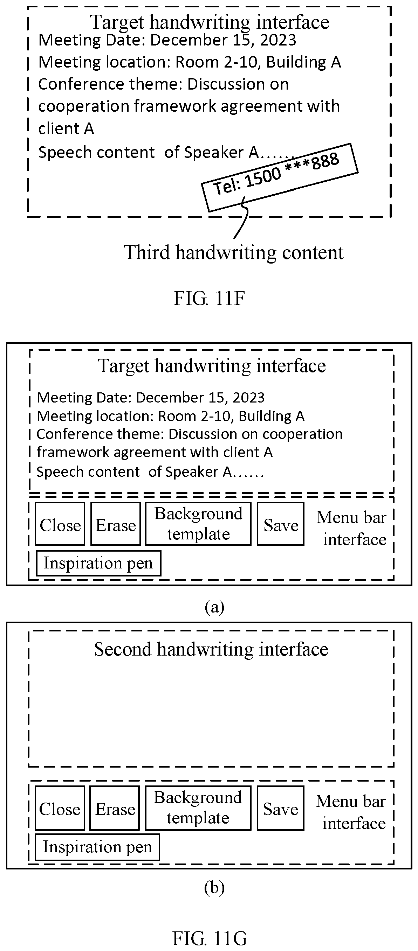

In some scenarios, as shown in FIG. 11D, the graphic of the third content classification can be a wavy line. The electronic apparatus can determine the third content classification corresponding to the wavy line as the target content classification based on the wavy line included in the graphic recognition result of the third handwriting content. As shown in FIG. 11E, the graphic of the third content classification can be a straight line. The electronic apparatus can determine the content classification corresponding to the straight line as the target content classification based on the straight line included in the graphic recognition result of the third handwriting content. As shown in FIG. 11F, the graphic of the third content classification can be a rectangle. The electronic apparatus can determine the the content classification corresponding to the rectangle as the target content classification based on the rectangle included in the graphic recognition result of the third handwriting content.

Optionally, the electronic apparatus can determine the second handwriting content based on the third handwriting content. For example, the third handwriting content can indicate the position or position range of the second handwriting content.

In some scenarios, the length of the third handwriting content can indicate the position or position range of the second handwriting content. As shown in FIG. 11D, the handwriting content near the third handwriting content, with a content length similar to the length of the wavy line is determined as the second handwriting content. Alternatively, the content within the nearest range above the wavy line is determined as the second handwriting content.

In some scenarios, the third handwriting content can form a selection range or outline. As shown in FIG. 11D, the electronic apparatus can determine the content in the third handwriting content as the second handwriting content.

Based on any of the above embodiments, after determining the target content classification, the electronic apparatus can determine the target file corresponding to the target content classification based on a preset correspondence between the content classification and the file, and store the content data to the target file. Optionally, since one content classification information represents one content classification, the correspondence between the content classification and the file can be implemented as a correspondence between content classification information and files.

In some scenarios, the electronic apparatus can open a target file and display a second handwriting content in a second handwriting interface. As shown in FIG. 11G, the second handwriting interface is different from the aforementioned target handwriting interface. The second handwriting interface is only a interface for displaying the second handwriting content. FIG. 11G (a) shows a first user interface, and the first user interface can include a target handwriting interface and a menu bar interface. After opening the target file, the electronic apparatus displays a second user interface, and the second user interface includes a second handwriting interface and a menu bar interface.

Optionally, after opening a target file on the electronic apparatus, the second handwriting interface can only display a second handwriting content and does not accept a handwriting input. Alternatively, the second handwriting interface can display a second handwriting content and also accept a handwriting input, such as editing the second handwriting content, such as adding, modifying, deleting, and other editing operations.

In the embodiments of the present application, a handwriting content corresponding to a first handwriting requirement is stored in a first file, and a handwriting content corresponding to a second handwriting requirement is stored to a target file. The first file and the target file are two different files.

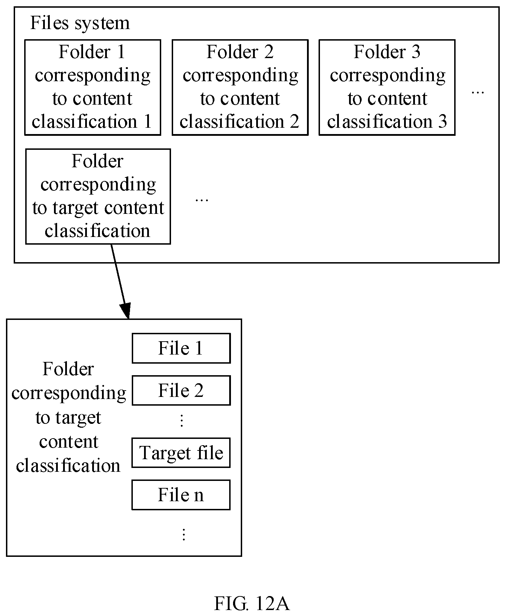

In some implementations, the target file is a file. The user can find the target file from the file corresponding to the target content classification, in a file system of the electronic apparatus. As shown in FIG. 12A, the target file can be opened in the folder corresponding to the target content classification to which the target file belongs.

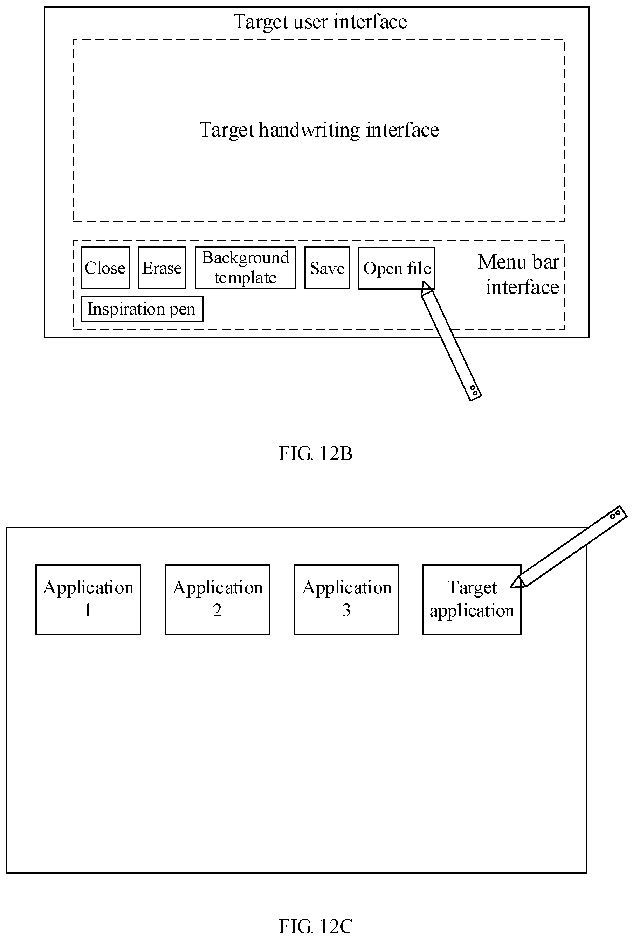

In other implementations, as shown in FIG. 12B, the target user interface includes a menu bar interface and a target handwriting interface, and the target handwriting interface is also the handwriting interface for the first handwriting requirement. The menu bar interface can include but is not limited to a stylus button (used to start handwriting functions or adjust handwriting thickness, color, and other parameters), erase button, background adjustment button, save button, and so on. Multiple buttons in the menu bar interface can be arranged and displayed in rows or columns.

The menu bar interface can also include an open file button. Users can activate the function of opening folders on the electronic apparatus by pressing the open file button. Optionally, the electronic apparatus can open a first folder in response to the operation on the open file button, where the first folder includes folders corresponding to each content classification. Users can open the folder corresponding to the target content classification in the first folder, and then find and open the target file in the target folder.

In some implementations, as shown in FIG. 12C, the electronic apparatus is preset with one or more target applications. The user can open a target application to access a target file. For example, after the user clicks on an icon of a target application, the electronic apparatus can display folders corresponding to each content classification in a first folder. After the user clicks on a target folder corresponding to a target content classification, the electronic apparatus can display files in the target folder. After the user clicks on the file, the electronic apparatus can display a third user interface, the third user interface can include a handwriting interface for displaying the selected file. The handwriting interface displays the handwriting content or the recognition result corresponding to the handwriting content in the selected file. Optionally, the third user interface can also include a menu bar. The user can perform editing operations in the handwriting interface, such as adding, modifying, deleting, and other editing operations.

Based on any aforementioned embodiment of the method for determining the second handwriting content using the electronic apparatus, the electronic apparatus can display the handwriting content corresponding to the handwriting input after the second handwriting content in the target handwriting interface, and store the handwriting content as the content of the first handwriting requirement. The electronic apparatus can determine the next second handwriting content based on the next first target operation, clear the next second handwriting content from the target handwriting interface, and store the next second handwriting content in another target file.

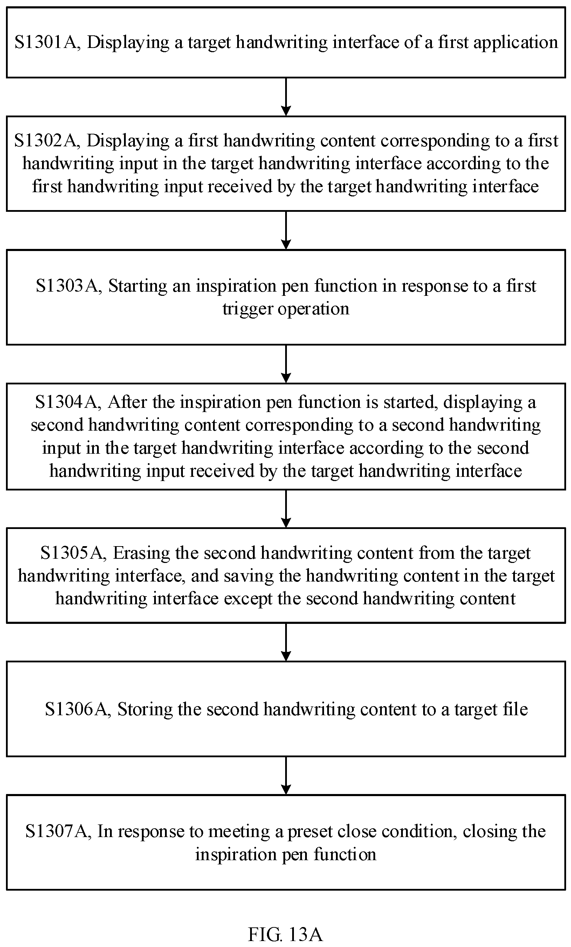

Based on the functions or capabilities provided by the the electronic apparatus in the aforementioned embodiments, FIG. 13A exemplarily illustrates a handwriting content processing method that can be executed by an electronic apparatus. The method can include the following steps.

S1301A, Displaying a target handwriting interface of a first application.

The electronic apparatus can activate the first application in response to an operation of starting the first application by the user. The first application can be a handwriting application. Alternatively, the first application is an application displayed before the electronic apparatus is locked, and the electronic apparatus can continue to display the first application after unlocking.

S1302A, Displaying a first handwriting content corresponding to a first handwriting input in the target handwriting interface according to the first handwriting input received by the target handwriting interface.

For example, the electronic apparatus can receive touch trajectory points (sequences) input by users on surfaces of display devices through touch components, generate and display the first handwriting content.

S1303A, Starting an inspiration pen function in response to a first trigger operation.

Optionally, the first trigger operation can be the first target operation in the aforementioned embodiments.

S1304A, After the inspiration pen function is started, displaying a second handwriting content corresponding to a second handwriting input in the target handwriting interface according to the second handwriting input received by the target handwriting interface.

S1305A, Erasing the second handwriting content from the target handwriting interface, and saving the handwriting content in the target handwriting interface except the second handwriting content.

The process of executing step S1305A on the electronic apparatus can refer to the relevant introduction of any of the aforementioned embodiments, and will not be repeated here.

S1306A, Storing the second handwriting content to a target file.

The process of executing step S1306A on the electronic apparatus can refer to the relevant introduction of any of the aforementioned embodiments, and will not be repeated here.

S1307A, In response to meeting a preset close condition, closing the inspiration pen function.

Optionally, the inspiration pen function can be a continuous function. When the electronic apparatus detects the second trigger operation, the inspiration pen function can be closed. The preset close condition can be the detection of a second trigger operation. For example, the second trigger operation can be the aforementioned second target operation.

Alternatively, the inspiration pen function can be a time sensitive function. The electronic apparatus can determine that the inspiration pen function has been activated for a preset activation duration and can close the inspiration pen function. The preset close condition can be that the duration after detecting the activation of the inspiration pen function reaches the preset activation duration.

Alternatively, the preset close condition is that the target handwriting interface does not receive a handwriting input within a preset duration after detecting the activation of the inspiration pen function. The electronic apparatus can close the inspiration pen function.

In the embodiments of the present application,the step 1305A and step 1306A can be synchronous or asynchronous. The order of execution of these two steps can be either to execute step S1305A first, followed by execution of the substantive step S1306A, or to execute step S1306A first, followed by execution of the substantive step S1305A. The embodiments of the present application does not make specific limitations on this.

Optionally, while the electronic apparatus clears the second handwriting content, the electronic apparatus can also store the second handwriting content to the target file.

After closing the inspiration pen function, the handwriting content corresponding to any handwriting input can be displayed in the target handwriting interface according to the any handwriting input received by the target handwriting interface.

In the embodiments of the present application, the target handwriting interface of the first application can be understood as the handwriting interface for the user to perform the first handwriting requirement. Starting the inspiration pen function can reflect users' temporary handwriting requirements, such as second handwriting requirements. The target handwriting interface mainly serves the first handwriting requirements. The target handwriting interface can temporarily serve second handwriting requirements. Therefore, after displaying the second handwriting content in the target handwriting interface, the second handwriting content will be cleared. At the same time, to manage the second handwriting content, the second handwriting content can be stored. After closing the inspiration pen function, the target handwriting interface can continue to serve the first handwriting requirements.

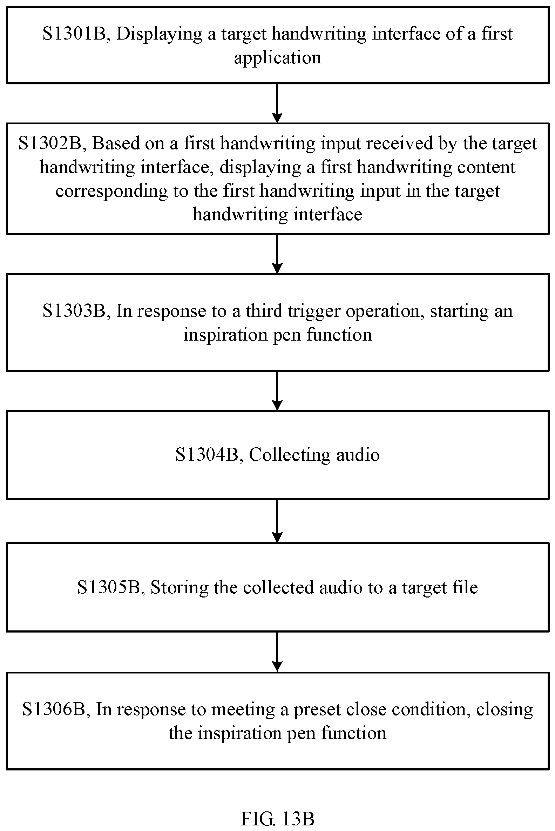

Based on the functions or capabilities provided by the the electronic apparatus in the aforementioned embodiments, FIG. 13B exemplarily illustrates a handwriting content processing method that can be executed by an electronic apparatus. The method can include the following steps.

S1301B, Displaying a target handwriting interface of a first application.

S1302B, Based on a first handwriting input received by the target handwriting interface, displaying a first handwriting content corresponding to the first handwriting input in the target handwriting interface.

S1303B, In response to a third trigger operation, starting an inspiration pen function.

Optionally, the third trigger operation can be the aforementioned first target operation. The electronic apparatus can generate a record input box. The electronic apparatus can display the record input box in the target handwriting interface. Alternatively, the electronic apparatus can display user interface partitions. Here, one display partition displays the record input box, and the other display partition can display the target handwriting interface.

S1304B, Collecting audio.

S1305B, Storing the collected audio to a target file.

Optionally, the electronic apparatus can recognize the collected audio, such as speech recognition, natural language processing, etc., automatically extract the recognized content into a summary and store the summary. Optionally, the electronic apparatus can classify and store the audio based on its recognition results.

Optionally, the electronic apparatus can display the content recognized based on the collected audio in the target handwriting interface. Then, the electronic apparatus can clear the content recognized based on the collected audio from the target handwriting interface.

Optionally, the electronic apparatus can classify and store the collected audio content. The electronic apparatus can perform text recognition on the voice text of collected audio, and the classification field included in the voice text serves as the target classification field. The electronic apparatus can detemine the content classification corresponding to the target classification field as the target content classification. The electronic apparatus can determine the file corresponding to the target content classification as the target file according to a correspondence between content classification and files.

S1306B, In response to meeting a preset close condition, closing the inspiration pen function.

Optionally, the inspiration pen function can be a continuous function. When the electronic apparatus detects the second trigger operation, the inspiration pen function can be closed. The preset close condition can be the detection of a second trigger operation. For example, the second trigger operation can be the aforementioned second target operation.

Alternatively, the inspiration pen function can be a time sensitive function. The electronic apparatus can determine that the inspiration pen function has been activated for a preset activation duration and can close the inspiration pen function. The preset close condition can be that the duration after detecting the activation of the inspiration pen function reaches the preset activation duration.

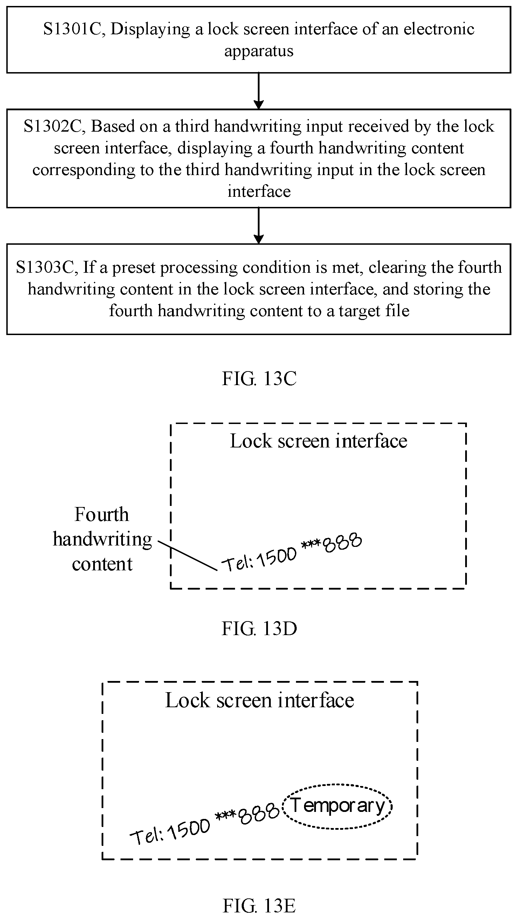

Based on the functions or capabilities provided by the the electronic apparatus in the aforementioned embodiments, FIG. 13C exemplarily illustrates a handwriting content processing method that can be executed by an electronic apparatus. The method may include the following steps.

S1301C, Displaying a lock screen interface of an electronic apparatus.

Optionally, the electronic apparatus can display the lock screen interface of the electronic apparatus in response to a wake-up operation. The lock screen interface can be used for displaying a password input interface or a fixed display image or image collection interface. Optionally, the lock screen interface can display status information of the electronic apparatus, such as battery level status, charging status, network connection status, etc.

The lock screen interface is also used to receive handwriting input. The user can unlock by manually entering their password on the lock screen interface. The user can unlock by operating a virtual keyboard displayed in the lock screen interface. In the embodiments of the present application, the password may include but is not limited to: numbers, text, letters, graphics, etc. The user can manually input the password for unlocking on the lock screen interface.

Optionally, the wake-up operation can be an operation of opening a leather case (a protective case) of the electronic apparatus for the user, and a photosensitive sensor of the electronic apparatus can detect this operation. Alternatively, the wake-up operation can be an operation on a physical key on an electronic apparatus. For example, the wake-up operation can be a pressing operation on a physical key on an electronic apparatus. For example, the wake-up operation can be one or more sliding operations or one or more clicking operations on a touch display of the electronic apparatus. The present application does not impose too many restrictions on this.

S1302C, Based on a third handwriting input received by the lock screen interface, displaying a fourth handwriting content corresponding to the third handwriting input in the lock screen interface.

S1303C, If a preset processing condition is met, clearing the fourth handwriting content in the lock screen interface, and storing the fourth handwriting content to a target file.

In some application scenarios, users may have temporary, urgent, or sudden handwriting requirements while their electronic apparatuses are locked. If users unlock their the electronic apparatuses first and then open handwriting applications to record their handwriting requirements, it will cause great inconvenience.

In view of this, in the handwriting content processing method provided in the embodiments of the present application, the lock screen interface can receive handwriting input and display the handwriting content corresponding to the received handwriting input (referred to as the third handwriting input) on the lock screen interface, meeting temporary, emergency, or sudden handwriting requirements.

In one possible design, as shown in FIG. 13D, the electronic apparatus displays a fourth handwriting content corresponding to the third handwriting input in the lock screen interface according to the third handwriting input received by the lock screen interface, and the electronic apparatus can respond to a sixth target operation to display the fourth handwriting content corresponding to the third handwriting input in the lock screen interface according to the third handwriting input received by the lock screen interface.

In some embodiments, the fifth target operation can include any of the following operations:
a seventh preset operation on a physical structure of an electronic apparatus;
an eighth preset operation for at least one virtual key displayed on the electronic apparatus;
a ninth preset operation for a touch display device of the electronic apparatus;
a preset third voice control operation;
a preset third gesture control operation;
an operation of sending a third indication signal to the electronic apparatus.

In some possible scenarios, the fifth target operation can include a seventh preset operation on the physical structure of the electronic apparatus. Optionally, the physical structure of the electronic apparatus can be a hardware button, as shown in (a) of FIG. 6A. The seventh preset operation can include but is not limited to: pressing a hardware key, continuously pressing the hardware key multiple times, and holding the hardware key for a preset duration. Alternatively, the physical structure of the electronic apparatus can be a knob, as shown in (b) of FIG. 6A, the seventh preset operation can include but is not limited to: rotating the knob to a first preset position. Alternatively, the physical structure of the electronic apparatus can be a switch, as shown in (c) of FIG. 6A, and the seventh preset operation can include but is not limited to: placing the switch in an open or closed state. Alternatively, the physical structure of the electronic apparatus can be a touch bar, and the seventh preset operation can include but is not limited to touch operations on the touch bar such as single clicking, double clicking, long pressing, or sliding on the touch bar. Optionally, the touch bar can be replaced with a touchpad.

In other possible scenarios, the fifth target operation can include an eighth preset operation on at least one virtual key displayed in the lock screen interface of the electronic apparatus. The fifth target operation can be the eighth preset operation for at least one virtual key of the inspiration pen function displayed on the electronic apparatus by the user. Optionally, users can perform the eighth preset operation on the virtual key through an instruction input device. The instruction input device can include but is not limited to touch screens, active or passive touch pens, handwriting pens, and other input devices. The eighth preset operation can include but is not limited to: single click on the virtual key, continuous click on the virtual key, dragging the virtual key according to a preset manner, or long pressing the virtual key for a preset duration.

In some possible scenarios, as shown in FIG. 6C, the fifth target operation can include a ninth preset operation on a touch display device of the electronic apparatus. Optionally, the touch display device can be implemented as a touch screen. The ninth preset operation can include but is not limited to: sliding on the touch screen to form a trajectory, sliding on the touch screen to form a graphic.

In some possible scenarios, the fifth target operation can include a preset third voice control operation. The electronic apparatus can have audio capture capabilities. The electronic apparatus can detect the user's preset first voice control operation on the electronic apparatus. For example, the electronic apparatus can capture audio and recognize that the audio includes a first preset voice command. The first preset voice command can include, but is not limited to, voice content with the same or similar meanings such as "starting inspiration pen mode", "entering inspiration pen mode", "switching inspiration pen mode", etc.

In some possible scenarios, the fifth target operation can include a preset third gesture control operation. The electronic apparatus can have image capture capabilities and gesture recognition capabilities. Users can make a preset third gesture control operation by performing an air gesture within an image capture range of the electronic apparatus. The electronic apparatus can detect whether a user has made a preset third gesture control operation by detecting whether the collected image includes a preset gesture. Optionally, in this implementation, the air gesture can be a static gesture or a dynamic gesture.

In some possible scenarios, the fifth target operation can include an operation of sending a third indication signal to an electronic apparatus. The electronic apparatus can have signal reception capabilities. The electronic apparatus can detect received signals. If the electronic apparatus detects a first indication signal, it can determine that the fifth target operation has been detected. Optionally, as shown in FIG. 6D, the electronic apparatus can interact with an input device of a touch pen type. The third indication signal can be a signal sent by the input device of the touch pen type. Users can trigger the input device of the touch pen type to send a third indication signal to the electronic apparatus through a preset operation on the input device of the touch pen type, causing the electronic apparatus to switch to the inspiration pen mode. Optionally, users can perform a preset operation on the input device of the touch pen type, which can be at least one press operation on a button on the input device of the touch pen type, or at least one touch operation on a designated position of the input device of the touch pen type, or shaking, rocking, or rotating the input device of the touch pen type in a predetermined manner. The embodiments of the present application do not make specific limitations on this.

The electronic apparatus and the input device of the touch pen type can exchange information based on a preset protocol. The embodiments of the present application do not specifically limit the data transmission protocol or communication protocol for the interactive information. In some application scenarios, the input device of the touch pen type can be an active touch pen.

The following is an introduction to the working process of determining the fourth handwriting content on the electronic apparatus. The electronic apparatus can use, but is not limited to, any one or more of the following implementations to determine the fourth handwriting content.

Method 1-0, the electronic apparatus can directly determine the handwriting content corresponding to the third handwriting input received by the lock screen interface as the fourth handwriting content.

Method 1-1, when the electronic apparatus determines the fourth handwriting content displayed in the lock screen interface, the electronic apparatus can determine the fourth handwriting content based on the first target operation. The electronic apparatus can determine the handwriting content corresponding to the second handwriting input received by the lock screen interface during a fourth target period as the fourth handwriting content, where the starting time of the fourth target period is the time when the first target operation is detected.

For example, the electronic apparatus can determine the handwriting input with an input time during the fourth target period as the fourth handwriting content. Or, the target handwriting interface can receive a portion of the fourth handwriting content during the fourth target period. The electronic apparatus can determine the fourth handwriting content based on the handwriting input received within the fourth target period on the target handwriting interface and the continuous handwriting input of the handwriting input.

Optionally, the duration of the fourth target period is a preset second duration. Optionally, the second duration can be 1 minute or 30 seconds.

Method 1-2, when the electronic apparatus determines the fourth handwriting content displayed in the lock screen interface, the electronic apparatus can determine the fourth handwriting content based on a fifth target operation and a sixth target operation. The electronic apparatus can determine the handwriting content corresponding to the handwriting input received by the lock screen interface during a fifth target period based on the detected sixth target operation as the fourth handwriting content. The starting time of the fifth target period is the time when the fifth target operation is detected, and the ending time of the fifth target period is the time when the sixth target operation is detected.

Optionally, the fifth target operation can be the same as the aforementioned first target operation, and the sixth target operation can be the same as the aforementioned second target operation. Alternatively, the fifth target operation may be the same as the aforementioned second target operation, and the sixth target operation may be the same as the aforementioned first target operation.

Method 1-3, when the electronic apparatus determines the fourth handwriting content displayed in the lock screen interface, the electronic apparatus can determine a selection range corresponding to a seventh target operation based on the detected seventh target operation, and determine the content in the selection range as the fourth handwriting content. In some scenarios, the content within the selection range may be a portion of the handwriting content displayed on the target display interface. In other scenarios, the content within the selection range can be from the first handwriting content.

In this embodiment, the electronic apparatus can determine the selection range corresponding to the seventh target operation based on the detected seventh target operation, which can refer to the above embodiments in which the electronic apparatus determines the selection range corresponding to the third target operation based on the third target operation, which will not be repeated here.

In one possible implementation, the handwriting content processing method can further include: after the electronic apparatus determines the fourth handwriting content, the electronic apparatus can generate or display a reminder information to indicate whether the user needs to adjust the fourth handwriting content. After determining the fourth handwriting content, the electronic apparatus can generate reminder information to remind the user to check or view whether the determined fourth handwriting content is accurate. Here, the reminder information can indicate the fourth handwriting content.

In this embodiment, the electronic apparatus generates reminder information to indicate the fourth handwriting content, which can refer to the implementation process of the electronic apparatus generating reminder information to indicate the second handwriting content in the above embodiments, which will not be repeated here.

The following is an introduction to the working process of clearing the fourth handwriting content in a lock screen interface of the electronic apparatus. The electronic apparatus can use, but are not limited to, any one or more of the following operations to clear the fourth handwriting content from the lock screen interface.

Method 2-1, before the electronic apparatus determines the fourth handwriting content displayed on the lock screen interface based on the fifth target operation, and after detecting the fifth target operation, the electronic apparatus can determine the fourth handwriting content corresponding to the third handwriting input in the lock screen interface according to the third handwriting input received on the lock screen interface, and display the fourth handwriting content or the recognition result corresponding to the fourth handwriting content.

The electronic apparatus can utilize or create a second layer, and the second layer is used for displaying a preset content of a lock screen interface. When the electronic apparatus display the fourth handwriting content, a new layer can be added, and the newly added layer is referred to as a target layer, and the target layer is used for displaying the fourth handwriting content. The electronic apparatus can display the fourth handwriting content on the lock screen interface by displaying the target layer. It can be seen that the target layer is a layer different from the aforementioned second layer.

Optionally, the electronic apparatus can add a target layer after determining the fourth handwriting content. Alternatively, the electronic apparatus can display the fourth handwriting content on the lock screen interface in response to detecting the fifth target operation. When clearing the fourth handwriting content from the lock screen interface of the electronic apparatus, it can be achieved by removing the target layer. The electronic apparatus do not clear the second layer used for displaying the preset content of the lock screen interface, in order to preserve the preset content of the lock screen interface in the lock screen interface.

In some application scenarios, after detecting the fifth target operation, the electronic apparatus indicates a content of a temporary handwriting requirement based on the time of detecting the fifth target operation. The electronic apparatus can determine the handwriting content corresponding to the handwriting input received on the lock screen interface during the fourth target period as the handwriting content corresponding to the temporary handwriting requirement. Alternatively, the electronic apparatus can determine the handwriting content corresponding to the handwriting input received on the lock screen interface during the fifth target period based on the detected sixth target operation as the fourth handwriting content. The electronic apparatus can add a target layer based on detecting the fifth target operation. The target layer is used for displaying the fourth handwriting content. For example, the electronic apparatus can create a new target view object and draw a fourth handwriting content on target view object to add a target layer. The electronic apparatus can draw a fourth handwriting content on a layer or canvas of the target view object. The electronic apparatus can clear the fourth handwriting content from the lock screen interface by removing the target layer. For example, the electronic apparatus can close the target view object to clear the target layer.

In some application scenarios, the electronic apparatus can generate handwritten handwriting based on each reporting points data corresponding to the handwriting content. Alternatively, the electronic apparatus can generate handwritten handwriting based on each reporting points data corresponding to the handwriting content and a preset processing algorithm. The preset processing algorithm may include but is not limited to a smoothing correction algorithm, an interpolation algorithm, etc., such as using Bezier curves for smoothing and interpolation. The preset processing algorithm may also include a handwriting generation algorithm. For example, The handwriting generation algorithm can include but is not limited to an algorithm based on line width and/or pen strokes. In some implementations, line width information of the handwriting content can be determined by speed information or pressure information in the reporting points data of the handwriting content. The electronic apparatus can obtain pressure information for each touch point through an active pen. The greater the pressure is, the wider the line width is. The smaller the pressure is, the smaller the line width is. In other implementations, the line width information of the handwriting content can be determined by the speed information in the reporting points data of the handwriting content. The higher the speed is, the smaller the line width is. For example, the algorithm based on brush strokes can achieve stroke effects such as non white, falling, and finishing brush strokes.

The screen reporting points data file can be used to record each screen reporting points data in the target handwriting interface. That is, the screen reporting points data file can be used to record the reporting points data of the handwriting content in the handwriting interface when the user makes the first handwriting request. Temporary handwriting requirements can also be inputted through the target handwriting interface, and the screen reporting points data file can record reporting points data corresponding to the temporary handwriting requirements. The electronic apparatus can display the handwriting content in the target handwriting interface based on screen reporting points data files, and can also display the handwriting content corresponding to temporary handwriting requirements, that is, the second handwriting content.

Method 2-2, the electronic apparatus can clear the second handwriting content from the target handwriting interface by clearing, removing, deleting, detaching, moving out, or transferring the reporting points data of the second handwriting content from the screen reporting points data file.

In one possible design, the electronic apparatus can determine whether the electronic apparatus meets a preset processing condition. Optionally, the preset processing condition may include but is not limited to at least one of the following conditions.

Condition 1: a duration of not receiving any other handwriting input after displaying the fourth handwriting content on the lock screen interface reaches a third duration.

Condition 2: a user's operation of a save button on the electronic apparatus is detected. Optionally, the save button can be a physical button or a virtual key displayed on the electronic apparatus.

Condition 3: a user's operation of a lock screen button on the electronic apparatus is detected. Optionally, the lock screen button can be a physical button or a virtual key displayed on the electronic apparatus. When the electronic apparatus is in an unlocked state, the user can lock the electronic apparatus by the operation of the lock screen button.

Condition 4: a fourth handwriting content includes a preset unlock password. The electronic apparatus can recognize the fourth handwriting content and determine whether the fourth handwriting content includes a preset unlock password, which can also be understood as an authentication operation.

Condition 5: a preset third voice control operation is detected. The electronic apparatus can have audio capture capabilities. The electronic apparatus can detect a user's preset fourth voice control operation on the electronic apparatus. For example, the electronic apparatus can collect audio and recognize a fourth preset voice command included in the audio. The fourth preset voice command may include, but is not limited to, voice content with the same or similar meanings such as "save content" and "input completed".

Condition 6: a preset third gesture control operation is detected. The electronic apparatus can have image capture capabilities and gesture recognition capabilities. The user can make the preset third gesture control operation by performing an air gesture within an image capture range of the electronic apparatus. The electronic apparatus can detect whether a user has made a preset third gesture control operation by detecting whether the collected image includes a preset gesture. Optionally, in this implementation, the air gesture can be a static gesture or a dynamic gesture.

Condition 7: an operation of the electronic apparatus receiving a third indication signal is detected. The electronic apparatus can have signal reception capabilities. The electronic apparatus can detect received signals. Optionally, the electronic apparatus can interact with an input device of a handwriting pen type. The third indication signal can be a signal sent by the input device of the handwriting pen type. The user can trigger the input device of the handwriting pen type to send a third indication signal to the electronic apparatus through a preset operations on the input device of the handwriting pen type.

Condition 8: an eighth preset operation on a touch display device of the electronic apparatus is detected. Optionally, the touch display device can be implemented as a touch screen. The eighth preset operation may include but is not limited to: sliding on the touch screen to form a trajectory, sliding on the touch screen to form a graphic.

In some implementations, if the electronic apparatus is in a locked state after clearing the fourth handwriting content from the lock screen interface, the user cannot view the third file on the lock screen interface. After the electronic apparatus is in an unlocked state, the third file can be viewed.

In some application scenarios, the user can perform a third input operation through the lock screen interface multiple times continously. The fourth handwriting content corresponding to each third input operation can be stored in the same target file. Alternatively, the handwriting content corresponding to each third input operation can be stored separately in different target files.

In one possible implementation, the electronic apparatus can display a password input interface in response to the detection of an operation of the user on a save button on the electronic apparatus. The user performs a decryption operation in the password input interface. After unlocking, the electronic apparatus stores the third file. Optionally, the save button can be a physical button or a virtual key displayed in the lock screen interface of the electronic apparatus.

In one possible implementation, in order to improve the security and reliability of the electronic apparatus, the electronic apparatus can store the fourth handwriting content in the third file when a preset storage condition is met. Optionally, the preset storage condition may include but is not limited to the fourth handwriting content including an unlock password or a save instruction field.

The electronic apparatus can recognize the fourth handwriting content and determine whether the fourth handwriting content includes a preset unlock password or save instruction field, which can also be understood as an authentication operation. The electronic apparatus can store the fourth handwriting content in a third file when a preset unlock password is included in the fourth handwriting content. Alternatively, the electronic apparatus can store the fourth handwriting content in a third file upon determining that the fourth handwriting content includes a preset save instruction field.

The save instruction field can be customized and configured by the user, and can be used to instruct the electronic apparatus to save the handwriting content corresponding to the handwriting operation entered in the lock screen interface. This design allows the electronic apparatus to display the fourth handwriting content corresponding to the third handwriting input in the lock screen interface, without displaying an unlock password of the electronic apparatus, thereby improving the security of the electronic apparatus. In some scenarios, the save instruction field can be "temporary". As shown in FIG. 13E, the dashed ellipse indicates the save instruction field "temporary". The electronic apparatus can detect whether the fourth handwriting content includes "temporary", and if the electronic apparatus determines that the fourth handwriting content includes "temporary", the fourth handwriting content is stored to the target file. On the contrary, if the electronic apparatus determines that the fourth handwriting content does not include "temporary", the fourth handwriting content will not be stored.

In one possible implementation, the electronic apparatus may store the fourth handwriting content in a temporary file. In the interface displayed after unlocking the electronic apparatus (the interface can be a system desktop launcher interface or an interface displayed before locking the electronic apparatus), the target window is displayed. The target window is used for the operation interface of temporary files, such as opening, browsing, storing, and saving operations.

The electronic apparatus can display, modify, add, erase, delete, and transfer the fourth handwriting content through a target window. The electronic apparatus can store the fourth handwriting content in the target window into a third file. In some application scenarios, the user can perform a third input operation through a lock screen interface multiple times continuously. The fourth handwriting content corresponding to each third input operation can be stored in the same temporary file. Alternatively, the fourth handwriting content corresponding to each third input operation can be stored separately in different temporary files.

In some implementations, the electronic apparatus can store the content of the fourth handwriting content other than the unlock password in a third file when the fourth handwriting content includes a preset unlock password, thereby improving the security and reliability of the use of the device.

In one possible implementation, the electronic apparatus can store the content data corresponding to the fourth handwriting content in a third file. The content data corresponding to the handwriting content can adopt any one or more data formats, and/or any one or more file formats. The embodiments of the present application does not specifically limit the form of content data corresponding to the handwriting content.

Optionally, the content data of the fourth handwriting content includes images of the fourth handwriting content, or the content data of the fourth handwriting content includes reporting points data corresponding to the fourth handwriting content, or the content data of the fourth handwriting content includes recognition results corresponding to the fourth handwriting content.

In some implementations, the electronic apparatus can obtain the recognition result of the fourth handwriting content. The way in which the electronic apparatus obtains the recognition result of the handwriting content can be combined with the relevant introductions in the above embodiments, which will not be repeated here. Optionally, the electronic apparatus can recognize the fourth handwriting content. Alternatively, the electronic apparatus can receive the recognition result of the fourth handwriting content provided by the server.

In one possible implementation, when the electronic apparatus stores the content data corresponding to the fourth handwriting content to the target file, the content data corresponding to the fourth handwriting content can be stored in a designated folder, such as the folder corresponding to the inspiration pen function.

In another possible implementation, when the electronic apparatus stores the content data corresponding to the fourth handwriting content to the target file, the electronic apparatus can perform classification and storage operations on the fourth handwriting content. The electronic apparatus can determine the target file according to the content classification corresponding to the fourth handwriting content. Then the electronic apparatus can store the content data of the fourth handwriting content to the target file.

The electronic apparatus can be set with multiple content classifications. One content classification corresponds to one file, and different content classifications correspond to different files. The electronic apparatus can determine a target content classification corresponding to a fourth handwriting content. Then, based on a preset correspondence between content classifications and files, a target folder corresponding to the target content classification is determined. The electronic apparatus can store the content data of the fourth handwriting content to the target file.

In some scenarios, the target file can be implemented as a folder (also known as a file directory). Multiple files can be saved in one folder. For example, a phone number in an address book folder can be implemented as a file. For example, a to-do item in a to-do list folder is implemented as a file.

The file directory generally refers to a hierarchical structure in a computer system used to organize and store files and folders, commonly known as folders. The file directory is a tree like structure consisting of multiple directories and files, used to assist users in organizing and accessing data stored on a computer. In the file directory, each directory or folder can contain other sub-directories and files.

In other scenarios, the target file can be implemented as a file. One file includes contents stored in a predetermined order. When displaying multiple contents in a file, there is no content overlap. Or, multiple contents do not overlap in their displayed positions.

In some scenarios, the number of multiple content classifications can be configured or set by the user. Or the number of content classifications is pre-configured by the electronic apparatus. In some scenarios, in the correspondence between content classifications and files, any one of the content classifications can be customized and configured by the user, and any one of the content classifications can be pre-configured by the electronic apparatus.

Optionally, content classification information of a content classification can represent that content classification. The content classification information includes at least one of the following: a classification field, a graphic. The content classification information can include a classification field. Alternatively, the content classification information can include a graphic. Alternatively, the content classification information can include a classification field and a graphic.

The classification field in the content classification information of a content classification can represent the content classification. The graphic in the content classification information of a content classification can also represent the content classification. A classification field can uniquely represent a content classification. A graphic can uniquely represent a content classification. Optionally, the content classification information of any one of multiple content classifications can be configured by the system by default or customized by the user. For example, the user can configure a classification field for any content classification. The user can configure a graphic for any content classification.

In some implementations, when the electronic apparatus displays a lock screen interface, the electronic apparatus can display a virtual key in an inspiration pen mode. By clicking on the virtual key in the inspiration pen mode, the electronic apparatus displays a secondary menu of the inspiration pen mode, and the secondary menu can include virtual keys corresponding to each content classification in multiple content classifications. One content classification corresponds to one virtual key, and different content classifications correspond to different virtual keys. Optionally, the virtual key corresponding to the content classification can display a classification field of that content classification. The above fifth target operation can be an operation of a virtual key corresponding to any content classification, such as a click operation.

If the fifth target operation is an operation on a target virtual key among the virtual keys corresponding to multiple content classifications, the electronic apparatus can determine a content classification corresponding to the target virtual key as the target content classification based on a preset correspondence between multiple content classifications and virtual keys.

In other implementations, the electronic apparatus can determine the target content classification based on the recognition results of the fourth handwriting content. The electronic apparatus can determine the content classification corresponding to the target content classification information in the recognition result of the fourth handwriting content as the target content classification.

In some scenarios, the electronic apparatus can obtain text recognition results of the fourth handwriting content. The electronic apparatus can detect whether the recognition result of the fourth handwriting content includes a classification field for any content classification. The electronic apparatus can determine the content classification corresponding to the target classification field as the target content classification based on the target classification field included in the recognition result.

For example, the classification field of the content classification can be configured as "Tel", "Address", "Operations", or "To-do items", etc. The classification field of the content classification can be configured by the user and/or by the system, and the form of the classification field of the content classification is not specifically limited in the embodiments of the present application.

Optionally, the electronic apparatus can detect whether the starting position of the recognition result of the fourth handwriting content includes a classification field of any content classification, as shown in (a) of FIG. 11B, the fourth handwriting content is "Tel: 188****888", where the starting position includes the classification field "Tel" of the content classification. The electronic apparatus can determine the content classification with the classification field "Tel" as the target content classification.

Alternatively, the electronic apparatus can detect whether the ending position of the recognition result of the fourth handwriting content includes a classification field of any content classification. As shown in (b) of FIG. 11B, the fourth handwriting content is "Find a suitable target company (operations)", where the ending position includes the classification field "Operations" of the content classification. The electronic apparatus can determine the content classification with the classification field "Operations" as the target content classification.

In other scenarios, the electronic apparatus can obtain graphic recognition results of the fourth handwriting content. The electronic apparatus can detect whether the recognition results of the fourth handwriting content include a graphic of any content classification. The electronic apparatus can determine the content classification corresponding to the target graphic as the target content classification based on the target graphic included in the recognition results.

The graphics corresponding to each content classification can be configured by the user and/or by the system. The embodiments of the present application do not specifically limit the form of the graphics corresponding to the content classification. The electronic apparatus can detect whether the recognition results of the fourth handwriting content include a graphic corresponding to any content classification. As shown in FIG. 11C, the graphic corresponding to the first content classification can be a rectangle, the graphic corresponding to the second content classification can be an exclamation mark, and the graphic corresponding to the third content classification can be a wavy line.

In other implementations, when the electronic apparatus determines the target content classification of the fourth handwriting content, the electronic apparatus can determine the fifth handwriting content corresponding to an eighth target operation based on the detected eighth target operation, where the eighth target operation and the fifth target operation are associated operations.

Then, the electronic apparatus can determine the fourth handwriting content and the target content classification corresponding to the fourth handwriting content based on the recognition result of the fifth handwriting content. Alternatively, the electronic apparatus can determine the target content classification corresponding to the fourth handwriting content based on the recognition result of the fifth handwriting content.

The eighth target operation can be a handwriting input operation, and the handwriting content corresponding to the handwriting input operation is referred to as the fifth handwriting content. In some scenarios, there is a correlation between the eighth target operation and the fifth target operation, for example, there is a correlation between the eighth target operation and the fifth target operation in the time dimension. Optionally, the time of the eighth target operation can be earlier than the time of the fifth target operation. Alternatively, the time of the fifth target operation can be earlier than the time of the eighth target operation. Alternatively, the time of the eighth target operation can be within a third target period, where the starting time of the third target period is the time of the fifth target operation, and the duration of the third target period can be preset.

The electronic apparatus can recognize the fifth handwriting content through methods such as text recognition, graphic recognition, line type recognition, graphic length, and line length recognition.

The electronic apparatus can detect whether the recognition result of the fifth handwriting content includes a classification field of any content classification. The electronic apparatus can determine the content classification corresponding to the target classification field as the target content classification based on the target classification field included in the recognition result of the fifth handwriting content. Alternatively, the electronic apparatus can detect whether the recognition result of the fifth handwriting content includes a graphic of any content classification. The electronic apparatus can determine the content classification corresponding to the target graphic as the target content classification based on the target graphic included in the recognition result of the fifth handwriting content.

Optionally, the electronic apparatus can determine the fourth handwriting content based on the fifth handwriting content. For example, the fifth handwriting content can indicate the position or position range of the fourth handwriting content. In some scenarios, the length of the fifth handwriting content can indicate the position or position range of the fourth handwriting content. In some scenarios, the content in the fifth handwriting content is determined as the fourth handwriting content.

The handwriting content processing method provided in this embodiment can also be combined with some of the operations in the handwriting content processing method provided in the above embodiments.

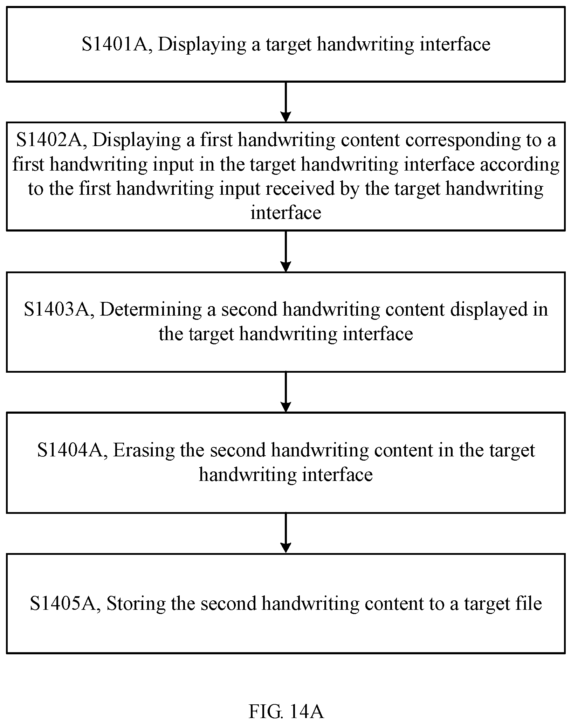

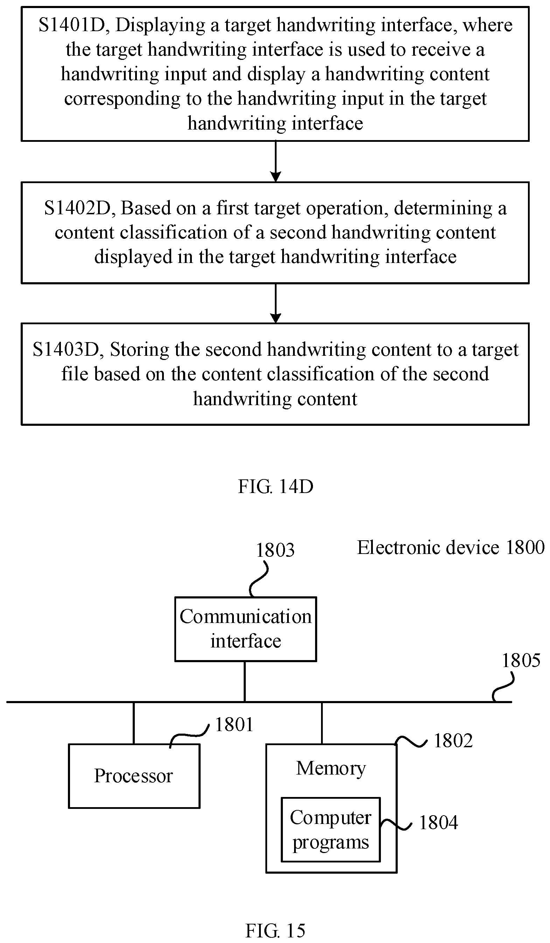

Based on the functions or capabilities provided by the the electronic apparatus in the aforementioned embodiments, FIG. 14A exemplarily illustrates a handwriting content processing method that can be executed by an electronic apparatus. The method may include the following steps.

S1401A, Displaying a target handwriting interface.

S1402A, Displaying a first handwriting content corresponding to a first handwriting input in the target handwriting interface according to the first handwriting input received by the target handwriting interface.

S1403A, Determining a second handwriting content displayed in the target handwriting interface.

S1404A, Erasing the second handwriting content in the target handwriting interface.

S1405A, Storing the second handwriting content to a target file.

In the embodiments of the present application, the process of determining the second handwriting content displayed in the target handwriting interface by the electronic apparatus can adopt, but is not limited to, all or part of the operations in at least one of the designs A1 to A5 mentioned above.

In the embodiments of the present application, the process of clearing the second handwriting content of the electronic apparatus may adopt, but is not limited to, all or part of the operations in at least one of the aforementioned designs B1 and B2.

In the embodiments of the present application, the process of storing the second handwriting content to the target file by the electronic apparatus may adopt, but is not limited to, all or part of the operations in at least one of the designs C1 to C3 mentioned above.

The specific contents of designs A1 to A5, B1, B2, and C1 to C3 mentioned above can be found in the relevant introductions in the aforementione embodiments, and will not be repeated here.

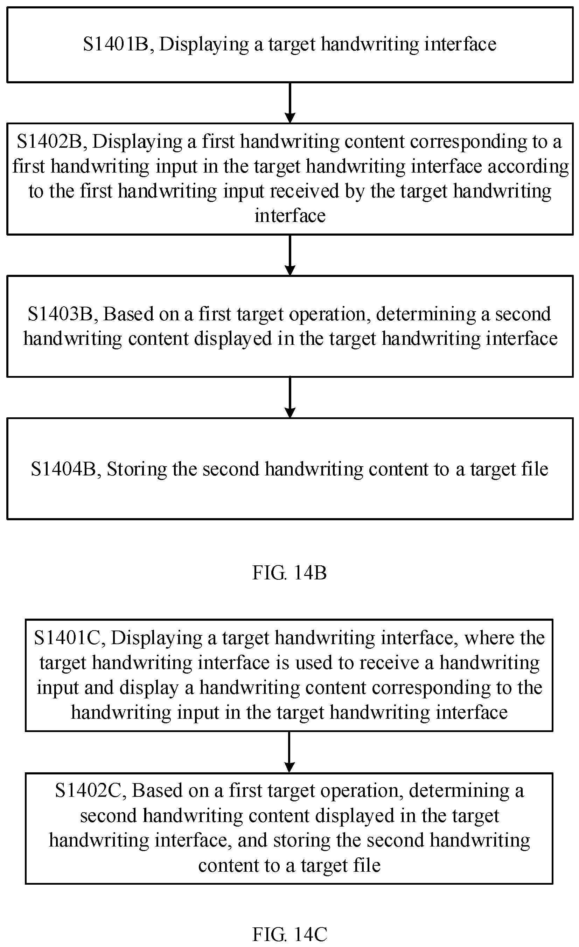

Based on the functions or capabilities provided by the the electronic apparatus in the aforementioned embodiments, FIG. 14B exemplarily illustrates a handwriting content processing method that can be executed by an electronic apparatus. The method may include the following steps.

S1401B, Displaying a target handwriting interface.

S1402B, Displaying a first handwriting content corresponding to a first handwriting input in the target handwriting interface according to the first handwriting input received by the target handwriting interface.

S1403B, Based on a first target operation, determining a second handwriting content displayed in the target handwriting interface.

S1404B, Storing the second handwriting content to a target file.

In the embodiments of the present application, the process of determining the second handwriting content displayed in the target handwriting interface by the electronic apparatus can adopt, but is not limited to, all or part of the operations in at least one of the designs A1 to A5 mentioned above.

In the embodiments of the present application, the process of storing the second handwriting content to the target file by the electronic apparatus may adopt, but is not limited to, all or part of the operations in at least one of the designs C1 to C3 mentioned above.

The specific contents of designs A1 to A5 and designs C1 to C3 mentioned above can be found in the relevant introductions in the aforementione embodiments, and will not be repeated here.

Based on the functions or capabilities provided by the the electronic apparatus in the aforementioned embodiments, FIG. 14C exemplarily illustrates a handwriting content processing method that can be executed by an electronic apparatus. The method may include the following steps.

S1401C, Displaying a target handwriting interface, where the target handwriting interface is used to receive a handwriting input and display a handwriting content corresponding to the handwriting input in the target handwriting interface.

S1402C, Based on a first target operation, determining a second handwriting content displayed in the target handwriting interface, and storing the second handwriting content to a target file.

In the embodiments of the present application, the process of determining the second handwriting content displayed in the target handwriting interface by the electronic apparatus can adopt, but is not limited to, all or part of the operations in at least one of the designs A1 to A5 mentioned above.

In the embodiments of the present application, the process of storing the second handwriting content to the target file by the electronic apparatus may adopt, but is not limited to, all or part of the operations in at least one of the designs C1 to C3 mentioned above.

The specific contents of designs A1 to A5 and designs C1 to C3 mentioned above can be found in the relevant introductions in the aforementione embodiments, and will not be repeated here.

Based on the functions or capabilities provided by the the electronic apparatus in the aforementioned embodiments, FIG. 11D exemplarily illustrates a handwriting content processing method that can be executed by an electronic apparatus. The method may include the following steps.

S1401D, Displaying a target handwriting interface, where the target handwriting interface is used to receive a handwriting input and display a handwriting content corresponding to the handwriting input in the target handwriting interface.

S1402D, Based on a first target operation, determining a content classification of a second handwriting content displayed in the target handwriting interface.

In the embodiments of the present application, the process of determining the second handwriting content displayed in the target handwriting interface by the electronic apparatus can adopt, but is not limited to, the operations in the aforementioned designs A1 to A5.

S1403D, Storing the second handwriting content to a target file based on the content classification of the second handwriting content.

In the embodiments of the present application, the process of determining the content classification of the second handwriting content by the electronic apparatus may adopt, but is not limited to, some or all of the operations of determining the content classification corresponding to the second handwriting content in the aforementioned design C3.

The implementation process of each step in the electronic apparatus executing the embodiments of the present application can refer to the relevant introduction in the aforementioned embodiments, which will not be repeated here.

Based on the same inventive concept, embodiments of the present application provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   determining a second handwriting content displayed in the target handwriting interface according to a first target operation;
   erasing the second handwriting content and retaining at least a part of the first handwriting content in the target handwriting interface;
   storing the second handwriting content to a target file.

In one possible design, the first target operation includes any one of the following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation;
an operation of sending an indication signal to the electronic apparatus.

In one possible design, the controller is specifically configured to execute:
determining a handwriting content corresponding to a second handwriting input received by the target handwriting interface during a first target period as the second handwriting content, where a starting time of the first target period is a time when the first target operation is detected; or
based on a detected second target operation, determining a handwriting content corresponding to a second handwriting input received by the target handwriting interface during a second target period as the second handwriting content, where a starting time of the second target period is a time when the first target operation is detected, and an ending time of the second target period is a time when the second target operation is detected.

In one possible design, the controller is specifically configured to execute:
based on a detected third target operation, determining a selection range corresponding to the third target operation, and determining a content in the selection range as the second handwriting content; or,
based on an input time corresponding to each handwriting content displayed in the target handwriting interface, determining the second handwriting content, where the second handwriting content is a handwriting content with the latest input time among all handwriting contents; or,
based on an input time and a location corresponding to each handwriting content displayed in the target handwriting interface, determining the second handwriting content displayed in the target handwriting interface.

In one possible design, the controller is specifically configured to execute:
based on the input time corresponding to each handwriting content displayed in the target handwriting interface, performing a line break processing on the handwriting content in the target handwriting interface, and determining a handwriting content in a target line as the second handwriting content, where the target line includes the handwriting content with the latest input time among all handwriting contents; or,
determining blocks where each handwriting content displayed in the target handwriting interface is located, and determining the handwriting content in a target block as the second handwriting content, where the target block includes the handwriting content with the latest input time among all handwriting contents.

In one possible design, the controller is further configured to execute:
after determining the second handwriting content displayed in the target handwriting interface, generating reminder information for reminding a user whether the second handwriting content needs to be adjusted; or, generating content confirmation information for informing a user to confirm whether the second handwriting content is correct.

In one possible design, the controller is specifically configured to execute:
displaying the second handwriting content in the target handwriting interface using the following method:
adding a target layer and displaying the target layer, where the target layer is used for displaying the second handwriting content or a recognition result of the second handwriting content.

In one possible design, the controller is further configured to execute:
before adding the target layer, creating a first layer, where the first layer is used for displaying the first handwriting content, and the first layer is a layer different from the target layer.

In one possible design, the controller is specifically configured to execute:
in response to the first target operation, adding the target layer.

In one possible design, the controller is specifically configured to execute:
removing the target layer.

In one possible design, the erasing the second handwriting content in the target handwriting interface, includes:
clearing data of the second handwriting content from a screen reporting points data file, where the screen reporting points data file is used for displaying a handwriting content in the target handwriting interface.

In one possible design, the storing the second handwriting content to the target file includes:
storing content data corresponding to the second handwriting content to the target file.

Optionally, the content data includes images of the second handwriting content, or the content data includes reporting points data corresponding to the second handwriting content, or the content data includes recognition results corresponding to the second handwriting content.

In one possible design, the controller is further configured to execute:
storing at least a part of the first handwriting content in a first file, where the first file is a file different from the target file.

In one possible design, the controller is specifically configured to execute:
determining a target content classification of the second handwriting content;
determining a target file corresponding to the target content classification based on a correspondence between content classifications and files;
storing the content data corresponding to the second handwriting content to the target file.

In one possible design, the controller is specifically configured to execute:
obtaining a recognition result of the second handwriting content, and determining the target content classification based on the recognition result of the second handwriting content; and/or,
based on the first target operation being an operation for a target virtual key among a plurality of virtual keys displayed in the electronic apparatus, determining a content classification corresponding to the target virtual key as the target content classification according to a preset correspondence between multiple content classifications and virtual keys.

In one possible design, the controller is specifically configured to execute:
based on a correspondence between content classification information and content classification, determining a content classification corresponding to target content classification information in the recognition result of the second handwriting content as the target content classification;
where the content classification information includes at least one of the following information: a classification field or a graphic.

In one possible design, in the correspondence between content classification information and content classification, any content classification information is user-customized or system-default configured.

In one possible design, the controller is specifically configured to execute:
based on a detected fourth target operation, determining a third handwriting content corresponding to the fourth target operation, where the fourth target operation is associated with the first target operation;
based on the recognition result of the third handwriting content, determining the target content classification corresponding to the second handwriting content.

In one possible design, any content classification is configured by the user.

In one possible design, the controller is specifically configured to execute:
while erasing the second handwriting content in the target handwriting interface, storing the second handwriting content to the target file.

Based on the same inventive concept, embodiments of the present application provides an electronic apparatus, including:
a memory, configured for storing program instructions;
a controller, configured to call the program instructions stored in the memory to execute:
   displaying a lock screen interface of the electronic apparatus;
   based on a third handwriting input received by the lock screen interface, displaying a fourth handwriting content corresponding to the third handwriting input in the lock screen interface;
   when a preset processing condition is met, clearing the fourth handwriting content from the lock screen interface and storing the fourth handwriting content to a target file.

In one possible design, the controller is specifically configured to execute:
in response to a fifth target operation, displaying the fourth handwriting content corresponding to the third handwriting input in the lock screen interface according to the third handwriting input received by the lock screen interface;
where the fifth target operation includes any one of the following:
   a preset operation for a physical structure of the electronic apparatus;
   a preset operation for at least one virtual key displayed on the electronic apparatus;
   a preset operation for a touch display device of the electronic apparatus;
   a preset voice control operation;
   a preset gesture control operation;
   an operation of sending an indication signal to the electronic apparatus.

In one possible design, the controller is specifically configured to execute:
displaying the second handwriting content in the lock screen interface by:
adding a target layer and displaying the target layer, where the target layer is used for displaying the fourth handwriting content or display a recognition result of the fourth handwriting content.

In one possible design, the controller is specifically configured to execute:
before adding the target layer, creating a second layer, where the second layer is used for displaying a preset content of the lock screen interface, and the first layer is a layer different from the target layer.

In one possible design, the controller is specifically configured to execute:
adding the target layer in response to the fifth target operation.

In one possible design, the controller is specifically configured to execute:
removing the target layer.

In one possible design, the controller is specifically configured to execute:
clearing data of the fourth handwriting content from a screen reporting points data file, where the screen reporting points data file is used for displaying a handwriting content in the target handwriting interface.

In one possible design, the controller is specifically configured to execute:
when a preset storage condition is met, storing the fourth handwriting content to the target file.

In one possible design, the controller is specifically configured to execute:
storing content data corresponding to the fourth handwriting content to the target file.

Optionally, the content data includes images of the fourth handwriting content, or the content data includes reporting points data corresponding to the fourth handwriting content, or the content data includes recognition results corresponding to the fourth handwriting content.

In one possible design, the controller is specifically configured to execute:
determining a target content classification of the fourth handwriting content;
determining a target file corresponding to the target content classification based on a correspondence between content classifications and files;
storing the fourth handwriting content to the target file.

In one possible design, the controller is specifically configured to execute:
obtaining a recognition result of the fourth handwriting content, and determining the target content classification based on the recognition result of the fourth handwriting content; or,
based on the first target operation being an operation for a target virtual key among a plurality of virtual keys displayed on the electronic apparatus, determining a content classification corresponding to the target virtual key as the target content classification according to a preset correspondence between multiple content classifications and virtual keys.

In one possible design, the controller is specifically configured to execute:
based on a correspondence between content classification information and content classifications, determining a content classification corresponding to target content classification information in the recognition result of the fourth handwriting content as the target content classification;
where the content classification information includes at least one of the following information: a classification field or a graphic.

In one possible design, in the correspondence between the content classification information and the content classifications, any content classification information is user-customized or system-default configured.

In one possible design, the controller is specifically configured to execute:
based on a detected sixth target operation, determining a fifth handwriting content corresponding to the sixth target operation, where the sixth target operation is associated with the fifth target operation;
based on a recognition result of the fifth handwriting content, determining the target content classification corresponding to the fourth handwriting content.

In one possible design, any content classification is customized by a user.

In one possible design, the storing the fourth handwriting content to the target file, includes:
while clearing the fourth handwriting content from the lock screen interface, storing the fourth handwriting content to the target file.

Based on the same inventive concept, embodiments of the present application further provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   based on a preset target operation, collecting audio and storing the collected audio.

Based on the same inventive concept, embodiments of the present application further provides an electronic apparatus, including:
a memory, configured for storing program instructions;
a controller, configured to call the program instructions stored in the memory to execute:
   displaying a target handwriting interface;
   displaying a first handwriting content corresponding to a first handwriting input in the target handwriting interface according to the first handwriting input received by the target handwriting interface;
   determining a second handwriting content displayed in the target handwriting interface;
   erasing the second handwriting content in the target handwriting interface and retaining at least a part of the first handwriting content;
   storing the second handwriting content to a target file.

Based on the same inventive concept, embodiments of the present application further provides an electronic apparatus, including:
a memory, configured for storing program instructions;
a controller, configured to call the program instructions stored in the memory to execute:
   displaying a target handwriting interface, where the target handwriting interface is configured for receiving a handwriting input and displaying a handwriting content corresponding to the handwriting input in the target handwriting interface;
   based on a first target operation, determining a second handwriting content displayed in the target handwriting interface, and storing the second handwriting content to a target file.

Based on the same inventive concept, embodiments of the present application further provides an electronic apparatus, including:
a memory, configured for storing program instructions;
a controller, configured to call the program instructions stored in the memory to execute:
   displaying a target handwriting interface, where the target handwriting interface is configured for receiving a handwriting input and displaying a handwriting content corresponding to the handwriting input in the target handwriting interface;
   based on a first target operation, determining a content classification of a second handwriting content displayed in the target handwriting interface;
   storing the second handwriting content to a target file according to the content classification of the second handwriting content.

On the other hand, embodiments of the present application further provide an electronic apparatus that can perform the steps or operations of the handwriting content processing method provided in any of the aforementioned embodiments, or perform the functions or operations of the electronic apparatus in any of the aforementioned embodiments.

Based on the same concept, FIG. 15 is a schematic diagram of a structure of the electronic apparatus 1800 provided in the embodiments of the present application. The electronic apparatus 1800 can be the first device or the second device mentioned earlier. As shown in FIG. 15, the electronic apparatus 1800 can include one or more processors 1801; one or more storage devices 1802; a communication interface 1803, as well as one or more computer programs 1804. These components can be connected through one or more communication buses 1805. The one or more computer programs 1804 are stored in the aforementioned memory 1802 and configured to be executed by the one or more processors 1801, and the one or more computer programs 1804 include instructions. For example, the above instructions can be used to execute the relevant steps of the master device as in the corresponding embodiments above. The communication interface 1803 is used to enable communication between the master device and other devices (such as the target device), for example, the communication interface can be a transceiver.

In the above embodiments provided by the present application, the method provided by the embodiments of the present application is introduced from the perspective of the electronic apparatus as an executing subject. In order to achieve various functions provided in the embodiments of the present application, the electronic apparatus can include hardware structures and/or software modules, which can be implemented in the form of hardware structures, software modules, or a combination of hardware structures and software modules. Whether one of the above functions is executed through hardware structure, software module, or a combination of hardware structures and software modules depends on the specific application and design constraints of technical solutions.

In addition, the embodiments of the present application provide a computer-readable storage medium for storing computer programs. The computer programs are run on a computer to causes the computer to perform any of the steps in a projection display method described above, such as executing the projection display method executed by the first device and/or executing the projection display method executed by the second device.

As used in the above embodiments, depending on the context, the terms "when" or "after" can be interpreted as meaning "if", or "after", or "in response to determining...", or "in response to detecting...". Similarly, depending on the context, phrases such as "when determining that..." or "if detecting that (the conditions or events stated)" can be interpreted as meaning "if determining..." or "in response to determining" or "when...being detected (the conditions or event stated)" or "in response to ... being detected (the conditions or event stated)". In addition, in the above embodiments, relationship terms such as first and second are used to distinguish one entity from another, without limiting any actual relationships and order between these entities.

The reference to "one embodiment" or "some embodiments" described in this specification means that specific features, structures, or characteristics described in conjunction with that embodiments are included in one or more embodiments of the present application. Therefore, the statements such as "in one embodiment", "in some embodiments", "in other embodiments", "in some other embodiments", etc., that appear differently in this specification do not necessarily refer to the same embodiments, but rather imply "one or more but not all embodiments", unless otherwise specifically emphasized. The terms "include", "contain", "comprise", and their variations all mean "include but not limited to", unless otherwise specifically emphasized.

In the above embodiments, it can be fully or partially implemented through software, hardware, firmware, or any combination thereof. When implemented using software, it can be fully or partially implemented in the form of a computer program product.

Embodiments of the present application further provide a computer program product. The computer program product includes one or more computer instructions. When loading and executing the computer program instructions on a computer, all or part of the process or function described in the embodiments of the present application is generated. The computer can be a general-purpose computer, a specialized computer, a computer network, or other programmable device. The computer instructions can be stored in computer-readable storage media or transmitted from one computer-readable storage medium to another. For example, the computer instructions can be transmitted from a website site, computer, server, or data center to another website site, computer, server, or data center via wired (such as coaxial cable, fiber optic cable, digital subscriber line (DSL)) or wireless (such as infrared, wireless, microwave, etc.) ways. The computer-readable storage medium can be any available media that a computer can access, or a data storage device such as a server or data center that integrates one or more available media. The available medium can be magnetic media (such as floppy disks, hard drives, magnetic tapes), optical media (such as DVDs), or semiconductor media (such as solid state disks (SSDs)). The solutions of the above embodiments can be combined and used without conflict.

Those skilled in the field should understand that embodiments of the present application can be provided as methods, systems, or computer program products. Therefore, the present application can be implemented in the form of a fully hardware implementation, a fully software implementation, or a combination of software and hardware aspects. Moreover, the present application can take the form of a computer program product implemented on one or more computer usable storage media (including but not limited to disk storage, CD-ROM, optical storage, etc.) containing computer usable program codes.

The present application is described with reference to flowcharts and/or block diagrams of methods, devices (systems), and computer program products according to embodiments of the present application. It should be understood that each process and/or block in the flowchart and/or block diagram, as well as the combination of processes and/or blocks in the flowchart and/or block diagram, can be implemented by computer program instructions. These computer program instructions can be provided to a processor of a general-purpose computer, specialized computer, embedded processor, or other programmable data processing device to generate a machine, such that the instructions executed by the processor of the computer or other programmable data processing device generate a device for implementing the functions specified in one or more processes in the flowchart and/or one or more boxes in the block diagram.

These computer program instructions can also be stored in computer-readable memory that can guide a computer or other programmable data processing device to operate in a specific manner, causing the instructions stored in the computer-readable memory to produce a manufactured product including instruction devices that implement the functions specified in a flowchart or multiple flowcharts and/or a block diagram or multiple boxes.

These computer program instructions can also be loaded onto a computer or other programmable data processing device, enabling a series of operational steps to be executed on the computer or other programmable device to generate computer implemented processing. The instructions executed on the computer or other programmable device provide steps for implementing the functions specified in one or more processes in the flowchart and/or one or more boxes in the block diagram.

Although preferred embodiments of the present application have been described, those skilled in the art can make additional changes and modifications to these embodiments once they have knowledge of the basic inventive concept. Therefore, the attached claims are intended to be interpreted as including preferred embodiments and all changes and modifications falling within the scope of the present application.

Obviously, those skilled in the art can make various modifications and variations to the embodiments of the present application without departing from the spirit and scope of the embodiments. In this way, if these modifications and variations of the embodiments of the present application fall within the scope of the claims and their equivalent technologies, the present application is also intended to include these modifications and variations.

## Claims

1. A handwriting content processing method, applied to an electronic apparatus, and comprising:
displaying a target handwriting interface;
displaying a first handwriting content corresponding to a first handwriting input in the target handwriting interface according to the first handwriting input received by the target handwriting interface;
determining a second handwriting content displayed in the target handwriting interface according to a first target operation;
erasing the second handwriting content and retaining at least a part of the first handwriting content in the target handwriting interface;
storing the second handwriting content to a target file.

2. The method according to claim 1, wherein the first target operation comprises any one of the following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation; or
an operation of sending an indication signal to the electronic apparatus.

3. The method according to claim 1, wherein the determining the second handwriting content displayed in the target handwriting interface according to the first target operation, comprises:
determining a handwriting content corresponding to a second handwriting input received by the target handwriting interface during a first target period as the second handwriting content, wherein a starting time of the first target period is a time when the first target operation is detected; or
based on a detected second target operation, determining a handwriting content corresponding to a second handwriting input received by the target handwriting interface during a second target period as the second handwriting content, wherein a starting time of the second target period is a time when the first target operation is detected, and an ending time of the second target period is a time when the second target operation is detected.

4. The method according to claim 1, wherein the determining the second handwriting content displayed in the target handwriting interface according to the first target operation, comprises:
based on a detected third target operation, determining a selection range corresponding to the third target operation, and determining a content in the selection range as the second handwriting content; or
based on an input time corresponding to each handwriting content displayed in the target handwriting interface, determining the second handwriting content, wherein the second handwriting content is a handwriting content with the latest input time among all handwriting contents; or
based on an input time and a location corresponding to each handwriting content displayed in the target handwriting interface, determining the second handwriting content displayed in the target handwriting interface.

5. The method according to claim 4, wherein the determining the second handwriting content displayed in the target handwriting interface based on the input time and location corresponding to each handwriting content displayed in the target handwriting interface, comprises:
based on the input time corresponding to each handwriting content displayed in the target handwriting interface, performing a line break processing on handwriting contents in the target handwriting interface, and determining a handwriting content in a target line as the second handwriting content, wherein the target line comprises the handwriting content with the latest input time among all handwriting contents; or,
determining blocks where handwriting contents displayed in the target handwriting interface are located, and determining a handwriting content in a target block as the second handwriting content, wherein the target block comprises the handwriting content with the latest input time among all handwriting contents.

6. The method according to claim 1, wherein after determining the second handwriting content displayed in the target handwriting interface, the method further comprises:
generating reminder information for reminding a user whether the second handwriting content needs to be adjusted; or,
generating content confirmation information for informing a user to confirm whether the second handwriting content is correct.

7. The method according to claim 1, wherein the target handwriting interface displays the second handwriting content using a following method:
adding a target layer and displaying the target layer, wherein the target layer is used for displaying the second handwriting content or a recognition result of the second handwriting content.

8. The method according to claim 7, wherein before adding the target layer, the method further comprises:
creating a first layer, wherein the first layer is used for displaying the first handwriting content, and the first layer is a layer different from the target layer.

9. The method according to claim 7, wherein the adding the target layer, comprises:
in response to the first target operation, adding the target layer.

10. The method according to claim 7, wherein the erasing the second handwriting content in the target handwriting interface, comprises:
removing the target layer.

11. The method according to claim 1, wherein the erasing the second handwriting content in the target handwriting interface, comprises:
clearing data of the second handwriting content from a screen reporting points data file, wherein the screen reporting points data file is used for displaying a handwriting content in the target handwriting interface.

12. The method according to claim 1, wherein the storing the second handwriting content to the target file, comprises:
storing content data corresponding to the second handwriting content to the target file.

13. The method according to claim 1, further comprising:
storing at least the part of the first handwriting content in a first file, wherein the first file is a file different from the target file.

14. The method according to claim 12, wherein the storing the content data corresponding to the second handwriting content to the target file, comprises:
determining a target content classification of the second handwriting content;
determining a target file corresponding to the target content classification based on a correspondence between content classifications and files;
storing the content data corresponding to the second handwriting content to the target file.

15. The method according to claim 14, wherein the determining the target content classification of the second handwriting content, comprises:
obtaining a recognition result of the second handwriting content, and determining the target content classification based on the recognition result of the second handwriting content; and/or,
based on the first target operation being an operation for a target virtual key among a plurality of virtual keys displayed on the electronic apparatus, determining a content classification corresponding to the target virtual key as the target content classification according to a preset correspondence between content classifications and virtual keys.

16. The method according to claim 15, wherein the determining the target content classification based on the recognition result, comprises:
based on a correspondence between content classification information and content classification, determining a content classification corresponding to target content classification information in the recognition result of the second handwriting content as the target content classification;
wherein the content classification information comprises at least one of following information: a classification field or a graphic.

17. The method according to claim 16, wherein in the correspondence between content classification information and content classifications, any content classification information is user-customized, or system-default configured.

18. The method according to claim 14, wherein the determining the target content classification of the second handwriting content, comprises:
based on a detected fourth target operation, determining a third handwriting content corresponding to the fourth target operation, wherein the fourth target operation is associated with the first target operation;
based on a recognition result of the third handwriting content, determining the target content classification corresponding to the second handwriting content.

19. The method according to claim 14, wherein any content classification is user-customized.

20. The method according to any one of claims 1 to 19, wherein the storing the second handwriting content to the target file, comprises:
while erasing the second handwriting content in the target handwriting interface, storing the second handwriting content to the target file.

21. A handwriting content processing method, applied to an electronic apparatus, and comprising:
displaying a lock screen interface of the electronic apparatus;
based on a third handwriting input received by the lock screen interface, displaying a fourth handwriting content corresponding to the third handwriting input in the lock screen interface;
when a preset processing condition is met, clearing the fourth handwriting content from the lock screen interface and storing the fourth handwriting content to a target file.

22. The method according to claim 21, wherein the based on the third handwriting input received by the lock screen interface, displaying the fourth handwriting content corresponding to the third handwriting input in the lock screen interface, comprises:
in response to a fifth target operation, displaying the fourth handwriting content corresponding to the third handwriting input in the lock screen interface according to the third handwriting input received by the lock screen interface;
wherein the fifth target operation comprises any one of following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation; or
an operation of sending an indication signal to the electronic apparatus.

23. The method according to claim 22, wherein the second handwriting content is displayed in the lock screen interface by using a following method:
adding a target layer and displaying the target layer, wherein the target layer is used for displaying the fourth handwriting content or a recognition result of the fourth handwriting content.

24. The method according to claim 23, wherein before adding the target layer, the method further comprises:
creating a second layer, wherein the second layer is used for displaying a preset content of the lock screen interface, and the first layer is a layer different from the target layer.

25. The method according to claim 23, wherein the adding the target layer, comprises:
adding the target layer in response to the fifth target operation.

26. The method according to claim 23, wherein the clearing the fourth handwriting content from the lock screen interface, comprises:
removing the target layer.

27. The method according to claim 21, wherein the clearing the fourth handwriting content from the lock screen interface, comprises:
clearing data of the fourth handwriting content from a screen reporting points data file, wherein the screen reporting points data file is used for displaying a handwriting content in the target handwriting interface.

28. The method according to claim 21, wherein the storing the fourth handwriting content to the target file, comprises:
when a preset storage condition is met, storing the fourth handwriting content to the target file.

29. The method according to claim 21, wherein the storing the fourth handwriting content to the target file, comprises:
storing content data corresponding to the fourth handwriting content to the target file.

30. The method according to claim 29, wherein the storing the content data corresponding to the fourth handwriting content to the target file, comprises:
determining a target content classification of the fourth handwriting content;
determining a target file corresponding to the target content classification based on a correspondence between content classifications and files;
storing the fourth handwriting content to the target file.

31. The method according to claim 30, wherein the determining the target content classification of the fourth handwriting content, comprises:
obtaining a recognition result of the fourth handwriting content, and determining the target content classification based on the recognition result of the fourth handwriting content; or
based on the fifth target operation being an operation for a target virtual key among a plurality of virtual keys displayed on the electronic apparatus, determining a content classification corresponding to the target virtual key as the target content classification according to a preset correspondence between content classifications and virtual keys.

32. The method according to claim 31, wherein the determining the target content classification based on the recognition result, comprises:
based on a correspondence between content classification information and content classifications, determining a content classification corresponding to target content classification information in the recognition result of the fourth handwriting content as the target content classification;
wherein the content classification information comprises at least one of following information: a classification field or a graphic.

33. The method according to claim 32, wherein in the correspondence between the content classification information and the content classifications, any content classification information is user-customized or system-default configured.

34. The method according to claim 22, wherein the determining the target content classification of the fourth handwriting content, comprises:
based on a detected sixth target operation, determining a fifth handwriting content corresponding to the sixth target operation, wherein the sixth target operation is associated with the fifth target operation;
based on a recognition result of the fifth handwriting content, determining the target content classification corresponding to the fourth handwriting content.

35. The method according to claim 30, wherein any content classification is user-customized.

36. The method according to any one of claims 21 to 35, wherein the storing the fourth handwriting content to the target file, comprises:
while clearing the fourth handwriting content from the lock screen interface, storing the fourth handwriting content to the target file.

37. A handwriting content processing method, comprising:
displaying a target handwriting interface;
displaying a first handwriting content corresponding to a first handwriting input in the target handwriting interface according to the first handwriting input received by the target handwriting interface;
based on a preset target operation, collecting audio and storing the collected audio.

38. A handwriting content processing method, applied to an electronic apparatus, and comprising:
displaying a target handwriting interface;
displaying a first handwriting content corresponding to a first handwriting input in the target handwriting interface according to the first handwriting input received by the target handwriting interface;
determining a second handwriting content displayed in the target handwriting interface;
erasing the second handwriting content and retaining at least a part of the first handwriting content in the target handwriting interface;
storing the second handwriting content to a target file.

39. A handwriting content processing method, applied to an electronic apparatus, and comprising:
displaying a target handwriting interface, wherein the target handwriting interface is configured for receiving a handwriting input and displaying a handwriting content corresponding to the handwriting input in the target handwriting interface;
based on a first target operation, determining a second handwriting content displayed in the target handwriting interface, and storing the second handwriting content to a target file.

40. A handwriting content processing method, applied to an electronic apparatus, and comprising:
displaying a target handwriting interface, wherein the target handwriting interface is configured for receiving a handwriting input and displaying a handwriting content corresponding to the handwriting input in the target handwriting interface;
based on a first target operation, determining a content classification of a second handwriting content displayed in the target handwriting interface;
storing the second handwriting content to a target file according to the content classification of the second handwriting content.

41. An electronic apparatus, comprising:
a memory, configured for storing program instructions;
a controller, configured to call the program instructions stored in the memory to execute:
displaying a target handwriting interface;
displaying a first handwriting content corresponding to a first handwriting input in the target handwriting interface according to the first handwriting input received by the target handwriting interface;
determining a second handwriting content displayed in the target handwriting interface according to a first target operation;
erasing the second handwriting content and retaining at least a part of the first handwriting content in the target handwriting interface;
storing the second handwriting content to a target file.

42. The electronic apparatus according to claim 41, wherein the first target operation comprises any one of the following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation; or
an operation of sending an indication signal to the electronic apparatus.

43. The electronic apparatus according to claim 41, wherein the controller is further configured to execute:
determining a handwriting content corresponding to a second handwriting input received by the target handwriting interface during a first target period as the second handwriting content, wherein a starting time of the first target period is a time when the first target operation is detected; or
based on a detected second target operation, determining a handwriting content corresponding to a second handwriting input received by the target handwriting interface during a second target period as the second handwriting content, wherein a starting time of the second target period is a time when the first target operation is detected, and an ending time of the second target period is a time when the second target operation is detected.

44. The electronic apparatus according to claim 41, wherein the controller is further configured to execute:
based on a detected third target operation, determining a selection range corresponding to the third target operation, and determining a content in the selection range as the second handwriting content; or,
based on an input time corresponding to each handwriting content displayed in the target handwriting interface, determining the second handwriting content, where the second handwriting content is a handwriting content with the latest input time among all handwriting contents; or,
based on an input time and a location corresponding to each handwriting content displayed in the target handwriting interface, determining the second handwriting content displayed in the target handwriting interface.

45. The electronic apparatus according to claim 44, wherein the controller is further configured to execute:
based on the input time corresponding to each handwriting content displayed in the target handwriting interface, performing a line break processing on handwriting contents in the target handwriting interface, and determining a handwriting content in a target line as the second handwriting content, wherein the target line comprises the handwriting content with the latest input time among all handwriting contents; or,
determining blocks where handwriting contents displayed in the target handwriting interface are located, and determining a handwriting content in a target block as the second handwriting content, wherein the target block comprises the handwriting content with the latest input time among all handwriting contents.

46. The electronic apparatus according to claim 41, wherein the controller is further configured to execute:
after determining the second handwriting content displayed in the target handwriting interface:
generating reminder information for reminding a user whether the second handwriting content needs to be adjusted; or,
generating content confirmation information for informing a user to confirm whether the second handwriting content is correct.

47. The electronic apparatus according to claim 41, wherein the controller is further configured to execute:
displaying the second handwriting content in the target handwriting interface using a following method:
adding a target layer and displaying the target layer, wherein the target layer is used for displaying the second handwriting content or a recognition result of the second handwriting content.

48. The electronic apparatus according to claim 47, wherein the controller is further configured to execute:
before adding the target layer, creating a first layer, wherein the first layer is used for displaying the first handwriting content, and the first layer is a layer different from the target layer.

49. The electronic apparatus according to claim 47, wherein the controller is further configured to execute:
in response to the first target operation, adding the target layer.

50. The electronic apparatus according to claim 47, wherein the controller is further configured to execute:
removing the target layer.

51. The electronic apparatus according to claim 47, wherein the erasing the second handwriting content in the target handwriting interface, comprises:
clearing data of the second handwriting content from a screen reporting points data file, where the screen reporting points data file is used for displaying a handwriting content in the target handwriting interface.

52. The electronic apparatus according to claim 41, wherein the storing the second handwriting content to the target file, comprises:
storing content data corresponding to the second handwriting content to the target file.

53. The electronic apparatus according to claim 41, wherein the controller is further configured to execute:
storing the at least the part of the first handwriting content in a first file, where the first file is a file different from the target file.

54. The electronic apparatus according to claim 52, wherein the controller is further configured to execute:
determining a target content classification of the second handwriting content;
determining a target file corresponding to the target content classification based on a correspondence between content classifications and files;
storing the content data corresponding to the second handwriting content to the target file.

55. The electronic apparatus according to claim 54, wherein the controller is further configured to execute:
obtaining a recognition result of the second handwriting content, and determining the target content classification based on the recognition result of the second handwriting content; and/or,
based on the first target operation being an operation for a target virtual key among a plurality of virtual keys displayed in the electronic apparatus, determining a content classification corresponding to the target virtual key as the target content classification according to a preset correspondence between content classifications and virtual keys.

56. The electronic apparatus according to claim 55, wherein the controller is further configured to execute:
based on a correspondence between content classification information and content classification, determining a content classification corresponding to target content classification information in the recognition result of the second handwriting content as the target content classification;
wherein the content classification information comprises at least one of following information: a classification field or a graphic.

57. The electronic apparatus according to claim 56, wherein in the correspondence between content classification information and content classification, any content classification information is user-customized or system-default configured.

58. The electronic apparatus according to claim 54, wherein the controller is further configured to execute:
based on a detected fourth target operation, determining a third handwriting content corresponding to the fourth target operation, wherein the fourth target operation is associated with the first target operation;
based on a recognition result of the third handwriting content, determining the target content classification corresponding to the second handwriting content.

59. The electronic apparatus according to claim 54, wherein any content classification is user-customized.

60. The electronic apparatus according to any one of claims 41 to 59, wherein the controller is further configured to execute:
while erasing the second handwriting content in the target handwriting interface, storing the second handwriting content to the target file.

61. An electronic apparatus, comprising:
a memory, configured for storing program instructions;
a controller, configured to call the program instructions stored in the memory to execute:
displaying a lock screen interface of the electronic apparatus;
based on a third handwriting input received by the lock screen interface, displaying a fourth handwriting content corresponding to the third handwriting input in the lock screen interface;
when a preset processing condition is met, clearing the fourth handwriting content from the lock screen interface and storing the fourth handwriting content to a target file.

62. The electronic apparatus according to claim 61, wherein the controller is further configured to execute:
in response to a fifth target operation, displaying the fourth handwriting content corresponding to the third handwriting input in the lock screen interface according to the third handwriting input received by the lock screen interface;
wherein the fifth target operation comprises any one of following:
a preset operation for a physical structure of the electronic apparatus;
a preset operation for at least one virtual key displayed on the electronic apparatus;
a preset operation for a touch display device of the electronic apparatus;
a preset voice control operation;
a preset gesture control operation; or
an operation of sending an indication signal to the electronic apparatus.

63. The electronic apparatus according to claim 62, wherein the controller is further configured to execute:
displaying the second handwriting content in the lock screen interface using a following method:
adding a target layer and displaying the target layer, wherein the target layer is used for displaying the fourth handwriting content or a recognition result of the fourth handwriting content.

64. The electronic apparatus according to claim 63, wherein the controller is further configured to execute:
before adding the target layer, creating a second layer, wherein the second layer is used for displaying a preset content of the lock screen interface, and the first layer is a layer different from the target layer.

65. The electronic apparatus according to claim 63, wherein the controller is further configured to execute:
adding the target layer in response to the fifth target operation.

66. The electronic apparatus according to claim 63, wherein the controller is further configured to execute:
removing the target layer.

67. The electronic apparatus according to claim 61, wherein the controller is further configured to execute:
clearing data of the fourth handwriting content from a screen reporting points data file, wherein the screen reporting points data file is used for displaying a handwriting content in the target handwriting interface.

68. The electronic apparatus according to claim 61, wherein the controller is further configured to execute:
when a preset storage condition is met, storing the fourth handwriting content to the target file.

69. The electronic apparatus according to claim 61, wherein the controller is further configured to execute:
storing content data corresponding to the fourth handwriting content to the target file.

70. The electronic apparatus according to claim 69, wherein the controller is further configured to execute:
determining a target content classification of the fourth handwriting content;
determining a target file corresponding to the target content classification based on a correspondence between content classifications and files;
storing the fourth handwriting content to the target file.

71. The electronic apparatus according to claim 70, wherein the controller is further configured to execute:
obtaining a recognition result of the fourth handwriting content, and determining the target content classification based on the recognition result of the fourth handwriting content; or,
based on the fifth target operation being an operation for a target virtual key among a plurality of virtual keys displayed on the electronic apparatus, determining a content classification corresponding to the target virtual key as the target content classification according to a preset correspondence between content classifications and virtual keys.

72. The electronic apparatus according to claim 71, wherein the controller is further configured to execute:
based on a correspondence between content classification information and content classifications, determining a content classification corresponding to target content classification information in the recognition result of the fourth handwriting content as the target content classification;
wherein the content classification information comprises at least one of following information: a classification field or a graphic.

73. The electronic apparatus according to claim 72, wherein in the correspondence between the content classification information and the content classifications, any content classification information is user-customized or system-default configured.

74. The electronic apparatus according to claim 72, wherein the controller is further configured to execute:
based on a detected sixth target operation, determining a fifth handwriting content corresponding to the sixth target operation, wherein the sixth target operation is associated with the fifth target operation;
based on a recognition result of the fifth handwriting content, determining the target content classification corresponding to the fourth handwriting content.

75. The electronic apparatus according to claim 70, wherein any content classification is user-customized.

76. The electronic apparatus according to any one of claims 61 to 75, wherein the storing the fourth handwriting content to the target file, comprises:
while clearing the fourth handwriting content from the lock screen interface, storing the fourth handwriting content to the target file.

77. An electronic apparatus, comprising:
a memory, configured for storing program instructions;
a controller, configured to call the program instructions stored in the memory to execute:
displaying a target handwriting interface;
displaying a first handwriting content corresponding to a first handwriting input in the target handwriting interface according to the first handwriting input received by the target handwriting interface;
based on a preset target operation, collecting audio and storing the collected audio.

78. An electronic apparatus, comprising:
a memory, configured for storing program instructions;
a controller, configured to call the program instructions stored in the memory to execute:
displaying a target handwriting interface;
displaying a first handwriting content corresponding to a first handwriting input in the target handwriting interface according to the first handwriting input received by the target handwriting interface;
determining a second handwriting content displayed in the target handwriting interface;
erasing the second handwriting content and retaining at least a part of the first handwriting content in the target handwriting interface;
storing the second handwriting content to a target file.

79. An electronic apparatus, comprising:
a memory, configured for storing program instructions;
a controller, configured to call the program instructions stored in the memory to execute:
displaying a target handwriting interface, wherein the target handwriting interface is configured for receiving a handwriting input and displaying a handwriting content corresponding to the handwriting input in the target handwriting interface;
based on a first target operation, determining a second handwriting content displayed in the target handwriting interface, and storing the second handwriting content to a target file.

80. An electronic apparatus, comprising:
a memory, configured for storing program instructions;
a controller, configured to call the program instructions stored in the memory to execute:
displaying a target handwriting interface, wherein the target handwriting interface is configured for receiving a handwriting input and displaying a handwriting content corresponding to the handwriting input in the target handwriting interface;
based on a first target operation, determining a content classification of a second handwriting content displayed in the target handwriting interface;
storing the second handwriting content to a target file according to the content classification of the second handwriting content.

81. A computer readable storage medium, storing computer instructions, wherein the computer instructions are run on an electronic apparatus to cause the electronic apparatus to execute the method of claim 1.

82. A computer readable storage medium, storing computer instructions, wherein the computer instructions are run on an electronic apparatus to cause the electronic apparatus to execute the method of claim 21.

83. A computer readable storage medium, storing computer instructions, wherein the computer instructions are run on an electronic apparatus to cause the electronic apparatus to execute the method of claim 37.

84. A computer readable storage medium, storing computer instructions, wherein the computer instructions are run on an electronic apparatus to cause the electronic apparatus to execute the method of claim 38.

85. A computer readable storage medium, storing computer instructions, wherein the computer instructions are run on an electronic apparatus to cause the electronic apparatus to execute the method of claim 39.

86. A computer readable storage medium, storing computer instructions, wherein the computer instructions are run on an electronic apparatus to cause the electronic apparatus to execute the method of claim 40.
